# EUROPÄISCHE PATENTANMELDUNG

(11) **EP 3 364 052 A1**
(43) Veröffentlichungstag der Anmeldung: **22.08.2018**
(21) Anmeldenummer: 17204774.8
(22) Anmeldetag: 26.01.2015
(51) Int. Cl.: F16B 12/20, F16B 12/24, F16B 12/26

(54) **VERBINDUNGSMITTEL UND VERFAHREN ZUM VERBINDEN ZWEIER BAUTEILE**

(30) Priorität: 30.01.2014 DE 102014101158
(62) Teilanmeldung aus: 15702694.9
(71) Anmelder: Baur, Franz, 87534 Oberstaufen (DE); Haser, Franz, 87534 Oberstaufen (DE); Lamello AG, 4416 Bubendorf (CH)
(72) Erfinder: Baur, Franz, 87534 Oberstaufen (DE); Haser, Franz, 87534 Oberstaufen (DE); Seiler, Philipp, 4424 Arboldswil (CH); Jeker, Patrick, 4225 Brislach (CH); Hänni, Samuel, 4852 Rothrist (CH)
(74) Vertreter: Hoeger, Stellrecht & Partner Patentanwälte mbB

(57) **Zusammenfassung**

Um ein einfach herzustellendes und wirkungsvolles Verbindungsmittel bereitzustellen, wird vorgeschlagen, dass das Verbindungsmittel ein oder mehrere Verbindungselemente umfasst, welche in einem Verbindungszustand und/oder Verankerungszustand an mindestens einem der Bauteile angeordnet sind, wobei das Verbindungsmittel eine Positioniervorrichtung zur Positionierung zweier Bauteile relativ zueinander umfasst, wobei die Positioniervorrichtung mindestens ein federnd gelagertes Positionierelement umfasst.

## Beschreibung

Die vorliegende Erfindung betrifft ein Verbindungsmittel zum Verbinden zweier Bauteile, insbesondere zum Verbinden von Möbel- oder Maschinenteilen.

Derartige Verbindungsmittel sind beispielsweise aus der EP 1 990 549 A1 bekannt.

Der vorliegenden Erfindung liegt die Aufgabe zugrunde, ein Verbindungsmittel bereitzustellen, mittels welchem zwei Bauteile einfach und stabil miteinander verbindbar sind.

Diese Aufgabe wird erfindungsgemäß durch ein Verbindungsmittel zum Verbinden zweier Bauteile, insbesondere zum Verbinden von Möbel- oder Maschinenteilen, und/oder zum Verankern eines Objekts an einem Bauteil gelöst, wobei das Verbindungsmittel ein oder mehrere Verbindungselemente umfasst, die in einem Verbindungszustand und/oder Verankerungszustand an mindestens einem der Bauteile angeordnet sind, wobei mindestens ein Verbindungselement einen oder mehrere nicht-selbstschneidende Haltevorsprünge umfasst, welche jeweils eine gekrümmte Abstützfläche aufweisen, die in einem Längsschnitt kreisbogenförmig ist, wobei der eine oder die mehreren Haltevorsprünge in eine an einem der Bauteile vorgesehene Nut mit einer gekrümmten Hinterschneidungsfläche, die in einem Längsschnitt kreisbogenförmig ist, einführbar sind, wobei die Nut einen Basisabschnitt und einen oder mehrere sich in einer Dickenrichtung von dem Basisabschnitt weg erstreckende Hinterschneidungsabschnitte umfasst und wobei der eine oder die mehreren Haltevorsprünge im Verbindungszustand und/oder Verankerungszustand in den einen oder die mehreren Hinterschneidungsabschnitte der Nut eingreifen.

Unter einer Verbindung zweier Bauteile ist in dieser Beschreibung und den beigefügten Ansprüchen vorzugsweise jede Art von fixierender oder beweglicher Festlegung der Bauteile relativ zueinander zu verstehen, einschließlich der ortsfesten Fixierung der Bauteile relativ zueinander und einschließlich der Verbindung der Bauteile miteinander zur Ermöglichung einer vorgegebenen Relativbewegung der Bauteile relativ zueinander.

Unter einer Verankerung und/oder einem Verankerungszustand ist in dieser Beschreibung und den beigefügten Ansprüchen vorzugsweise eine Festlegung eines Verbindungselements an einem Bauteil zu verstehen, wobei das Verbindungselement ein Objekt und/oder eine Aufnahme für ein Objekt umfasst. Mittels des Verbindungselements ist somit das Objekt an dem Bauteil festlegbar, insbesondere verankerbar.

Zur Verankerung eines Objekts an einem Bauteil kann somit vorgesehen sein, dass das Verbindungsmittel lediglich ein einziges Verbindungselement umfasst, welches beispielsweise an nur einem Bauteil festlegbar ist, um ein separates Objekt an dem Bauteil festlegen, insbesondere verankern, zu können.

Das Objekt kann beispielsweise ein Kleidungsstück sein. Eine Aufnahme für das Objekt, welche vorzugsweise an einem Verbindungselement angeordnet und/oder ausgebildet ist, ist dann beispielsweise als ein Kleiderhaken ausgebildet.

Alternativ oder ergänzend hierzu kann vorgesehen sein, dass ein Objekt ein Beleuchtungskörper, insbesondere ein Leuchtmittel, ist. Ein solcher Beleuchtungskörper kann dann insbesondere in ein Verbindungselement integriert oder an demselben anordenbar sein.

Ferner kann vorgesehen sein, dass ein Objekt zusätzliche Funktionen, insbesondere von einer reinen Verbindungsfunktion unabhängige Funktionen, umfasst und mittels mindestens eines Verbindungselements an einem Bauteil festlegbar, insbesondere verankerbar, ist.

Unter einem Verbindungszustand oder einem verbundenen Zustand ist in dieser Beschreibung und den beigefügten Ansprüchen vorzugsweise ein Zustand des Verbindungsmittels zu verstehen, in welchem ein oder mehrere Verbindungselemente an einem oder mehreren Bauteilen festgelegt und/oder miteinander verbunden sind.

Bei der Verwendung von nur einem Verbindungselement ist ein verbundener Zustand vorzugsweise der Zustand, in welchem das Verbindungselement an einem Bauteil festgelegt, insbesondere verankert, ist.

Bei einer Verbindung zweier Bauteile miteinander ist ein verbundener Zustand vorzugsweise der Zustand, in welchem die Bauteile mittels des Verbindungsmittels fest miteinander verbunden oder zur Relativbewegung derselben bewegbar aneinander angeordnet sind.

Bei einer Ausgestaltung der Erfindung kann vorgesehen sein, dass ein oder mehrere Verbindungselemente ein oder mehrere Schraubelemente umfassen oder als ein oder mehrere Schraubelemente ausgebildet sind.

Beispielsweise kann vorgesehen sein, dass ein oder mehrere Schraubelemente in ein Bauteil oder in beide Bauteile einschraubbar sind.

Alternativ oder ergänzend hierzu kann vorgesehen sein, dass ein oder mehrere Schraubelemente in ein oder mehrere Verbindungselemente, welche in oder an einem oder mehreren der Bauteile angeordnet sind, einschraubbar sind.

Es kann vorgesehen sein, dass ein oder mehrere Schraubelemente und/oder ein oder mehrere Verbindungselemente einen Anschlag, beispielsweise einen Anschlagvorsprung, zum Einschrauben des einen oder der mehreren Schraubelemente bis zu einer vorgegebenen Einschraubtiefe umfassen.

Günstig kann es sein, wenn ein oder mehrere Verbindungselemente ein oder mehrere Haltelemente umfassen, welche abschnittsweise oder vollständig und/oder zeitweise oder permanent innerhalb einer Außenkontur eines Grundkörpers oder Gehäuses des einen oder der mehreren Verbindungselemente angeordnet sind.

Ferner kann vorgesehen sein, dass ein oder mehrere Verbindungselemente ein oder mehrere Halteelemente umfassen, welche Abschnittsweise oder vollständig und/oder zeitweise oder permanent außerhalb einer Außenkontur eines Grundkörpers oder Gehäuses des einen oder der mehreren Verbindungselemente angeordnet sind.

Beispielsweise kann vorgesehen sein, dass ein oder mehrere Halteelemente an einem Grundkörper oder Gehäuse eines oder mehrerer Verbindungselemente angeordnet und/oder gelagert sind.

Vorteilhaft kann es sein, wenn das eine oder die mehreren Halteelemente in keiner Stellung, insbesondere weder in einer Freigabestellung noch in einer Haltestellung, über eine Außenkontur eines Grundkörpers oder Gehäuses eines oder mehrerer Verbindungselemente hinausragen.

Alternativ oder ergänzend hierzu kann vorgesehen sein, dass ein oder mehrere Halteelemente in mindestens einer Stellung, insbesondere in einer Freigabestellung und/oder in einer Haltestellung, über eine Außenkontur eines Grundkörpers oder Gehäuses des einen oder der mehreren Verbindungselemente hinausragen.

Ein oder mehrere Verbindungselemente umfassen vorzugsweise ein oder mehrere bewegliche Halteelemente, insbesondere relativ zu einem Grundkörper oder Gehäuse bewegliche Halteelemente.

Alternativ oder ergänzend hierzu kann vorgesehen sein, dass ein oder mehrere Verbindungselemente ein oder mehrere feststehende Halteelemente umfassen, welche insbesondere relativ zu einem Grundkörper oder Gehäuse unbeweglich sind.

Bei einer Ausgestaltung der Erfindung kann vorgesehen sein, dass ein oder mehrere Verbindungselemente ein oder mehrere Halteelemente umfassen, welche im verbundenen Zustand der Bauteile über eine Kontaktfläche eines Bauteils, welche dem weiteren Bauteil zugewandt angeordnet ist und/oder an welcher das weitere Bauteil anliegt, überstehen.

Günstig kann es sein, wenn ein oder mehrere Verbindungselemente eine Sicherungsvorrichtung umfassen, mittels welcher das Verbindungselement oder die Verbindungselemente gegen ein Verschieben und/oder Verdrehen desselben oder derselben relativ zu einem Bauteil sicherbar sind.

Beispielsweise kann vorgesehen sein, dass ein oder mehrere Verbindungselemente eine Sicherungsvorrichtung umfassen, mittels welcher das Verbindungselement oder die Verbindungselemente gegen ein Verschieben desselben oder derselben in und/oder längs einer Nut mit einer gekrümmten Hinterschneidungsfläche, die in einem Längsschnitt kreisbogenförmig ist, sicherbar sind.

Vorteilhaft kann es sein, wenn die Sicherungsvorrichtung ein oder mehrere Sicherungselemente umfasst, welche zum Sichern eines oder mehrerer Verbindungselemente gegen ein Verschieben und/oder Verdrehen desselben oder derselben an eine Kontaktfläche eines Bauteils, welche dem weiteren Bauteil zugewandt angeordnet ist und/oder an welcher das weitere Bauteil anliegt, anlegbar und/oder angelegt sind.

Insbesondere kann vorgesehen sein, dass die Sicherungsvorrichtung ein oder mehrere Sicherungselemente umfasst, welche zum Sichern eines oder mehrerer Verbindungselemente gegen ein Verschieben und/oder Verdrehen desselben oder derselben auf eine Kontaktfläche eines Bauteils, welche dem weiteren Bauteil zugewandt angeordnet ist und/oder an welcher das weitere Bauteil anliegt, auflegbar sind.

Ferner kann vorgesehen sein, dass die Sicherungsvorrichtung ein oder mehrere Sicherungselemente umfasst, welche zum Sichern eines oder mehrerer Verbindungselemente gegen ein Verschieben und/oder Verdrehen desselben oder derselben zwischen zwei Kontaktflächen der Bauteile, welche dem jeweils anderen Bauteil zugewandt angeordnet sind und/oder an welcher das jeweils andere Bauteil anliegt, einklemmbar sind.

Vorteilhaft kann es sein, wenn die Sicherungsvorrichtung ein oder mehrere bewegliche, elastische, reversibel verformbare und/oder federnd ausgebildete Sicherungselemente umfasst.

Ein oder mehrere Verbindungselemente sind mittels ein oder mehrerer Sicherungselemente vorzugsweise lösbar, insbesondere werkzeuglos lösbar, an mindestens einem Bauteil festlegbar.

Ein oder mehrere Sicherungselemente sind beispielsweise als ein oder mehrere Sicherungsvorsprünge ausgebildet.

Bei einer Ausgestaltung der Erfindung kann vorgesehen sein, dass die Sicherungsvorrichtung mindestens zwei an einander gegenüberliegenden Enden eines Verbindungselements angeordnete Sicherungselemente umfasst.

Die Sicherungselemente sind insbesondere an einander gegenüberliegenden Endbereichen des einen oder der mehreren Haltevorsprünge, welche jeweils eine gekrümmte Abstützfläche aufweisen, die in einem Längsschnitt kreisbogenförmig ist, angeordnet.

Günstig kann es sein, wenn die Sicherungselemente an einander gegenüberliegenden Enden eines Grundkörpers oder Gehäuses eines Verbindungselements angeordnet und/oder ausgebildet sind.

Vorteilhaft kann es sein, wenn das Verbindungselement in eine Nut einschiebbar ist und dabei mindestens ein Sicherungselement automatisch betätigbar, insbesondere in eine Freigabestellung bringbar, ist.

Das mindestens eine Sicherungselement ist hierzu vorzugsweise nachgiebig und/oder federnd betätigbar.

In einer Endstellung des Verbindungselements, insbesondere in einer vollständig in die Nut eingeschobenen Stellung, ist das Verbindungselement mittels des mindestens einen Sicherungselements vorzugsweise in der Nut und/oder an dem Bauteil verrastbar.

Beispielsweise kann vorgesehen sein, dass mindestens ein Sicherungselement in der Endstellung des Verbindungselements ausfedert und hierdurch in eine Haltestellung gebracht wird.

Vorzugsweise sind mittels eines oder mehrerer Halteelemente die Bauteile, insbesondere zwei oder mehr Verbindungselemente, welche an den Bauteilen angeordnet sind, aufeinander zu ziehbar und/oder gegeneinander pressbar.

Die Bauteile können mittels eines oder mehrerer Verbindungselemente vorzugsweise unmittelbar gegeneinander gezogen oder gedrückt werden, so dass die Bauteile unmittelbar aneinander angrenzen und einander berühren.

Alternativ hierzu kann vorgesehen sein, dass die Bauteile mittels eines oder mehrerer Verbindungselemente in einem vorgegebenen Abstand voneinander relativ zueinander festlegbar sind.

Das eine oder die mehreren Verbindungselemente dienen dann vorzugsweise als Abstandshalter.

Bei einer Ausgestaltung der Erfindung kann vorgesehen sein, dass ein oder mehrere Verbindungselemente, insbesondere ein Grundkörper oder Gehäuse eines oder mehrerer Verbindungselemente, eine oder mehrere Durchtrittsöffnungen zur Aufnahme von Befestigungselementen und/oder Sicherungselementen, beispielsweise Schrauben, umfasst.

Eine Durchtrittsöffnung kann beispielsweise eine kreiszylindrische Ausnehmung sein.

Beispielsweise kann vorgesehen sein, dass eine Durchtrittsöffnung im Wesentlichen parallel oder quer, insbesondere im Wesentlichen senkrecht oder schräg, zu einer Verbindungsrichtung, längs welcher die Bauteile mittels des Verbindungsmittels miteinander verbindbar sind, ausgerichtet ist.

Eine Verbindungsrichtung ist insbesondere diejenige Richtung, längs welcher die Bauteile benachbart zueinander angeordnet sind und/oder aneinander angrenzen.

Insbesondere kann vorgesehen sein, dass die Verbindungsrichtung senkrecht zu Kontaktflächen der Bauteile und/oder zu einer Anlagefläche mindestens eines Verbindungselements des Verbindungsmittels ausgerichtet ist.

Vorteilhaft kann es sein, wenn eine oder mehrere Durchtrittsöffnungen eine Vertiefung zur Aufnahme eines Schraubenkopfs aufweisen.

Ein oder mehrere Halteelemente eines oder mehrerer Verbindungselemente sind vorzugsweise durch eine oder mehrere Öffnungen (Zugangsöffnungen) in einem Bauteil oder in beiden Bauteilen hindurch zugänglich und/oder betätigbar.

Insbesondere kann vorgesehen sein, dass ein oder mehrere Halteelemente eines oder mehrerer Verbindungselemente direkt oder indirekt automatisch, mechanisch und/oder manuell betätigbar sind.

Es kann vorgesehen sein, dass eine oder mehrere Öffnungen eine oder mehrere seitliche Öffnungen in einer Wandung, welche insbesondere senkrecht zur Anlagefläche und/oder Kontaktfläche verläuft, sind.

Unter einem Betätigen eines Halteelements ist in dieser Beschreibung und den beigefügten Ansprüchen insbesondere zu verstehen, dass das Halteelement von einer Freigabestellung in eine Haltestellung und/oder von einer Haltestellung in eine Freigabestellung gebracht wird.

Bei einer weiteren Ausführungsform der Erfindung kann vorgesehen sein, dass ein oder mehrere Halteelemente eines oder mehrerer Verbindungselemente durch eine oder mehrere solide Wandungen eines Bauteils oder beider Bauteile hindurch mittels einer Magnetvorrichtung zugänglich und/oder betätigbar sind.

Bei einer bevorzugten Ausgestaltung der Erfindung ist vorgesehen, dass ein erstes Verbindungselement und ein zweites Verbindungselement im verbundenen Zustand der Bauteile lösbar miteinander verbunden sind und zumindest das erste Verbindungselement mindestens ein relativ zu einem Grundkörper oder Gehäuse des ersten Verbindungselements bewegliches oder fixiertes Halteelement umfasst, das in einer Haltestellung so mit dem zweiten Verbindungselement zusammenwirkt, dass eine Relativbewegung des ersten Verbindungselements und des zweiten Verbindungselements längs einer Verbindungsrichtung verhindert wird, und das in einer Freigabestellung eine Relativbewegung des ersten Verbindungselements und des zweiten Verbindungselements längs der Verbindungsrichtung zulässt, wobei vorzugsweise mindestens ein Halteelement durch eine Einwirkung von außerhalb des Verbindungsmittels von der Haltestellung in die Freigabestellung und/oder von der Freigabestellung in die Haltestellung bewegbar ist.

Vorteilhaft kann es sein, wenn die Verbindung der zwei Bauteile, insbesondere die Verbindung von zwei oder mehr Verbindungselementen, durch eine Relativverschiebung der beiden Bauteile als Ganzes, insbesondere der zwei oder mehr Verbindungselemente als Ganzes, hergestellt wird.

Beispielsweise kann vorgesehen sein, dass die Bauteile, insbesondere die zwei oder mehr Verbindungselemente, zunächst aufeinander zu bewegt werden, insbesondere um Einhängeelemente des Verbindungsmittels in Einhängeelementaufnahmen des Verbindungsmittels einzuführen. Diese Bewegung ist insbesondere im Wesentlichen parallel zur Verbindungsrichtung.

Ferner kann vorgesehen sein, dass die Bauteile, insbesondere die Verbindungselemente, im Wesentlichen parallel zu Kontaktflächen der Bauteile und/oder Anlageflächen der Verbindungselemente und/oder im Wesentlichen senkrecht zur Verbindungsrichtung verschoben werden.

Durch geeignete Schrägflächen an den Einhängeelementen und/oder Einhängeelementaufnahmen können die Verbindungselemente und/oder die Bauteile hierdurch vorzugsweise aufeinander zu gezogen und aneinander festgelegt werden.

Beispielsweise mittels eines Sicherungselements, insbesondere eines Sicherungsstifts, können die Einhängeelemente und die Einhängeelementaufnahmen vorzugsweise formschlüssig miteinander verbunden werden, um ein unerwünschtes Lösen des Verbindungsmittels zu vermeiden.

Ferner kann vorgesehen sein, dass die Verbindung der beiden Verbindungselemente nicht durch eine Relativverschiebung der beiden Verbindungselemente als Ganzes hergestellt, sondern stattdessen durch eine Relativbewegung des Halteelements relativ zu einem Grundkörper oder Gehäuse eines der Verbindungselemente von der Freigabestellung in die Haltestellung bewirkt wird.

Günstig kann es sein, dass die Verbindung zwischen den Verbindungselementen durch eine Bewegung des Halteelements relativ zu dem Grundkörper oder Gehäuse des Verbindungselements von der Haltestellung in die Freigabestellung gelöst wird.

Vorteilhaft kann es sein, wenn mindestens ein Verbindungselement zur Verbindung der Bauteile miteinander auf eine Kontaktfläche eines Bauteils aufsetzbar oder aufgesetzt ist, insbesondere an eine Kontaktfläche eines Bauteils angeschraubt ist.

Ein oder mehrere Verbindungselemente umfassen vorzugsweise ein oder mehrere Einsteckvorsprünge und/oder ein oder mehrere Aufnahmetaschen für einen oder mehrere Einsteckvorsprünge.

Insbesondere ein auf eine Kontaktfläche aufsetzbares oder aufgesetztes Verbindungselement umfasst vorzugsweise ein oder mehrere Einsteckvorsprünge und/oder eine oder mehrere Aufnahmetaschen für Einsteckvorsprünge.

Ein Einsteckvorsprung ist beispielsweise ein im Wesentlichen quaderförmiger Dübel, der sich ausgehend von einer Anlagefläche längs der Verbindungsrichtung erstreckt und sich vorzugsweise zu seinem der Anlagefläche abgewandten Ende hin verjüngt. Hierdurch kann vorzugsweise das Einführen in jeweils eine Aufnahmetasche des zweiten Verbindungselements und/oder des weiteren Bauteils erleichtert werden.

Die eine oder die mehreren Aufnahmetaschen sind vorzugsweise im Wesentlichen komplementär zu dem einen oder den mehreren Einsteckvorsprüngen ausgebildet.

Bei einer Ausgestaltung der Erfindung kann vorgesehen sein, dass das Verbindungsmittel zwei oder mehr Verbindungselemente zur Anordnung an und/oder in einem ersten Bauteil und/oder zwei oder mehr Verbindungselemente zur Anordnung an und/oder in einem zweiten Bauteil umfasst, wobei zur Verbindung der Bauteile miteinander mindestens ein Verbindungselement an und/oder in dem ersten Bauteil mit dem zweiten Bauteil, insbesondere mit mindestens einem Verbindungselement an und/oder in dem zweiten Bauteil, in Eingriff bringbar ist. Das Verbindungsmittel umfasst vorzugsweise zwei oder mehr Verbindungselemente, welche an oder in einem der Bauteile anordenbar sind und welche miteinander in Eingriff bringbar sind.

Mittels der Verbindungselemente, welche an oder in einem der Bauteile anordenbar sind, ist vorzugsweise eine Bewegung mindestens eines der Verbindungselemente in oder längs einer Nut blockierbar.

Die zwei oder mehr Verbindungselemente bilden gemeinsam vorzugsweise eine Sicherungsvorrichtung für mindestens ein Verbindungselement.

Günstig kann es sein, wenn die zwei oder mehr Verbindungselemente, welche an oder in einem der Bauteile anordenbar sind, zwei miteinander wechselwirkende Verbindungselemente in einem der Bauteile sind, welche zur Verbindung der Bauteile miteinander mit mindestens einem weiteren Verbindungselement an oder in dem weiteren Bauteil in Eingriff bringbar sind.

Die Verbindungselemente, welche an oder in einem der Bauteile anordenbar sind, sind vorzugsweise aneinander anliegende und/oder einander blockierende Verbindungselemente.

Beispielsweise kann vorgesehen sein, dass die Verbindungselemente jeweils einen oder mehrere Vorsprünge und/oder eine oder mehrere Vertiefungen aufweisen. Mindestens ein Vorsprung und mindestens eine Vertiefung sind vorzugsweise miteinander in Eingriff bringbar, insbesondere um die Verbindungselemente, welche in oder an einem der Bauteile anordenbar sind, miteinander in Eingriff zu bringen, insbesondere um eine Bewegung längs einer Nut zu blockieren.

Es kann vorgesehen sein, dass das Verbindungsmittel zwei oder mehr Verbindungselemente umfasst, welche in einander überlappenden Nuten in einem der Bauteile anordenbar sind.

Insbesondere kann vorgesehen sein, dass das Verbindungsmittel zwei oder mehr Verbindungselemente umfasst, welche in zwei oder mehr einander überlappenden Nuten mit einer gekrümmten Hinterschneidungsfläche, die in einem Längsschnitt kreisbogenförmig ist, anordenbar sind.

Die zwei Nuten bilden vorzugsweise eine im Wesentlichen W-förmige Hinterschneidungsfläche.

Die mindestens zwei Nuten sind vorzugsweise im Wesentlichen identisch ausgebildete Nuten, welche einander überlappen und/oder aneinander angrenzen.

Insbesondere kann vorgesehen sein, dass sich die Kreisbögen der zwei Nuten innerhalb des Bauteils schneiden.

Es kann vorgesehen sein, dass mittels zweier Nuten in einem Bauteil eine Doppelnut gebildet ist.

Insbesondere zwei Verbindungselemente können vorzugsweise als Doppelverbindungselemente in diese Doppelnut eingesetzt werden.

Bei einer Ausgestaltung der Erfindung kann vorgesehen sein, dass das Verbindungsmittel zwei oder mehr im Wesentlichen identisch ausgebildete Verbindungselemente zur Anordnung in einem der Bauteile oder zur Anordnung in beiden Bauteilen und zur Verbindung der Bauteile miteinander umfasst.

Beispielsweise kann vorgesehen sein, dass das Verbindungsmittel zwei oder mehr Verbindungselemente umfasst, welche jeweils mindestens ein Einhängeelement aufweisen.

Alternativ oder ergänzend hierzu kann vorgesehen sein, dass das Verbindungsmittel zwei oder mehr Verbindungselemente umfasst, welche jeweils mindestens eine Einhängeelementaufnahme aufweisen.

Zudem kann vorgesehen sein, dass das Verbindungsmittel zwei oder mehr im Wesentlichen identisch ausgebildete Verbindungselemente umfasst, welche jeweils ein oder mehrere Einhängeelemente und/oder eine oder mehrere Einhängeelementaufnahmen umfassen.

Ein Verbindungselement zur Anordnung an oder in einem ersten Bauteil und ein Verbindungselement zur Anordnung an oder in einem zweiten Bauteil sind vorzugsweise derart mit Durchtrittsöffnungen versehen, dass diese sich in einem verbundenen Zustand der Bauteile, insbesondere in einer Haltestellung der Verbindungselemente, überlappen, insbesondere miteinander fluchten.

Günstig kann es sein, wenn die Durchtrittsöffnungen im verbundenen Zustand der Bauteile zugänglich sind.

Vorzugsweise kann ein Sicherungselement, insbesondere ein Sicherungsstift, in die Durchtrittsöffnungen eingebracht werden, um die Verbindungselemente in der Haltestellung und somit die Bauteile im verbundenen Zustand festzulegen.

Die Durchtrittsöffnungen sind vorzugsweise im verbundenen Zustand der Bauteile durch eine sich quer, insbesondere zumindest näherungsweise senkrecht, zu einer Kontaktfläche der Bauteile erstreckende Seitenwandung hindurch zugänglich.

Insbesondere kann vorgesehen sein, dass hierzu mindestens ein Bauteil eine seitliche Durchtrittsöffnung (Zugangsöffnung) umfasst, durch welche die Durchtrittsöffnungen der Verbindungselemente zugänglich sind.

Das erste Verbindungselement und das zweite Verbindungselement sind im verbundenen Zustand der Bauteile vorzugsweise miteinander verbunden.

Das erste Verbindungselement umfasst vorzugsweise ein Halteelement.

Das zweite Verbindungselement und/oder das zweite Bauteil umfasst vorzugsweise eine Aufnahme für das Halteelement.

Günstig kann es sein, wenn das Halteelement eine erste Haltekontur aufweist, welche in einer Haltestellung eine an dem zweiten Verbindungselement und/oder dem zweiten Bauteil vorgesehene zweite Haltekontur hintergreift.

Das erste Verbindungselement umfasst vorzugsweise eine im Wesentlichen ebene Anlagefläche, die an das zweite Verbindungselement anlegbar ist und/oder die dem zweiten Verbindungselement zugewandt angeordnet ist.

Das zweite Verbindungselement umfasst vorzugsweise eine im Wesentlichen ebene Anlagefläche, welche an das erste Verbindungselement anlegbar ist und/oder welche dem ersten Verbindungselement zugewandt angeordnet ist.

Die im Wesentlichen ebene Anlagefläche des ersten Verbindungselements ist im verbundenen Zustand der Bauteile vorzugsweise im Wesentlichen parallel zu Kontaktflächen der Bauteile, an welchen die Bauteile aneinander anliegen oder welche dem jeweils anderen Bauteil zugewandt angeordnet sind.

Die im Wesentlichen ebene Anlagefläche des zweiten Verbindungselements ist im verbundenen Zustand der Bauteile vorzugsweise im Wesentlichen parallel zu Kontaktflächen der Bauteile, an welchen die Bauteile aneinander anliegen oder welche dem jeweils anderen Bauteil zugewandt angeordnet sind.

Mindestens ein Haltevorsprung weist vorzugsweise einen im Wesentlichen rechteckigen oder einen im Wesentlichen trapezförmigen Querschnitt auf.

Günstig kann es sein, wenn mindestens ein Haltevorsprung sich mit wachsendem Abstand von einem Grundkörper des jeweiligen Verbindungselements verjüngt.

Günstig kann es sein, wenn mindestens ein Haltevorsprung im Wesentlichen flächenbündig an eine gekrümmte Anlagefläche eines Grundkörpers des jeweiligen Verbindungselements angrenzt.

Bei einer Ausgestaltung der Erfindung kann vorgesehen sein, dass das Verbindungsmittel ein Magnetelement umfasst, welches mittels eines von außerhalb des Verbindungsmittels auf das Magnetelement einwirkenden zeitlich veränderlichen Antriebsmagnetfeldes zu einer Drehbewegung und/oder zu einer Linearbewegung innerhalb des Verbindungsmittels antreibbar ist.

Mindestens ein Halteelement ist vorzugsweise mittels des Magnetelements zu einer Drehbewegung und/oder zu einer Linearbewegung relativ zu einem Gehäuse oder Grundkörper eines Verbindungselements antreibbar.

Das Magnetelement ist vorzugsweise innerhalb des Gehäuses oder Grundkörpers des Verbindungselements angeordnet.

Es kann vorgesehen sein, dass das Verbindungsmittel mehrere Magnetelemente umfasst, welche insbesondere in einem Verbindungselement oder in mehreren Verbindungselementen angeordnet sind.

Günstig kann es sein, wenn das Magnetelement periodisch antreibbar ist, so dass mindestens ein Halteelement des Verbindungsmittels wiederholt mittels des Magnetelements betätigbar, insbesondere schrittweise in eine Freigabestellung und/oder in eine Haltestellung bringbar, ist.

Beispielsweise kann vorgesehen sein, dass mittels des Magnetelements ein als Schraubelement ausgebildetes Halteelement antreibbar, insbesondere einschraubbar und/oder herausschraubbar, ist.

Bei einer Ausgestaltung der Erfindung ist vorgesehen, dass das Verbindungsmittel zwei Verbindungselemente umfasst. Ein erstes Verbindungselement umfasst vorzugsweise ein Magnetelement und ein Halteelement, insbesondere eine Schraube.

Ein zweites Verbindungselement umfasst vorzugsweise eine Aufnahme für das Halteelement, insbesondere ein Gewindeelement.

Günstig kann es sein, wenn ein Verbindungselement eine Aufnahme für ein Halteelement des Verbindungsmittels umfasst, wobei die Aufnahme vorzugsweise relativ zu einem Gehäuse oder Grundkörper des Verbindungselements bewegbar, insbesondere verschiebbar gelagert, ist.

Die Aufnahme ist vorzugsweise im Wesentlichen parallel zu den Kontaktflächen der Bauteile verschiebbar angeordnet und/oder gelagert.

Beispielsweise kann vorgesehen sein, dass eine Aufnahme für ein Halteelement als eine Einlegemutter ausgebildet ist oder eine Einlegemutter umfasst.

Ein oder mehrere Verbindungselemente sind vorzugsweise im Wesentlichen vollständig in einer Nut eines Bauteils anordenbar, so dass das Verbindungselement oder die Verbindungselemente nicht über eine Kontaktfläche des Bauteils hinausragen.

Das erste Verbindungselement und das zweite Verbindungselement sind im verbundenen Zustand der Bauteile vorzugsweise kraftschlüssig, formschlüssig und/oder stoffschlüssig miteinander verbunden, beispielsweise verklebt.

Ein Verbindungsmittel zum Verbinden zweier Bauteile, insbesondere zum Verbinden von Möbel- oder Maschinenteilen, kann alternativ oder ergänzend zu den vorstehend genannten Merkmalen beispielsweise mindestens ein Verbindungselement aufweisen, welches ein Halteelement zum Herstellen einer Verbindung zwischen den zwei Bauteilen und eine Speichervorrichtung zum Speichern einer Halteenergie des Halteelements umfasst.

Der Speichervorrichtung ist vorzugsweise vor dem Herstellen einer Verbindung zwischen den zwei Bauteilen Halteenergie zuführbar.

Die zugeführte Halteenergie ist vorzugsweise bis zum Herstellen der Verbindung mittels der Speichervorrichtung speicherbar.

Günstig kann es sein, wenn die Speichervorrichtung beim Herstellen der Verbindung zwischen den zwei Bauteilen und/oder zum Herstellen der Verbindung zwischen den zwei Bauteilen betätigbar ist, so dass das Halteelement unter Nutzung der Halteenergie in eine Haltestellung bringbar ist.

Insbesondere kann vorgesehen sein, dass die Speichervorrichtung mittels eines weiteren Verbindungselements und/oder des weiteren Bauteils betätigbar ist.

Vorteilhaft kann es sein, wenn die Speichervorrichtung eine Arretiervorrichtung zum Arretieren einer Federvorrichtung in einer vorgespannten Stellung umfasst.

Auf diese Weise ist insbesondere eine Federkraft eines als Federelement ausgebildeten Halteelements speicherbar.

Vorteilhaft kann es ferner sein, wenn mindestens ein Federelement mittels eines Arretierelements vorspannbar ist, wobei zum Verbinden der Verbindungselemente das Arretierelement vorzugsweise betätigbar, insbesondere wegbewegbar und/oder in eine Freigabestellung bewegbar, ist.

Günstig kann es sein, wenn die Speichervorrichtung zwei gegeneinander gespannte Federelemente umfasst.

Bei einer bevorzugten Ausgestaltung der Erfindung ist vorgesehen, dass der Speichervorrichtung vor, während und/oder nach dem Einbauen des Verbindungselements in das Bauteil Halteenergie zuführbar ist.

Beispielsweise kann vorgesehen sein, dass eine Federvorrichtung vor dem Einbauen des Verbindungselements in das Bauteil, während des Einbauens des Verbindungselements in das Bauteil und/oder nach dem Einbauen des Verbindungselements in das Bauteil in eine vorgespannte Stellung bringbar und in der vorgespannten Stellung arretierbar ist.

Es kann vorgesehen sein, dass das Verbindungsmittel zwei oder mehr Verbindungselemente umfasst, welche eine Nut-Feder-Vorrichtung, insbesondere eine selbstverrastende, durch Verschwenken betätigbare Nut-Feder-Vorrichtung, bilden.

Günstig kann es sein, wenn das Verbindungsmittel zwei oder mehr Verbindungselemente umfasst, welche eine Nut-Feder-Verbindung bilden, wobei die Verbindungselemente durch eine Drehbewegung und/oder eine Einschiebebewegung, beispielsweise längs der Verbindungsrichtung, miteinander in Eingriff bringbar sind.

Das Verbindungsmittel umfasst vorzugsweise ein oder mehrere Verbindungselemente, welche durch Durchtrittsöffnungen in einem Bauteil von einer dem weiteren Bauteil abgewandten Seite einem weiteren Verbindungselement zuführbar und mit demselben verbindbar, insbesondere verschraubbar, sind.

Vorteilhaft kann es sein, wenn das Verbindungsmittel eine Führungsvorrichtung zur Führung der Bauteile relativ zueinander bildet, wobei ein Verbindungselement eine Führungsnut umfasst und/oder wobei ein Verbindungselement ein Führungselement umfasst.

Vorzugsweise ist das Führungselement zusammen mit dem zugehörigen Bauteil längs der Führungsnut relativ zu dem weiteren Bauteil bewegbar, insbesondere linear verschiebbar.

Die Führungsnut ist vorzugsweise im Wesentlichen linear ausgebildet.

Es kann vorgesehen sein, dass die Führungsnut einen Führungsabschnitt umfasst, an welchem das Führungselement die Führungsnut hintergreift.

Insbesondere kann vorgesehen sein, dass die Führungsnut einen Hintergreifabschnitt umfasst, an welchem das Führungselement angreifen kann.

Bei einer Ausgestaltung der Erfindung ist vorgesehen, dass die Führungsnut im Wesentlichen T-förmig ausgebildet ist.

Die Führungsnut umfasst beispielsweise eine Kulissenführung zur Führung des Führungselements längs eines vorgegebenen Führungswegs.

Der Führungsweg weist vorzugsweise längs der Führungsnut variierende Abstände von einer Kontaktfläche des Bauteils und/oder von einer Anlagefläche des Verbindungselements auf.

Es kann vorgesehen sein, dass der Führungsweg zwei Maximalbereiche mit zumindest lokal, insbesondere mit global, maximalem Abstand von einer Kontaktfläche des Bauteils und/oder von einer Anlagefläche des Verbindungselements aufweist.

Ferner kann vorgesehen sein, dass der Führungsweg einen Minimalbereich mit lokal oder global minimalem Abstand von einer Kontaktfläche des Bauteils und/oder von einer Anlagefläche des Verbindungselements aufweist.

Vorteilhaft kann es sein, wenn der Führungsweg einen zwischen den Maximalbereichen angeordneten Minimalbereich mit lokal minimalem Abstand von einer Kontaktfläche des Bauteils und/oder von einer Anlagefläche des Verbindungselements sowie an den Maximalbereich angrenzende und dem Minimalbereich abgewandt angeordnete Auslaufbereiche mit abnehmendem Abstand von einer Kontaktfläche des Bauteils und/oder von einer Anlagefläche des Verbindungselements aufweist.

Das Führungselement und/oder die Führungsnut umfassen vorzugsweise ein oder mehrere Lagerelemente, insbesondere Gleitelemente und/oder Rollenelemente, zur verschiebbaren Lagerung der Bauteile aneinander.

Beispielsweise kann vorgesehen sein, dass das Führungselement zwei Rollenpaare umfasst, welche in einer im Wesentlichen T-förmigen Führungsnut verschiebbar, insbesondere abrollbar, angeordnet sind.

Mittels eines solchen Verbindungsmittels ist insbesondere ein Schiebetürbeschlag bereitstellbar.

Günstig kann es sein, wenn das Verbindungsmittel mindestens ein Gleitelement und/oder mindestens ein Rollenelement umfasst, welches bei einer Bewegung der Bauteile relativ zueinander an einem Bauteil entlanggleitet und/oder an einem Bauteil abrollt.

Ein Verbindungselement ist vorzugsweise als eine Lauffläche eines Bauteils ausgebildet, längs welcher ein Bewegungselement eines Verbindungselements des weiteren Bauteils bewegbar ist.

Insbesondere kann vorgesehen sein, dass mindestens ein Bewegungselement eines Verbindungselements des weiteren Bauteils auf der Lauffläche abrollbar und/oder verschiebbar, insbesondere gleitend verschiebbar, ist.

Die Lauffläche ist vorzugsweise eine Kontaktfläche eines Bauteils und/oder eine Anlagefläche eines Verbindungselements.

Vorteilhaft kann es sein, wenn das Verbindungsmittel eine Positioniervorrichtung zur Positionierung zweier Bauteile, insbesondere zweier Verbindungselemente, relativ zueinander umfasst.

Die Positioniervorrichtung umfasst vorzugsweise mindestens ein bewegliches, nachgiebiges, elastisches und/oder federnd gelagertes Positionierelement.

Mindestens ein Bauteil und/oder mindestens ein Verbindungselement umfasst vorzugsweise mindestens eine Positionierelementaufnahme zur Aufnahme des mindestens einen Positionierelements.

Günstig kann es sein, wenn mindestens ein Positionierelement sich in einer Haltestellung, in welcher die Bauteile mittels der Positioniervorrichtung relativ zueinander positioniert sind, in die mindestens eine Positionierelementaufnahme hineinerstreckt.

Das mindestens eine Positionierelement ragt in dem verbundenen Zustand, insbesondere in der Haltestellung, vorzugsweise über eine Anlagefläche und/oder eine Kontaktfläche hinaus.

Günstig kann es sein, wenn sich das mindestens eine Positionierelement mit zunehmendem Abstand von der Anlagefläche und/oder Kontaktfläche verjüngt.

Beispielsweise kann vorgesehen sein, dass das Positionierelement kugelförmig, kugelabschnittsförmig, kugelsegmentförmig und/oder konusförmig ausgebildet ist.

Mindestens eine Positionierelementaufnahme ist vorzugsweise zumindest abschnittsweise im Wesentlichen komplementär zu mindestens einem Positionierelement ausgebildet.

Beispielsweise kann vorgesehen sein, dass mindestens eine Positionierelementaufnahme kugelförmig, kugelabschnittsförmig, kugelsegmentförmig und/oder konusförmig ausgebildet ist.

Durch und/oder bei Betätigung mindestens eines Positionierelements der Positioniervorrichtung sind die Bauteile vorzugsweise relativ zueinander verschiebbar.

Insbesondere kann vorgesehen sein, dass die Positionierelemente federnd gelagert sind und aus einer Haltestellung, in welcher die Positionierelemente über eine Anlagefläche und/oder Kontaktfläche hinausragen, in eine Freigabestellung bringbar sind, in welcher die Positionierelemente nicht über die Anlagefläche und/oder Kontaktfläche hinausragen. Insbesondere zwei unmittelbar aneinander angrenzende Bauteile können dann im Wesentlichen frei relativ zueinander verschoben werden.

Sobald die Positionierelemente und die Positionierelementaufnahmen bezüglich der Kontaktflächen und/oder Anlageflächen einander gegenüberliegend angeordnet sind, können die Positionierelemente vorzugsweise ausfedern und zur Positionierung der Bauteile relativ zueinander mit den Positionierelementaufnahmen in Eingriff gebracht werden.

Bei einer Ausgestaltung der Erfindung ist vorgesehen, dass das Verbindungsmittel ein Scharnierelement umfasst, welches einerseits an einem ersten Bauteil, insbesondere an einem Verbindungselement, das an dem ersten Bauteil festgelegt oder festlegbar ist, und andererseits an einem zweiten Bauteil, insbesondere einem Verbindungselement, das an dem zweiten Bauteil festgelegt oder festlegbar ist, festgelegt oder festlegbar ist.

Mindestens ein Verbindungselement umfasst vorzugsweise ein verschiebbares Riegelelement, welches insbesondere relativ zu einem Grundkörper des Verbindungselements verschiebbar ist.

Das Riegelelement ist vorzugsweise magnetisch verschiebbar, insbesondere durch magnetisches Antreiben einer mit dem Riegelelement gekoppelten Antriebswelle.

Die Antriebswelle ist vorzugsweise mittels einer Zahnradvorrichtung mit dem Riegelelement gekoppelt.

Günstig kann es sein, wenn das Riegelelement in eine zumindest abschnittsweise komplementär ausgebildete Riegelaufnahme in dem weiteren Bauteil und/oder dem weiteren Verbindungselement einbringbar ist, insbesondere durch magnetisches Verschieben des Riegelelements.

Die Antriebswelle umfasst oder bildet vorzugsweise mindestens ein Magnetelement und ist insbesondere von außerhalb des Verbindungsmittels mittels eines Antriebsmagnetfelds betätigbar.

Vorzugsweise weist das Bauteil, in welchem das Verbindungselement, an dem das verschiebbare Riegelelement angeordnet ist, angeordnet ist, eine Riegelaufnahme auf. In diese Riegelaufnahme ist das Riegelelement vorzugsweise in einer Freigabestellung anordenbar.

Vorzugsweise ist das Riegelelement einerseits in einer Freigabestellung in der Riegelaufnahme des einen Bauteils und andererseits in einer Haltestellung (Verriegelungsstellung) in der Riegelaufnahme des weiteren Bauteils anordenbar.

Das Verbindungsmittel umfasst vorzugsweise mindestens zwei Verbindungselemente, welche an voneinander verschiedenen Bauteilen angeordnet oder anordenbar sind und jeweils mindestens ein Magnetelement und/oder mindestens ein magnetisierbares Element umfassen.

Die Bauteile sind vorzugsweise durch magnetische Anziehung zwischen den mindestens zwei Magnetelementen oder zwischen dem mindestens einen Magnetelement und dem mindestens einen magnetisierbaren Element miteinander verbindbar.

Vorteilhaft kann es sein, wenn ein Verbindungselement oder mehrere Verbindungselemente eine oder mehrere winkelgetriebene Schraubvorrichtungen umfassen.

Vorzugsweise ist ein bewegbares oder bewegliches Halteelement als ein Schraubelement ausgebildet, welches mittels einer durch einen seitlichen Zugang betätigbaren Antriebsschraube betätigbar ist.

Die winkelgetriebene Schraubvorrichtung umfasst vorzugsweise eine Antriebsschraube und eine Verbindungsschraube. Die Verbindungsschraube dient vorzugsweise der unmittelbaren Verbindung zwischen einem Verbindungselement und einem weiteren Verbindungselement oder einem weiteren Bauteil. Die Antriebsschraube dient insbesondere der Betätigung der Verbindungsschraube.

Vorteilhaft kann es sein, wenn das Verbindungsmittel, insbesondere mindestens ein Verbindungselement des Verbindungsmittels, ein bewegliches Halteelement umfasst, das durch Kraftbeaufschlagung in einer quer, insbesondere senkrecht, zu einer Verbindungsrichtung verlaufenden Querrichtung in eine Freigabestellung bewegbar ist.

Insbesondere kann vorgesehen sein, dass das bewegliche Halteelement durch Verschieben der Bauteile relativ zueinander in einer vorgegebenen Richtung in eine Freigabestellung bewegbar ist.

Das Verbindungsmittel, insbesondere das Halteelement und/oder mindestens ein Verbindungselement, umfasst vorzugsweise mindestens eine Schrägfläche, mittels welcher das bewegliche Halteelement durch Kraftbeaufschlagung in einer quer, insbesondere senkrecht, zu einer Verbindungsrichtung verlaufenden Querrichtung längs der Verbindungsrichtung bewegbar ist.

Das Halteelement ist beispielsweise als ein Rasthaken ausgebildet.

Günstig kann es sein, wenn das Halteelement eine Rastausnehmung in dem weiteren Bauteil und/oder einem weiteren Verbindungselement hintergreift.

Insbesondere kann vorgesehen sein, dass das Halteelement sich im verbundenen Zustand der Bauteile bezüglich der Schwerkraftrichtung auf dem weiteren Bauteil und/oder dem in dem weiteren Bauteil angeordneten Verbindungselement abstützt.

Das Verbindungsmittel umfasst vorzugsweise ein bewegliches Halteelement, welches sich bei einer Kraftbeaufschlagung in einer ersten Querrichtung auf dem weiteren Bauteil und/oder dem Verbindungselement in dem weiteren Bauteil abstützt und welches bei Kraftbeaufschlagung in einer der ersten Querrichtung entgegengesetzten zweiten Querrichtung in die Freigabestellung bewegbar ist.

Das Halteelement ist vorzugsweise federbelastet ausgebildet.

Insbesondere kann vorgesehen sein, dass das Halteelement selbsttätig und/ oder automatisch in eine Haltestellung (Raststellung) bringbar, insbesondere einrastbar, ist.

Mindestens ein Verbindungselement ist vorzugsweise in eine an einem der Bauteile vorgesehene Nut mit einer gekrümmten Hinterschneidungsfläche, die in einem Längsschnitt kreisbogenförmig ist, einführbar. Das mindestens eine Verbindungselement umfasst dabei vorzugsweise einen umgreifenden Abschnitt, welcher das Bauteil an einer quer, insbesondere im Wesentlichen senkrecht, zu einer Kontaktfläche verlaufenden Seitenfläche des Bauteils u mg reift.

Vorzugsweise umfasst das mindestens eine Verbindungselement ferner mindestens einen Vorsprung, welcher mit einer Ausnehmung in einem weiteren Bauteil in Eingriff bringbar ist, um dieses weitere Bauteil an dem ersten Bauteil und/oder an einer Basiskonstruktion festzulegen.

Das mindestens eine Verbindungselement und mindestens ein Bauteil, vorzugsweise beide Bauteile, sind vorzugsweise gemeinsam an einer Basiskonstruktion festlegbar, insbesondere an der Basiskonstruktion anschraubbar.

Die Basiskonstruktion ist beispielsweise eine Unterkonstruktion eines Bodenbelags oder einer Wandvertäfelung.

Das Verbindungselement dient vorzugsweise als ein Abstandshalter zwischen zwei Bauteilen und/oder mindestens einem Bauteil und der Basiskonstruktion.

Vorteilhaft kann es sein, wenn ein oder mehrere Verbindungselemente jeweils mehrere Federelemente und/oder mehrere Rastelemente unterschiedlicher Länge umfassen.

Die Federelemente und/oder Rastelemente sind vorzugsweise mit Federaufnahmen und/oder Rastaufnahmen des weiteren Bauteils und/oder eines Verbindungselements in dem weiteren Bauteil in Eingriff bringbar.

Günstig kann es sein, wenn mehrere Federelemente und/oder Rastelemente beim Bewegen der Bauteile relativ zueinander längs der Verbindungsrichtung nacheinander mit den Federaufnahmen und/oder Rastaufnahmen in Eingriff bringbar sind. Mit zunehmendem Einschubweg (längs der Verbindungsrichtung) wird dann vorzugsweise eine stärkere Verrastung der Bauteile miteinander bewirkt.

Vorteilhaft kann es sein, wenn das Verbindungsmittel zwei Verbindungselemente umfasst, welche jeweils ein oder mehrere Federelemente und/oder Rastelemente und/oder jeweils ein oder mehrere Federelementaufnahmen und/oder Rastelementaufnahmen umfassen.

Bei einer Ausgestaltung der Erfindung kann vorgesehen sein, dass benachbart zueinander angeordnete Federelemente und/oder Rastelemente Federnasen und/oder Rastnasen aufweisen, welche in voneinander verschiedenen Richtungen, insbesondere in einander entgegengesetzten Richtungen, von den Federelementen und/oder Rastelementen wegragen.

Das Verbindungsmittel umfasst vorzugsweise mindestens ein Verbindungselement, welches eine oder mehrere Reihen aus Federelementen und/oder Rastelementen umfasst.

Beispielsweise kann vorgesehen sein, dass die Federelemente und/oder Rastelemente der mindestens einen Reihe aus Federelementen und/oder Rastelementen Federnasen und/oder Rastnasen umfassen, welche längs eines kreisbogenförmigen Wegs angeordnet sind.

Insbesondere kann vorgesehen sein, dass mindestens ein Verbindungselement zwei Reihen aus Federelementen und/oder Rastelementen umfasst, welche bezüglich einer Dickenrichtung des Verbindungselements nebeneinander und/oder beabstandet voneinander angeordnet sind. Die Federnasen und/oder Rastnasen der zwei Reihen aus Federelementen und/oder Rastelementen sind dadurch vorzugsweise aufeinander zu bewegbar, insbesondere um das Verbindungsmittel in eine Haltestellung zu bringen.

Vorzugsweise sind die Federelemente und/oder Rastelemente so ausgebildet und/oder angeordnet, dass die Federnasen und/oder Rastnasen in einen oder mehrere kreisbogenförmige Hinterschneidungsabschnitte einer Nut einbringbar sind, welche einen Basisabschnitt und ein oder mehrere sich in einer Dickenrichtung von dem Basisabschnitt wegerstreckende Hinterschneidungsabschnitte umfasst, wobei die Nut vorzugsweise eine gekrümmte Hinterschneidungsfläche aufweist, die in einem Längsschnitt kreisbogenförmig ist.

Vorzugsweise sind die Nuten in den beiden Bauteilen zur Aufnahme eines Verbindungselements einerseits und zur Verrastung der Federelemente und/oder Rastelemente andererseits im Wesentlichen identisch ausgebildet.

Vorteilhaft kann es sein, wenn das Verbindungsmittel, insbesondere ein oder mehrere Verbindungselemente, eine selbsthemmende Federvorrichtung und/oder Klemmvorrichtung umfasst.

Die selbsthemmende Federvorrichtung und/oder Klemmvorrichtung umfasst vorzugsweise ein oder mehrere Klemmelemente, welche schräg zur Verbindungsrichtung ausgerichtet und/oder welche ausgehend von einem Grundkörper des Verbindungselements von einer Anlagefläche des Verbindungselements weg gerichtet sind.

Das eine Klemmelement oder die mehreren Klemmelemente sind vorzugsweise nachgiebig, elastisch und/oder federnd ausgebildet und/oder nachgiebig, elastisch und/oder federnd an einem Grundkörper und/oder Gehäuse eines Verbindungselements angeordnet.

Vorzugsweise sind mehrere Klemmelemente zu beiden Seiten einer Aufnahme für einen Klemmvorsprung eines weiteren Bauteils oder Verbindungselements angeordnet.

Beim Einschieben eines Klemmvorsprungs des weiteren Bauteils oder Verbindungselements werden das eine oder die mehreren Klemmelemente vorzugsweise seitlich und/oder in Einschubrichtung weggedrückt.

Beim Herausziehen des Klemmvorsprungs werden das eine oder die mehreren Klemmelemente vorzugsweise seitlich an den Klemmvorsprung angedrückt.

Das eine oder die mehreren Klemmelemente umfassen vorzugsweise mindestens einen Klemmabschnitt aus einem Material mit hohem Reibungskoeffizienten, insbesondere hoher Haftreibung.

Ferner kann vorgesehen sein, dass das eine oder die mehreren Klemmelemente aus einem Material mit hohem Reibungskoeffizienten, insbesondere hoher Haftreibung, gebildet sind.

Bei einer weiteren Ausgestaltung der Erfindung kann vorgesehen sein, dass das Verbindungsmittel eine selbsthemmende Federvorrichtung und/oder Klemmvorrichtung zur Festlegung eines oder mehrerer Verbindungselemente an und/oder in einem oder mehreren Bauteilen umfasst.

Ein oder mehrere Klemmelemente sind hierzu vorzugsweise innerhalb und/oder an einer Außenseite eines Grundkörpers oder Gehäuses eines Verbindungselements angeordnet und/oder ausgebildet.

Es kann vorgesehen sein, dass das Verbindungsmittel mindestens ein Verriegelungselement und mindestens ein Betätigungselement zur Betätigung des mindestens einen Verriegelungselements umfasst, wobei das mindestens eine Verriegelungselement und das mindestens eine Betätigungselement vorzugsweise an voneinander verschiedenen Bauteilen und/oder Verbindungselementen angeordnet sind.

Unter einer Betätigung ist dabei insbesondere die Bewegung des mindestens einen Verriegelungselements in eine Haltestellung zur Verbindung der zwei Bauteile und/oder in eine Freigabestellung zum Lösen und Entfernen der Bauteile voneinander zu verstehen.

Das Verriegelungselement kann beispielsweise ein Halteelement sein.

Alternativ oder ergänzend hierzu kann jedoch auch vorgesehen sein, dass mindestens ein Verriegelungselement ein von einem Halteelement verschiedenes Element ist.

Vorzugsweise ist mindestens ein Verriegelungselement durch Drehen des mindestens einen Betätigungselements betätigbar.

Günstig kann es sein, wenn das mindestens eine Betätigungselement ein Exzenterelement ist oder umfasst.

Mittels eines Exzenterelements sind vorzugsweise zwei oder mehr Verriegelungselemente voneinander weg bewegbar, insbesondere um dieselben mit einer Verriegelungsaufnahme in Eingriff zu bringen.

Vorteilhaft kann es sein, wenn das mindestens eine Betätigungselement von einer Seite des Verbindungselements her zugänglich ist, insbesondere durch eine Durchtrittsöffnung (Zugangsöffnung) in einer Seitenwand eines Grundkörpers oder Gehäuses des Verbindungselements. Eine äußere Oberfläche der Seitenwand ist vorzugsweise quer, insbesondere im Wesentlichen senkrecht, zur Kontaktfläche und/oder Anlagefläche ausgerichtet.

Mittels des mindestens einen Betätigungselements sind vorzugsweise Hintergreifabschnitte der Verriegelungselemente in einem Verbindungselement bewegbar, insbesondere um diese Hintergreifabschnitte mit hierzu korrespondierenden Hintergreifaufnahmen in Eingriff zu bringen.

Mindestens ein Verbindungselement umfasst vorzugsweise ein oder mehrere Rastelemente und/oder Klemmelemente, welche einen parallel zur Verbindungsrichtung genommenen im Wesentlichen kreisförmigen oder kreisabschnittsförmigen Querschnitt aufweisen.

Die Rastelemente und/oder Klemmelemente sind vorzugsweise kugelförmig oder plattenförmig mit kreisförmigem oder kreisabschnittsförmigem Querschnitt ausgebildet.

Es kann vorgesehen sein, dass die Rastelemente und/oder Klemmelemente voneinander verschiedene Abstände von einer Anlagefläche des Verbindungselements und/oder von einer Kontaktfläche eines Bauteils aufweisen.

Die Rastelemente und/oder Klemmelemente sind vorzugsweise in zumindest abschnittsweise komplementär ausgebildeten Aufnahmen in dem weiteren Bauteil und/oder einem weiteren Verbindungselement aufnehmbar. Vorzugsweise sind die Rastelemente und/oder Klemmelemente und/oder die Aufnahmen nachgiebig, elastisch, reversibel verformbar und/oder federnd ausgebildet und/oder angeordnet.

Es kann vorgesehen sein, dass das Verbindungsmittel mindestens ein Verbindungselement umfasst, welche in eine Nut in einem Bauteil einbringbar ist, die eine gekrümmte Abstützfläche, welche in einem Längsschnitt kreisbogenförmig ist, umfasst.

Es kann vorgesehen sein, dass die Abstützfläche beidseitig an eine Kontaktfläche des Bauteils angrenzt. Die Kontaktfläche begrenzt dann vorzugsweise den kreisbogenförmigen Längsschnitt beidseitig.

Die Nut ist vorzugsweise kreissegmentförmig ausgebildet, wobei eine Begrenzung des Kreissegments eine kreisbogenförmige Nutgrundfläche und eine weitere Begrenzung des Kreissegments die Kontaktfläche ist.

Es kann jedoch auch vorgesehen sein, dass die Nut als eine Teilnut ausgebildet ist.

Die Abstützfläche grenzt beispielsweise nur einseitig an eine Kontaktfläche des Bauteils an. Eine der Kontaktfläche abgewandte Seite der Abstützfläche endet dann vorzugsweise an einer von der Kontaktfläche verschiedenen Fläche des Bauteils oder innerhalb des Bauteils.

Unter einer Seite einer Abstützfläche ist in dieser Beschreibung und den beigefügten Ansprüchen insbesondere ein die Abstützfläche längs des kreisbogenförmigen Längsschnitts begrenzendes Ende zu verstehen.

Günstig kann es sein, wenn ein Verbindungsmittel zwei als Scharnierelemente ausgebildete und/oder mit Scharnierelementen versehene Verbindungselemente umfasst. Die Verbindungselemente sind beispielsweise in Teilnuten anordenbar.

Vorzugsweise sind zwei Teilnuten in zwei Bauteilen, insbesondere jeweils eine Teilnut in jeweils einem Bauteil, dadurch herstellbar, dass die Bauteile aneinandergelegt und mit einer einzigen durchgängigen Nut, welche sich, insbesondere hälftig, in beide Bauteile erstreckt, versehen werden.

Die vorliegende Erfindung betrifft ferner ein Verfahren zum Verbinden zweier Bauteile.

Der Erfindung liegt diesbezüglich die Aufgabe zugrunde, ein Verfahren bereitzustellen, mittels welchem zwei Bauteile einfach und stabil miteinander verbindbar sind.

Diese Aufgabe wird erfindungsgemäß durch ein Verfahren zum Verbinden zweier Bauteile, insbesondere von Möbel- oder Maschinenbauteilen, gelöst, wobei das Verfahren Folgendes umfasst:
Bereitstellen eines Verbindungsmittels, insbesondere eines erfindungsgemäßen Verbindungsmittels;
Einbringen eines Verbindungselements in eines der Bauteile;
Verbinden des Verbindungselements mit dem weiteren Bauteil, insbesondere mit einem an oder in dem weiteren Bauteil angeordneten weiteren Verbindungselement.

Das erfindungsgemäße Verfahren weist vorzugsweise einzelne oder mehrere der im Zusammenhang mit dem erfindungsgemäßen Verbindungsmittel beschriebenen Merkmale und/oder Vorteile auf.

Zur Ausbildung von vorteilhaften Ausführungsformen der Erfindung können vorzugsweise einzelne oder mehrere der in dieser Beschreibung und den beigefügten Ansprüchen beschriebenen Merkmale beliebig in Kombination mit weiteren Merkmalen oder unabhängig von weiteren Merkmalen vorgesehen oder weggelassen werden.

Weitere bevorzugte Merkmale und/oder Vorteile der vorliegenden Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung zweier Bauteile, welche mittels eines Verbindungsmittels miteinander verbindbar sind und hierzu zwei Nuten mit Hinterschneidungsabschnitten umfassen;
- Fig. 2: eine teiltransparente Darstellung der Bauteile aus Fig. 1;
- Fig. 3: einen schematischen Querschnitt durch eines der Bauteile aus Fig. 1;
- Fig. 4: eine schematische teiltransparente Seitenansicht des Bauteils aus Fig. 3;
- Fig. 5: eine schematische perspektivische Darstellung einer ersten Ausführungsform eines Verbindungsmittels, bei welcher ein in eine Nut einschiebbares Verbindungselement und ein als Schraubelement ausgebildetes Verbindungselement vorgesehen sind;
- Fig. 6: einen schematischen Längsschnitt durch das Verbindungsmittel aus Fig. 5;
- Fig. 7: eine schematische perspektivische Darstellung eines Grundkörpers des in eine Nut einschiebbaren Verbindungselements aus Fig. 5;
- Fig. 8: eine schematische perspektivische Darstellung eines bewegbaren Halteelements des in eine Nut einschiebbaren Verbindungselements aus Fig. 5;
- Fig. 9: eine schematische Seitenansicht des als Schraubelement ausgebildeten Verbindungselements aus Fig. 5;
- Fig. 10: eine schematische perspektivische Darstellung einer zweiten Ausführungsform eines Verbindungsmittels, bei welcher ein in eine Nut eines Bauteils einschiebbares Verbindungselement und ein auf ein weiteres Bauteil aufsetzbares Verbindungselement vorgesehen sind;
- Fig. 11: eine schematische teiltransparente Seitenansicht des Verbindungsmittels aus Fig. 10 samt der mittels des Verbindungsmittels verbundenen Bauteile;
- Fig. 12: eine schematische perspektivische Darstellung des in eine Nut einschiebbaren Verbindungselements des Verbindungsmittels aus Fig. 10;
- Fig. 13: eine schematische perspektivische Darstellung des auf ein Bauteil aufsetzbaren Verbindungselements des Verbindungsmittels aus Fig. 10;
- Fig. 14: eine schematische teiltransparente Seitenansicht des mit einer Nut und einem darin angeordneten Verbindungselement versehenen Bauteils aus Fig. 11;
- Fig. 15: eine schematische teiltransparente Darstellung des weiteren Bauteils und des darauf aufgesetzten weiteren Verbindungselements aus Fig. 11;
- Fig. 16: eine schematische perspektivische Darstellung einer dritten Ausführungsform eines Verbindungsmittels, bei welcher ein in ein Bauteil einschraubbares Verbindungselement zur Aufnahme eines T-förmigen Halteelements vorgesehen ist;
- Fig. 17: einen schematischen Längsschnitt durch das Verbindungsmittel aus Fig. 16;
- Fig. 18: eine schematische perspektivische Darstellung einer vierten Ausführungsform eines Verbindungsmittels, bei welcher für jedes Bauteil jeweils zwei Verbindungselemente vorgesehen sind, die mittels einer Sicherungsvorrichtung relativ zueinander festlegbar sind;
- Fig. 19: eine schematische teiltransparente Seitenansicht des Verbindungsmittels aus Fig. 18;
- Fig. 20: einen schematischen Querschnitt durch das Verbindungsmittel aus Fig. 18 längs der Linie 20-20 in Fig. 19;
- Fig. 21: eine schematische Seitenansicht zur Illustration der Montage der Verbindungselemente des Verbindungsmittels aus Fig. 18 in einem Bauteil;
- Fig. 22: eine der Fig. 21 entsprechende schematische Darstellung zweier Verbindungselemente im montierten Zustand derselben an einem Bauteil;
- Fig. 23: eine schematische perspektivische Explosionsdarstellung einer fünften Ausführungsform eines Verbindungsmittels, bei welcher ein mittels eines Magnetelements linear antreibbares Halteelement vorgesehen ist;
- Fig. 24: einen schematischen vertikalen Längsschnitt durch das Verbindungsmittel aus Fig. 23, im getrennten Zustand desselben;
- Fig. 25: einen weiteren schematischen vertikalen Längsschnitt durch das Verbindungsmittel aus Fig. 23, im verbundenen Zustand desselben;
- Fig. 26: einen schematischen vertikalen Querschnitt durch das Verbindungsmittel aus Fig. 23, im verbundenen Zustand desselben;
- Fig. 27: einen schematischen vertikalen Längsschnitt durch eine sechste Ausführungsform eines Verbindungsmittels, bei welcher ein mittels eines Magnetelements drehend antreibbares Halteelement und eine verschieblich gelagerte Aufnahme für das Halteelement vorgesehen sind;
- Fig. 28: einen schematischen Querschnitt durch ein Verbindungselement, welches das Magnetelement und das Halteelement umfasst, längs der Linie 28-28 in Fig. 27;
- Fig. 29: einen schematischen vertikalen Längsschnitt durch eine siebte Ausführungsform eines Verbindungsmittels, bei welcher eine Speichervorrichtung zum Speichern von Halteenergie eines Halteelements vorgesehen ist, wobei die Speichervorrichtung in einem Speicherzustand vorliegt;
- Fig. 30: eine der Fig. 29 entsprechende schematische Darstellung des Verbindungsmittels aus Fig. 29, wobei die Speichervorrichtung in einem entladenen und/oder entspannten Zustand vorliegt;
- Fig. 31: einen schematischen vertikalen Längsschnitt durch eine achte Ausführungsform eines Verbindungsmittels, bei welcher ein mittels einer Federvorrichtung linear bewegbares Halteelement vorgesehen ist;
- Fig. 32: eine schematische Schnittdarstellung durch drei Bauteile, welche mittels Verbindungselementen einer neunten Ausführungsform eines Verbindungsmittels miteinander verbunden sind, wobei die Verbindungselemente mittels einer Nut-Feder-Vorrichtung miteinander verbunden sind;
- Fig. 33: eine der Fig. 32 entsprechende schematische Darstellung der Bauteile und der Verbindungsmittel, im getrennten Zustand der Verbindungs-elemente der Verbindungsmittel;
- Fig. 34: eine vergrößerte Darstellung des Bereichs XXXIV in Fig. 32;
- Fig. 35: eine schematische perspektivische transparente Darstellung eines Verbindungselements einer zehnten Ausführungsform eines Verbindungsmittels, wobei das Verbindungselement in eine Nut in einem Bauteil einführbar und durch Durchtrittsöffnungen in einem weiteren Bauteil hindurch zugänglich ist;
- Fig. 36: eine schematische teiltransparente Seitenansicht zweier Bauteile und des Verbindungsmittels aus Fig. 35 zum Verbinden der Bauteile;
- Fig. 37: eine schematische perspektivische Darstellung eines Bauteils, welches eine Nut aufweist, in der das Verbindungselement aus Fig. 35 angeordnet und mit Schraubelementen versehen ist;
- Fig. 38: eine schematische perspektivische Darstellung einer elften Ausführungsform eines Verbindungsmittels, bei welcher das Verbindungsmittel eine Führungsvorrichtung zur Führung der Bauteile relativ zueinander bildet;
- Fig. 39: einen schematischen vertikalen Querschnitt durch das Verbindungsmittel aus Fig. 38;
- Fig. 40: eine schematische perspektivische Darstellung einer zwölften Ausführungsform eines Verbindungsmittels, bei welcher ein mit Rollenelementen versehenes Verbindungselement vorgesehen ist, welches längs einer Führungsnut eines weiteren Verbindungselements des Verbindungsmittels bewegbar ist;
- Fig. 41: einen schematischen vertikalen Querschnitt durch zwei mittels des Verbindungsmittels aus Fig. 40 miteinander verbundene Bauteile;
- Fig. 42: eine schematische teiltransparente Seitenansicht einer dreizehnten Ausführungsform eines Verbindungsmittels, bei welcher ein mit einer Rolle versehenes Verbindungselement vorgesehen ist, mittels derer das eine Bauteil relativ zu dem weiteren Bauteil verschiebbar ist;
- Fig. 43: einen schematischen vertikalen Querschnitt durch die zwei Bauteile und das Verbindungsmittel aus Fig. 42;
- Fig. 44: eine schematische teiltransparente Seitenansicht einer vierzehnten Ausführungsform eines Verbindungsmittels, bei welcher eine Positioniervorrichtung zur Vereinfachung der Positionierung der Verbindungselemente vorgesehen ist;
- Fig. 45: eine vergrößerte Darstellung des Bereichs XLV in Fig. 44;
- Fig. 46: eine schematische perspektivische Darstellung des Verbindungsmittels aus Fig. 44;
- Fig. 47: eine schematische Seitenansicht einer fünfzehnten Ausführungsform eines Verbindungsmittels, bei welcher das Verbindungsmittel ein Scharnier, insbesondere ein Türscharnier, bildet;
- Fig. 48: eine schematische Draufsicht auf eine Kontaktfläche eines Bauteils, wobei in dem Bauteil ein Verbindungselement des Verbindungsmittels aus Fig. 47 angeordnet ist, wobei an dem Verbindungselement ein Scharnierelement angeordnet ist;
- Fig. 49: einen schematischen vertikalen Querschnitt durch zwei Bauteile, welche mittels des Verbindungsmittels aus Fig. 47 miteinander verbunden sind;
- Fig. 50: einen schematischen vertikalen Querschnitt durch eine sechzehnte Ausführungsform eines Verbindungsmittels, bei welcher ein magnetisch verschiebbares Riegelelement vorgesehen ist;
- Fig. 51: einen schematischen vertikalen Längsschnitt durch ein mit einem Riegelelement versehenes Verbindungselement des Verbindungsmittels aus Fig. 50;
- Fig. 52: eine schematische perspektivische Darstellung des Riegelelements und einer Antriebswelle zum Antreiben des Riegelelements;
- Fig. 53: einen schematischen Schnitt durch das Riegelelement und die Antriebswelle aus Fig. 52;
- Fig. 54: einen schematischen Querschnitt durch eine siebzehnte Ausführungsform eines Verbindungsmittels und zwei mittels des Verbindungsmittels miteinander verbundene Bauteile, wobei das Verbindungsmittel zwei magnetisch miteinander wechselwirkende Elemente umfasst;
- Fig. 55: eine schematische perspektivische Darstellung einer achtzehnten Ausführungsform eines Verbindungsmittels, bei welcher ein als winkelgetriebene Schraube ausgebildetes Halteelement vorgesehen ist;
- Fig. 56: einen schematischen Querschnitt durch das Verbindungsmittel aus Fig. 55 und die mittels des Verbindungsmittels miteinander zu verbindenden Bauteile;
- Fig. 57: einen schematischen Querschnitt durch eine neunzehnte Ausführungsform eines Verbindungsmittels, bei welcher ein als federbelasteter Rasthaken ausgebildetes Halteelement zur Verbindung zweier Verbindungselemente vorgesehen ist;
- Fig. 58: eine schematische perspektivische Darstellung einer zwanzigsten Ausführungsform eines Verbindungsmittels, bei welcher ein als Terrassenverbinder ausgebildetes Verbindungselement vorgesehen ist;
- Fig. 59: eine schematische perspektivische Darstellung eines mittels des Verbindungsmittels aus Fig. 58 an einer Grundkonstruktion festlegbaren Bauteils;
- Fig. 60: einen schematischen vertikalen Querschnitt durch das Verbindungsmittel aus Fig. 58 und die zwei damit an einer Grundkonstruktion festgelegten Bauteile;
- Fig. 61: einen schematischen Querschnitt durch eine einundzwanzigste Ausführungsform eines Verbindungsmittels, bei welcher mit Rastelementen versehene Verbindungselemente vorgesehen sind;
- Fig. 62: einen schematischen Längsschnitt durch das Verbindungsmittel aus Fig. 61;
- Fig. 63: eine schematische teiltransparente Seitenansicht einer zweiundzwanzigsten Ausführungsform eines Verbindungsmittels, bei welcher Federelemente mit in einer kreisbogenförmigen Reihe angeordneten Rastnasen vorgesehen sind;
- Fig. 64: einen schematischen Querschnitt durch das Verbindungsmittel aus Fig. 63 und die zwei miteinander zu verbindenden Bauteile beim Verbinden der Bauteile miteinander;
- Fig. 65: einen schematischen Querschnitt durch die Bauteile und das Verbindungsmittel aus Fig. 64 längs der Linie 65-65 in Fig. 64;
- Fig. 66: eine der Fig. 64 entsprechende Darstellung des Verbindungsmittels und der Bauteile, wobei die Bauteile mittels des Verbindungsmittels miteinander verbunden sind;
- Fig. 67: eine der Fig. 65 entsprechende schematische Darstellung der Bauteile und des Verbindungsmittels im verbundenen Zustand derselben;
- Fig. 68: einen schematischen vertikalen Längsschnitt durch eine dreiundzwanzigste Ausführungsform eines Verbindungsmittels, bei welcher ein mit einem Halteelement versehenes Verbindungselement und ein mit einem Betätigungselement zum Betätigen des Halteelements versehenes weiteres Verbindungselement vorgesehen sind;
- Fig. 69: eine der Fig. 68 entsprechende schematische Darstellung des Verbindungsmittels aus Fig. 68, wobei die Verbindungselemente aneinander angelegt sind;
- Fig. 70: eine der Fig. 68 entsprechende schematische Darstellung des Verbindungsmittels aus Fig. 68 im verbundenen Zustand der Verbindungselemente;
- Fig. 71: einen schematischen vertikalen Längsschnitt durch eine vierundzwanzigste Ausführungsform eines Verbindungsmittels, bei welcher elastische Klemmelemente zum Festlegen eines Klemmvorsprungs vorgesehen sind;
- Fig. 72: einen schematischen Querschnitt durch das Verbindungsmittel aus Fig. 71;
- Fig. 73: eine der Fig. 71 entsprechende schematische Darstellung des Verbindungsmittels aus Fig. 71 beim Einschieben des Klemmvorsprungs zwischen die Klemmelemente;
- Fig. 74: eine der Fig. 71 entsprechende schematische Darstellung des Verbindungsmittels aus Fig. 71 im verbundenen Zustand der Verbindungselemente;
- Fig. 75: eine schematische perspektivische transparente Darstellung einer fünfundzwanzigsten Ausführungsform eines Verbindungsmittels, bei welcher kugelförmige Rastelemente vorgesehen sind;
- Fig. 76: eine schematische perspektivische transparente Darstellung einer sechsundzwanzigsten Ausführungsform eines Verbindungsmittels, bei welcher kreiszylinderförmige Rastelemente vorgesehen sind;
- Fig. 77: eine schematische Seitenansicht des Verbindungsmittels aus Fig. 76;
- Fig. 78: einen schematischen Längsschnitt durch das Verbindungsmittel aus Fig. 76 im verbundenen Zustand der Verbindungselemente;
- Fig. 79: eine schematische perspektivische teiltransparente Darstellung eines Bauteils, welches mit einer Teilnut versehen ist;
- Fig. 80: einen schematischen Längsschnitt durch das Bauteil aus Fig. 79;
- Fig. 81: einen schematischen Längsschnitt durch eine siebenundzwanzigste Ausführungsform eines Verbindungsmittels, bei welcher ein als Anlageelement ausgebildetes Sicherungselement einer Sicherungsvorrichtung vorgesehen ist;
- Fig. 82: eine schematische perspektivische Darstellung einer achtundzwanzigsten Ausführungsform eines Verbindungsmittels, bei welcher zwei in Nuten einschiebbare Verbindungselemente vorgesehen sind, die mittels einer Kulissenführung relativ zueinander festlegbar sind;
- Fig. 83: eine schematische Seitenansicht des Verbindungsmittels aus Fig. 82;
- Fig. 84: eine weitere schematische Seitenansicht des Verbindungsmittels aus Fig. 82;
- Fig. 85: einen schematischen Längsschnitt durch ein Verbindungselement des Verbindungsmittels aus Fig. 82, welches eine Kulissenführung umfasst;
- Fig. 86: eine schematische teiltransparente Seitenansicht des Verbindungsmittels aus Fig. 82 im verbundenen Zustand der Verbindungselemente;
- Fig. 87: einen schematischen Schnitt durch das Verbindungsmittel aus Fig. 82 längs der Linie 87-87 in Fig. 86;
- Fig. 88: eine der Fig. 82 entsprechende schematische perspektivische Darstellung einer neunundzwanzigsten Ausführungsform eines Verbindungsmittels, bei welcher ein mit nur einem Haltevorsprung versehenes Verbindungselement vorgesehen ist;
- Fig. 89: eine der Fig. 83 entsprechende Darstellung des Verbindungsmittels aus Fig. 88;
- Fig. 90: eine der Fig. 84 entsprechende Darstellung des Verbindungsmittels aus Fig. 88;
- Fig. 91: eine der Fig. 86 entsprechende Darstellung des Verbindungsmittels aus Fig. 88;
- Fig. 92: einen schematischen Querschnitt durch das Verbindungsmittel aus Fig. 88 längs der Linie 92-92 in Fig. 91;
- Fig. 93: eine der Fig. 82 entsprechende schematische perspektivische Darstellung einer dreißigsten Ausführungsform eines Verbindungsmittels, bei welcher ein in ein Bauteil einsteckbares Verbindungselement vorgesehen ist;
- Fig. 94: eine der Fig. 83 entsprechende Darstellung des Verbindungsmittels aus Fig. 93;
- Fig. 95: eine der Fig. 84 entsprechende Darstellung des Verbindungsmittels aus Fig. 93;
- Fig. 96: eine der Fig. 86 entsprechende Darstellung des Verbindungsmittels aus Fig. 93;
- Fig. 97: einen schematischen Querschnitt durch das Verbindungsmittel aus Fig. 93 längs der Linie 97-97 in Fig. 96;
- Fig. 98: einen schematischen vertikalen Längsschnitt durch eine einunddreißigste Ausführungsform eines Verbindungsmittels, welches eine Scharniervorrichtung mit zwei in Teilnuten anordenbaren Verbindungselementen umfasst, wobei die Scharniervorrichtung in einer Offenstellung angeordnet ist; und
- Fig. 99: einen der Fig. 98 entsprechenden Längsschnitt durch das Verbindungsmittel aus Fig. 98, wobei die Scharniervorrichtung in einer Schließstellung angeordnet ist.

Gleiche oder funktional äquivalente Elemente sind in sämtlichen Figuren mit denselben Bezugszeichen versehen.

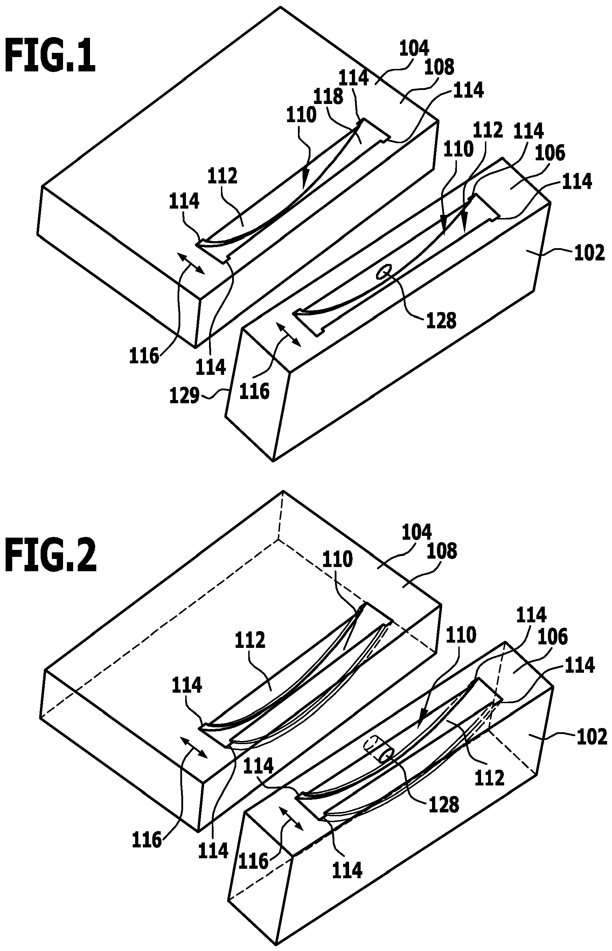

Ein als Ganzes mit 100 bezeichnetes Verbindungsmittel dient beispielsweise der Verbindung eines ersten, im Wesentlichen plattenförmigen Bauteils 102 mit einem zweiten, ebenfalls im Wesentlichen plattenförmigen Bauteil 104 (siehe Fig. 1 bis 4).

Die beiden Bauteile 102 und 104 bestehen beispielsweise aus Holz oder Sperrholz, können aber auch aus beliebigen anderen Materialien, beispielsweise aus einem metallischen Material oder einem Kunststoffmaterial (beispielsweise Plexiglas), bestehen. Ferner kann vorgesehen sein, dass das erste Bauteil 102 und das zweite Bauteil 104 aus voneinander verschiedenen Materialien bestehen.

Im verbundenen Zustand der beiden Bauteile 102 und 104 liegt eine eine Schmalseite des ersten Bauteils 102 bildende Kontaktfläche 106 des ersten Bauteils 102 an einer eine Hauptfläche des zweiten Bauteils 104 bildenden Kontaktfläche 108 des zweiten Bauteils 104 an.

An jede der Kontaktflächen 106, 108 mündet jeweils eine in dem betreffenden Bauteil 102 bzw. 104 ausgebildete Nut 110, welche einen kreiszylindersegment- oder kreiszylinderabschnittsförmigen Basisabschnitt 112 und zwei sich in einer Dickenrichtung 116 von dem Basisabschnitt 112 weg erstreckende Hinterschneidungsabschnitte 114 umfasst.

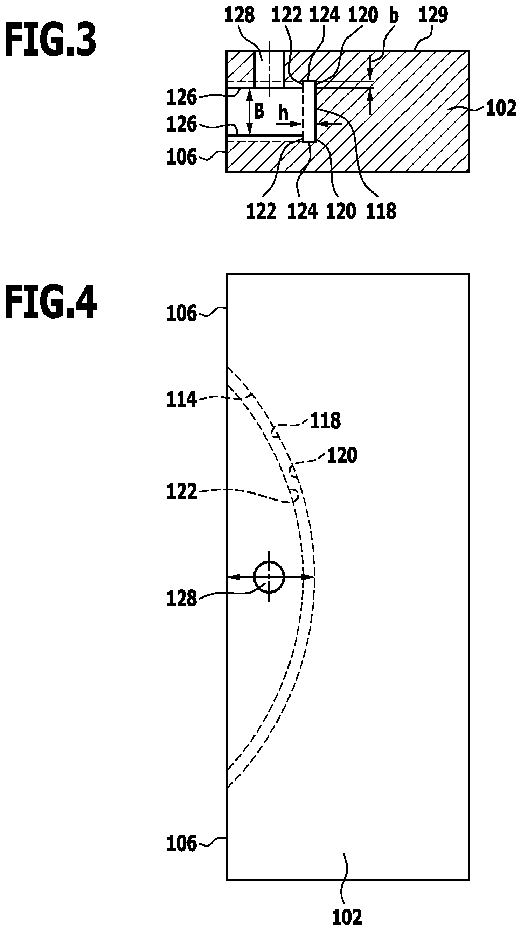

Der Krümmungsradius des Basisabschnitts 112 ist größer als die Nuttiefe T (siehe Fig. 4), so dass die gewölbte Nutgrundfläche 118 die jeweilige Kontaktfläche 106, 108 unter einem spitzen Winkel schneidet.

Der Basisabschnitt 112 der Nut 110 weist in der Dickenrichtung 116 eine Breite B von beispielsweise ungefähr 8 mm auf.

Jeder der Hinterschneidungsabschnitte 114 der Nut 110 wird auf seiner der jeweiligen Kontaktfläche 106 bzw. 108 abgewandten Seite durch eine mit der Nutgrundfläche 118 flächenbündige Grundfläche 120 begrenzt, welche kreiszylindermantelausschnittsförmig ausgebildet ist und denselben Krümmungsradius wie die Nutgrundfläche 118 des Basisabschnitts 112 aufweist.

In der Richtung auf die Kontaktfläche 106 bzw. 108 hin wird jeder Hinterschneidungsabschnitt 114 durch eine ebenfalls kreiszylindermantelausschnittsförmige Hinterschneidungsfläche 122 begrenzt, welche konzentrisch zu der Grundfläche 120 ausgebildet ist und einen kleineren Krümmungsradius aufweist.

Seitlich wird jeder der Hinterschneidungsabschnitte 114 durch eine senkrecht zur jeweiligen Kontaktfläche 106 bzw. 108 verlaufende seitliche Begrenzungsfläche 124 begrenzt.

Die Breite b, das heißt die Erstreckung in der Dickenrichtung 116, beträgt für jeden der Hinterschneidungsabschnitte 114 beispielsweise ungefähr 1 mm.

Die Höhe h, das heißt der Abstand zwischen der Grundfläche 120 und der Hinterschneidungsfläche 122, beträgt für jeden der Hinterschneidungsabschnitte 114 beispielsweise ungefähr 2 mm.

Der Basisabschnitt 112 jeder Nut 110 wird durch im Wesentlichen senkrecht zu der jeweiligen Kontaktfläche 106 bzw. 108 verlaufende seitliche Begrenzungswände 126 begrenzt, welche voneinander den Abstand der Nutbreite B aufweisen.

Wie beispielsweise aus Fig. 3 zu ersehen ist, mündet in die Nut 110 des ersten Bauteils 102 eine senkrecht zu einer der seitlichen Begrenzungswände 126 verlaufende, im Wesentlichen zylindrische Zugangsöffnung 128, insbesondere Zugangsbohrung, deren anderes Ende an einer Hauptfläche 129 des ersten Bauteils 102 mündet und so einen Zugang vom Außenraum des ersten Bauteils 102 zu dem Basisabschnitt 112 der Nut 110 ermöglicht.

Um die vorstehend beschriebenen Nuten 110 an den Bauteilen 102 und 104 auszubilden, kann beispielsweise die in der EP 1 990 549 A1 beschriebene Nutfräsvorrichtung verwendet werden.

Zur Verbindung der Bauteile 102, 104 miteinander können in jedem der Bauteile 102, 104 eine oder mehrere Nuten 110, insbesondere Nuten 110 der vorstehend beschriebenen Art, vorgesehen sein.

Es kann jedoch auch vorgesehen sein, dass nur eines der Bauteile 102, 104 mit einer oder mehreren Nuten 110, insbesondere Nuten 110 der vorstehend genannten Art, versehen ist, während das weitere Bauteil 104, 102 keine Nut 110 der vorstehend beschriebenen Art, eine anders ausgebildete Nut 110, eine oder mehrere Bohrungen, eine oder mehrere Vertiefungen, einen oder mehrere Vorsprünge und/oder eine oder mehrere Ausnehmungen umfasst oder unbearbeitet ist.

Verschiedene Ausführungsformen von Verbindungsmitteln 100 zum Verbinden verschiedener Bauteile 102, 104, insbesondere verschieden vorbereiteter Bauteile 102, 104, werden nachfolgend beschrieben.

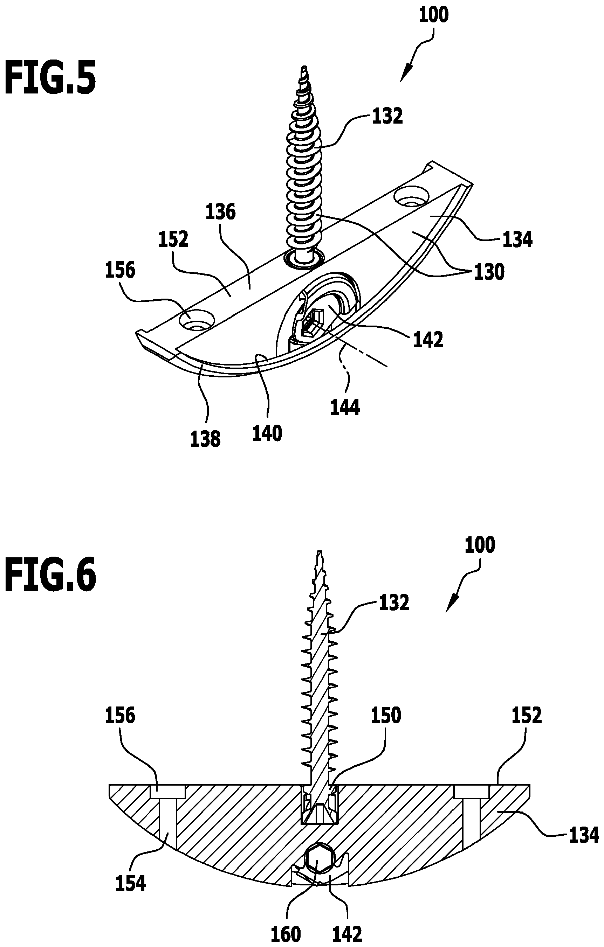

In den Fig. 5 bis 9 ist eine erste Ausführungsform eines Verbindungsmittels 100 dargestellt, welche ein in eine Nut 110 einschiebbares Verbindungselement 130 und ein als Schraubelement 132 ausgebildetes Verbindungselement 130 umfasst.

Unter einem in eine Nut 110 einschiebbaren Verbindungselement 130 ist vorzugsweise ein Verbindungselement 130 zu verstehen, welches in eine Nut 110 einschiebbar ist, die einen Basisabschnitt 112 und einen oder mehrere sich in einer Dickenrichtung 116 von dem Basisabschnitt 112 weg erstreckende Hinterschneidungsabschnitte 114 umfasst. Der eine Hinterschneidungsabschnitt 114 oder die mehreren Hinterschneidungsabschnitte 114 weisen vorzugsweise eine oder mehrere Hinterschneidungsflächen 122 auf, welche konzentrisch zu dem Basisabschnitt 112 ausgebildet und angeordnet sind. Die Hinterschneidungsfläche 122 oder die Hinterschneidungsflächen 122 sind dabei insbesondere kreiszylindermantelausschnittsförmig ausgebildet.

Ein in eine Nut 110 einschiebbares Verbindungselement 130 umfasst vorzugsweise einen Grundkörper 134, welcher einen dem Basisabschnitt 112 der Nut 110 entsprechenden Basisteil 136 und einen oder mehrere den Hinterschneidungsabschnitten 114 entsprechende Haltevorsprünge 138 umfasst.

Die Haltevorsprünge 138 umfassen jeweils eine gekrümmte Abstützfläche 140, die in einem Längsschnitt kreisbogenförmig ist.

Die Haltevorsprünge 138 sind insbesondere nicht-selbstschneidend ausgebildet.

Unter einem Längsschnitt, einer Längsrichtung, etc. ist in dieser Beschreibung und den beigefügten Ansprüchen ein Schnitt bzw. eine Bewegung des Verbindungselements 130 in einer Ebene zu verstehen, in welcher ein Bewegungspfad des Verbindungselements 130 beim Einschieben desselben in eine Nut 110 liegt.

Ein Längsschnitt ist insbesondere ein senkrecht zu einer Symmetrieachse der Abstützflächen 140 des Verbindungselements 130 genommener Schnitt.

Unter einem Querschnitt ist insbesondere ein senkrecht zu einem Längsschnitt genommener Schnitt zu verstehen, beispielsweise ein senkrecht zu einer Kontaktfläche 106, 108 und parallel zur Symmetrieachse der Abstützflächen 140 des Verbindungselements 130 genommener Schnitt.

Vorzugsweise ist ein Querschnitt ein Schnitt längs einer Ebene, in welcher die Symmetrieachse der Abstützflächen 140 des Verbindungselements 130 verläuft.

Bei der in den Fig. 5 bis 9 dargestellten ersten Ausführungsform des Verbindungsmittels 100 umfasst das in eine Nut 110 einschiebbare Verbindungselement 130 ein an dem Grundkörper 134 angeordnetes, insbesondere drehbar an demselben gelagertes, Halteelement 142.

Das Halteelement 142 ist insbesondere um eine parallel zur Dickenrichtung 116 verlaufende Rotationsachse 144 drehbar an dem Grundkörper 134 angeordnet.

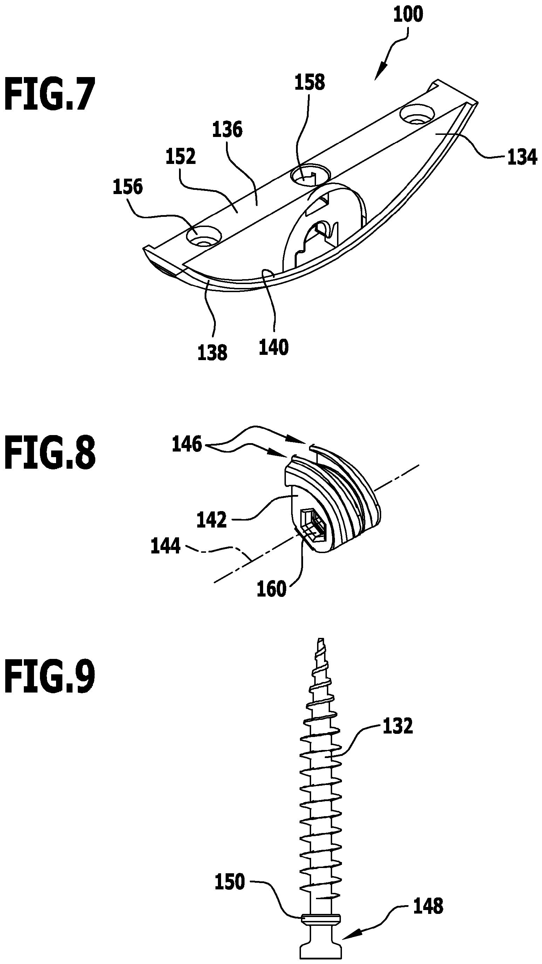

Wie insbesondere Fig. 8 zu entnehmen ist, umfasst das Halteelement 142 zwei Eingriffsvorsprünge 146, welche bogenförmig ausgebildet und exzentrisch zu der Rotationsachse 144 angeordnet sind.

Mittels der Eingriffsvorsprünge 146 ist insbesondere ein Eingriffsabschnitt 148 des als Schraubelement 132 ausgebildeten Verbindungselements 130 ergreifbar und in Richtung der Rotationsachse 144 ziehbar.

Das als Schraubelement 132 ausgebildete Verbindungselement 130 umfasst neben dem Eingriffsabschnitt 148 noch einen Anschlag 150.

Mittels des Anschlags 150 ist das Schraubelement 132 zuverlässig in einer korrekten Position an einem der Bauteile 102, 104 festlegbar.

Insbesondere kann mittels des Anschlags 150 gewährleistet werden, dass der Eingriffsabschnitt 148 im montierten Zustand des Schraubelements 132 an einem der Bauteile 102, 104 ausreichend weit über eine Kontaktfläche 106, 108 des Bauteils 102, 104 hervorsteht, um mit dem Halteelement 142 in Eingriff gebracht zu werden.

Im montierten Zustand des in die Nut 110 einschiebbaren Verbindungselements 130 sind die Kontaktfläche 106, 108 des Bauteils 102, 104 und eine Anlagefläche 152 des Verbindungselements 130 vorzugsweise im Wesentlichen flächenbündig.

Das Verbindungselement 130 ist vorzugsweise an dem Bauteil 102, 104, an welchem die Nut 110 angeordnet ist, verschraubbar. Der Grundkörper 134 des Verbindungselements 130 umfasst hierzu zwei Durchtrittsöffnungen 154 zur Durchführung von (nicht dargestellten) Schrauben. Die Durchtrittsöffnungen 154 sind zudem mit Vertiefungen 156 versehen, damit (nicht dargestellte) Schraubköpfe innerhalb einer Außenkontur des Grundkörpers 134 aufnehmbar sind.

Die Verbindung zwischen den Bauteilen 102, 104 mittels des Verbindungsmittels 100 wird wie folgt hergestellt:
Zunächst wird das als Schraubelement 132 ausgebildete Verbindungselement 130 in eines der Bauteile 102, 104 eingeschraubt, bis der Anschlag 150 des Schraubelements 132 an der Kontaktfläche 106, 108 anliegt.

Das weitere Bauteil 104, 102 wird dann mit einer Nut 110, insbesondere mit einer der in den Fig. 1 bis 4 dargestellten Nuten 110, versehen.

Daraufhin wird das in die Nut 110 einschiebbare Verbindungselement 130 in die Nut 110 eingeschoben und mittels der (nicht dargestellten) Schrauben an dem Bauteil 102, 104 festgelegt.

Durch eine zuvor in das Bauteil 102, 104 eingebrachte zylindrische Zugangsbohrung 128 ist im montierten Zustand des in die Nut 110 einschiebbaren Verbindungselements 130 das Halteelement 142 zugänglich.

In einem nächsten Schritt werden die Bauteile 102, 104 so aneinander gelegt, dass der Eingriffsabschnitt 148 des Schraubelements 132 in eine hierzu korrespondierende Aufnahmeöffnung 158 in dem Grundkörper 134 des Verbindungselements 130 gelangt.

Die Bauteile 102, 104 liegen dann mit ihren Kontaktflächen 106, 108 aneinander an.

Zum Festlegen der Bauteile 102, 104 relativ zueinander muss dann nur noch das Halteelement 142 aus der zunächst eingestellten Freigabestellung in eine Haltestellung gebracht werden.

Durch die Zugangsbohrung 128 hindurch wird hierzu ein (nicht dargestellter) Schraubschlüssel mit einer Schraubschlüsselaufnahme 160 des Halteelements 142 in Eingriff gebracht. Durch Drehen des Schraubschlüssels und somit auch des Halteelements 142 um die Rotationsachse 144 wird dann das Halteelement 142 von der Freigabestellung in die Haltestellung bewegt.

Die Eingriffsvorsprünge 146 hintergreifen dabei den Eingriffsabschnitt 148 des Schraubelements 132 und ziehen diesen in Richtung der Rotationsachse 144.

Hierdurch wird eine Zugwirkung auf die Bauteile 102, 104 ausgeübt, so dass diese fest miteinander verbunden sind.

Das als Schraubelement 132 ausgebildete Verbindungselement 130 weist vorzugsweise einen im Wesentlichen rotationssymmetrischen Eingriffsabschnitt 148 auf. Auf diese Weise kann das Schraubelement 132 unabhängig von einer Drehausrichtung stets zuverlässig mittels des Halteelements 142 ergriffen werden.

Die Verankerung des Verbindungselements 130, welches den Eingriffsabschnitt 148 umfasst, kann einerseits mittels der dargestellten Schraube erfolgen. Alternativ hierzu kann jedoch auch ein bolzenförmiges Einpressen, ein Verkleben, ein Einschrauben mittels eines Spax-Gewindes oder eines metrischen Gewindes, ein Festlegen mittels eines Dübels, ein Vernieten und/oder ein Verschweißen eines Elements, welches den Eingriffsabschnitt 148 aufweist, zur Festlegung an dem einen Bauteil 102, 104 vorgesehen sein.

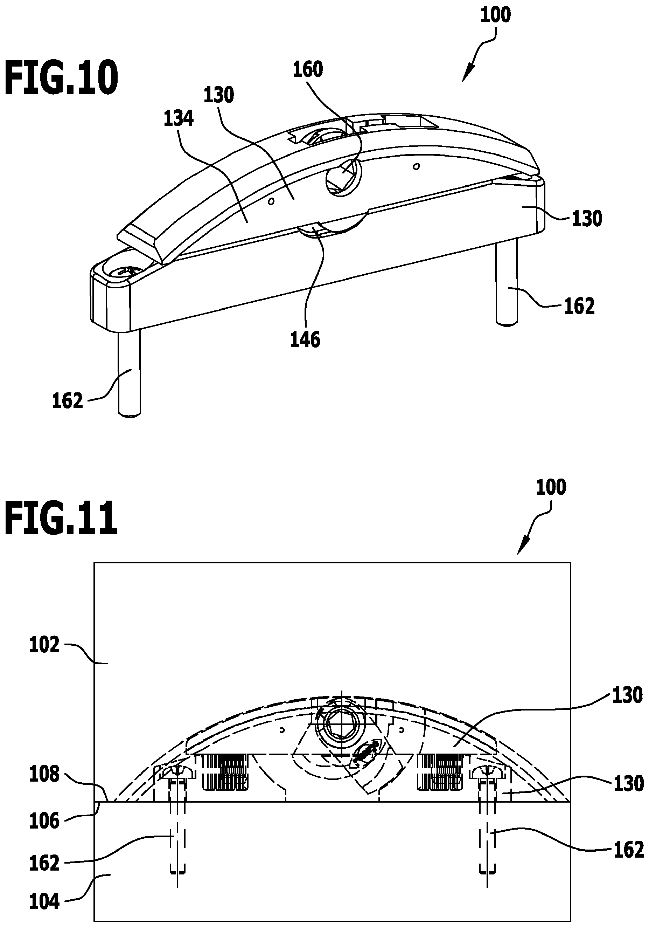

Eine in den Fig. 10 bis 15 dargestellte zweite Ausführungsform eines Verbindungsmittels 100 unterscheidet sich von der in den Fig. 5 bis 9 dargestellten ersten Ausführungsform im Wesentlichen dadurch, dass zusätzlich zu einem in eine Nut 110 einschiebbaren Verbindungselement 130 ein im Wesentlichen quaderförmiges Verbindungselement 130 vorgesehen ist.

Dieses quaderförmige Verbindungselement 130 ist insbesondere mittels zweier Schrauben 162 auf eine Kontaktfläche 108 eines Bauteils 104 aufschraubbar.

Das quaderförmige Verbindungselement 130 umfasst zwei Eingriffsvorsprünge 146 und einen im Wesentlichen halbringförmigen Eingriffskanal 164.

Das in die Nut 110 einführbare Verbindungselement 130 umfasst ein Halteelement 142, welches zumindest abschnittsweise einen im Wesentlichen T-förmigen Querschnitt aufweist und somit einen Eingriffsabschnitt 148 umfasst.

Das Halteelement 142 ist insbesondere durch eine Drehbewegung in den Eingriffskanal 164 des quaderförmigen Verbindungselements 130 einbringbar und mit den Eingriffsvorsprüngen 146 in Eingriff bringbar.

Das in die Nut 110 einbringbare Verbindungselement 130 umfasst ferner zwei Einsteckvorsprünge 166, welche in hierzu korrespondierende Aufnahmetaschen 168 in dem quaderförmigen Verbindungselement 130 einsteckbar sind.

Die Einsteckvorsprünge 166 und die Aufnahmetaschen 168 weisen vorzugsweise eine geriffelte oder wellige Oberfläche auf, um ein Verschieben der Einsteckvorsprünge 166 innerhalb der Aufnahmetaschen 168 zu verhindern.

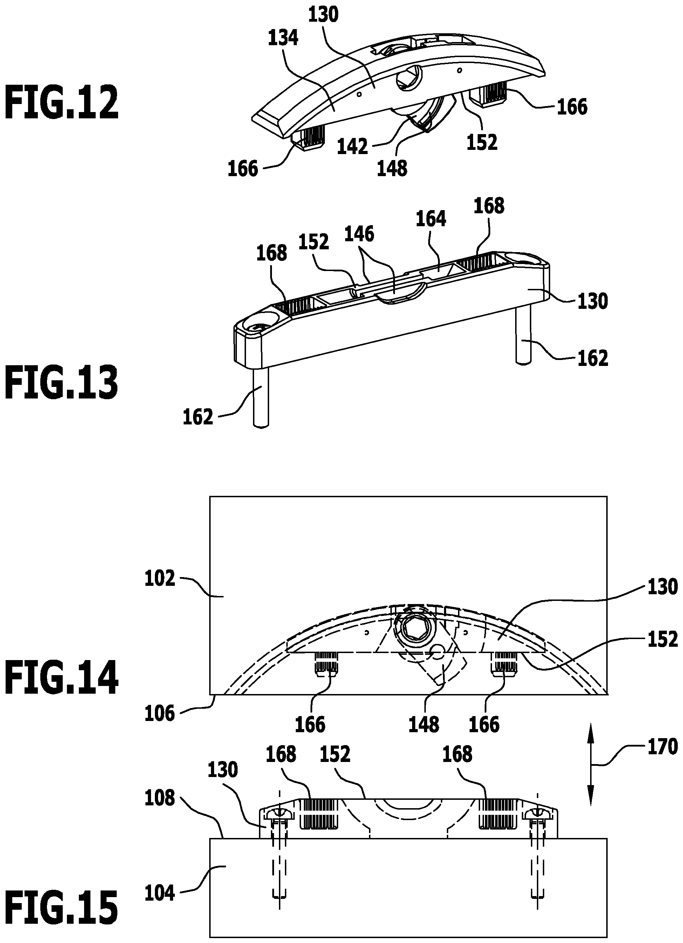

Wie insbesondere den Fig. 11 und 14 zu entnehmen ist, ist das in der Nut 110 anordenbare Verbindungselement 130 vorzugsweise vollständig in der Nut 110 anordenbar.

Die Anlagefläche 152 des Grundkörpers 134 des Verbindungselements 130 ist im montierten Zustand des Verbindungselements 130 in der Nut 110 gegenüber der Kontaktfläche 106 des Bauteils 102 zurückversetzt angeordnet.

Im verbundenen Zustand der Bauteile 102, 104 liegen diese mit ihren Kontaktfläche 106, 108 aneinander an.

Das auf der Kontaktfläche 108 des zweiten Bauteils 104 festgeschraubte quaderförmige Verbindungselement 130 erstreckt sich dann in die Nut 110 in dem ersten Bauteil 102 hinein.

Bereits durch das Einschieben des quaderförmigen Verbindungselements 130 in die Nut 110 in dem ersten Bauteil 102 kann somit eine zuverlässige Festlegung der Bauteile 102, 104 relativ zueinander bezüglich der Dickenrichtung 116 erfolgen.

Durch Drehen des Halteelements 142 mittels des (nicht dargestellten) Schraubschlüssels kann das Halteelement 142 in die Halteposition gebracht werden, in welcher der Eingriffsabschnitt 148 die Eingriffsvorsprünge 146 hintergreift und die Verbindungselemente 130 sowie die Bauteile 102, 104 bezüglich einer senkrecht zu den Kontaktflächen 106, 108 ausgerichteten Verbindungsrichtung 170 festlegt.

Im Übrigen stimmt die in den Fig. 10 bis 15 dargestellte zweite Ausführungsform des Verbindungsmittels 100 hinsichtlich Aufbau und Funktion mit der in den Fig. 5 bis 9 dargestellten ersten Ausführungsform überein, so dass auf deren vorstehende Beschreibung insoweit Bezug genommen wird.

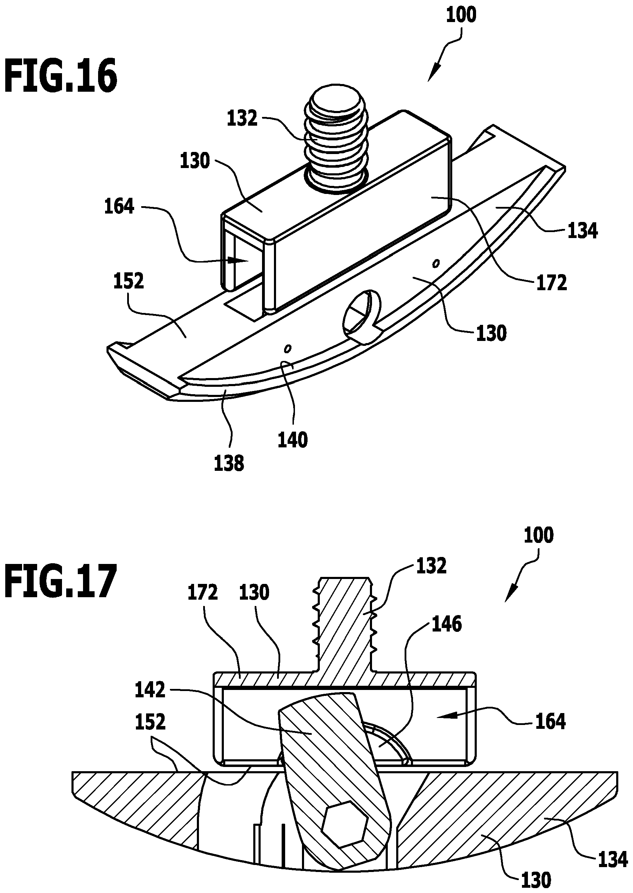

Eine in den Fig. 16 und 17 dargestellte dritte Ausführungsform eines Verbindungsmittels 100 unterscheidet sich von der in den Fig. 10 bis 15 dargestellten zweiten Ausführungsform im Wesentlichen dadurch, dass zusätzlich zu einem in die Nut 110 einschiebbaren Verbindungselement 130 ein als Schraubelement 132 ausgebildetes Verbindungselement 130 vorgesehen ist.

Dieses Schraubelement 132 ist in eines der Bauteile 102, 104 einschraubbar.

Ein quaderförmiger Abschnitt 172 des Schraubelements 132 umfasst einen Eingriffskanal 164 und zwei Eingriffsvorsprünge 146.

Ähnlich der in den Fig. 10 bis 15 dargestellten zweiten Ausführungsform ist somit auch bei der in den Fig. 16 und 17 dargestellten dritten Ausführungsform ein auf eine Kontaktfläche 106, 108 eines Bauteils 102, 104 aufsetzbares, insbesondere aufschraubbares, Verbindungselement 130 vorgesehen, in welches ein Halteelement 142, das einen im Wesentlichen T-förmigen Querschnitt aufweist und somit einen Eingriffsabschnitt 148 umfasst, einführbar ist.

Im Übrigen stimmt die in den Fig. 16 und 17 dargestellte dritte Ausführungsform des Verbindungsmittels 100 hinsichtlich Aufbau und Funktion mit der in den Fig. 10 bis 15 dargestellten zweiten Ausführungsform überein, so dass auf deren vorstehende Beschreibung insoweit Bezug genommen wird.

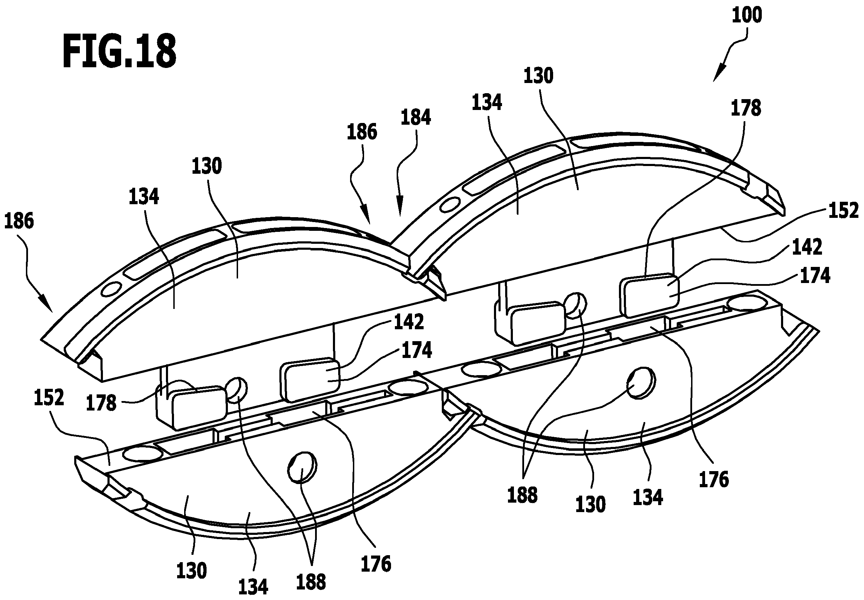

Eine in den Fig. 18 bis 22 dargestellte vierte Ausführungsform eines Verbindungsmittels 100 unterscheidet sich von der in den Fig. 5 bis 9 dargestellten ersten Ausführungsform im Wesentlichen dadurch, dass jedem der Bauteile 102, 104 jeweils zwei in eine Nut 110 einschiebbare Verbindungselemente 130 zugeordnet sind.

Die Nuten 110 in jedem Bauteil 102, 104 sind dabei überlappend angeordnet, so dass sich die Nutgrundflächen 118 der Nuten 110 innerhalb des jeweiligen Bauteils 102, 104 unterhalb der Kontaktfläche 106, 108 schneiden, bzw. aneinander angrenzen.

Bei der in den Fig. 18 bis 22 dargestellten vierten Ausführungsform des Verbindungsmittels 100 sind zwei Arten von Verbindungselementen 130 vorgesehen.

Einerseits sind Verbindungselemente 130 vorgesehen, welche jeweils zwei Einhängeelemente 174 umfassen.

Ferner sind Verbindungselemente 130 vorgesehen, welche jeweils zwei Einhängeelementaufnahmen 176 umfassen.

Sowohl die Einhängeelemente 174 als auch die Einhängeelementaufnahmen 176 umfassen jeweils mindestens eine Schrägfläche 178, welche schräg zur Anlagefläche 152 und/oder schräg zur Kontaktfläche 106, 108 ausgerichtet ist.

Ferner umfassen sämtliche Verbindungselemente 130 jeweils einen Sicherungsvorsprung 180 und eine Sicherungsausnehmung 182.

Mittels des Sicherungsvorsprungs 180 und der Sicherungsausnehmung 182 ist jeweils eine Sicherungsvorrichtung 184 gebildet. Die Sicherungsvorrichtung 184 dient insbesondere der Festlegung mindestens eines der Verbindungselemente 130 in der Nut 110, insbesondere zum Vermeiden eines unerwünschten Verschiebens des Verbindungselements 130 innerhalb der Nut 110.

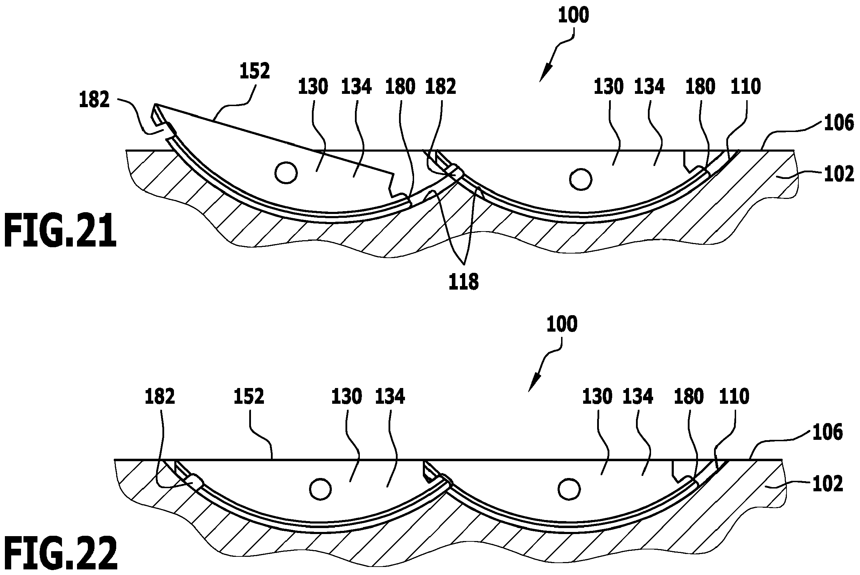

Ein Sicherungsvorsprung 180 eines Verbindungselements 130 ist hierzu mit einer Sicherungsausnehmung 182 eines weiteren Verbindungselements 130 in Eingriff bringbar (siehe insbesondere die Fig. 21 und 22).

Ein Sicherungsvorsprung 180 und eine Sicherungsausnehmung 182 eines Verbindungselements 130 sind vorzugsweise an einander gegenüberliegenden Endbereichen 186 des Grundkörpers 134, insbesondere der Abstützflächen 140, angeordnet.

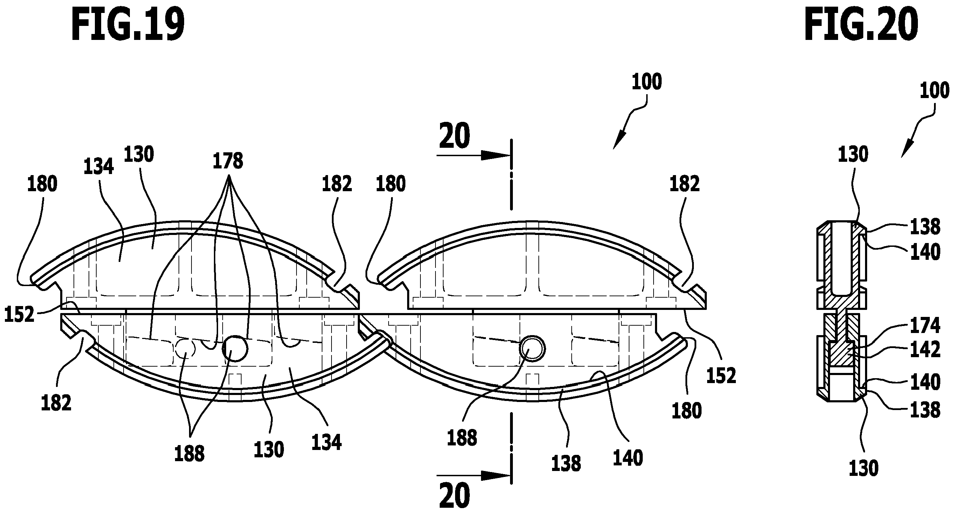

Wie insbesondere Fig. 19 zu entnehmen ist, umfassen die Verbindungselemente 130 ferner jeweils eine Durchtrittsöffnung 188, welche derart an dem jeweiligen Verbindungselement 130 angeordnet ist, dass die Durchtrittsöffnungen 188 zweier miteinander verbundener Verbindungselemente 130 im verbundenen Zustand der Bauteile 102, 104 miteinander fluchten.

Durch Einbringen eines Sicherungselements, insbesondere eines Sicherungsstifts, in die Durchtrittsöffnungen 188 können die Verbindungselemente 130 und somit auch die Bauteile 102, 104 gegen ein unerwünschtes Verschieben derselben relativ zueinander gesichert werden.

Wie insbesondere Fig. 19 zu entnehmen ist, erfolgt die Verbindung der Bauteile 102, 104 mittels der Verbindungselemente 130 bei der in den Fig. 18 bis 22 dargestellten vierten Ausführungsform des Verbindungsmittels 100 nicht durch ein Drehen eines Halteelements 142. Vielmehr werden die Bauteile 102, 104 samt der daran angeordneten Verbindungselemente 130 zunächst aufeinander zu bewegt, um die Einhängeelemente 174 in die Einhängeelementaufnahmen 176 einzuführen (siehe Fig. 18).

Daran anschließend werden die Bauteile 102, 104 und die darin angeordneten Verbindungselemente 130 parallel zu den Kontaktflächen 106, 108 verschoben. Die Schrägflächen 178 der Einhängeelemente 174 und der Einhängeelementaufnahmen 176 gelangen hierdurch miteinander in Eingriff, so dass die Verbindungselemente 130 und somit auch die Bauteile 102, 104 aufeinander zu gezogen werden.

Die in den Fig. 18 bis 22 dargestellte vierte Ausführungsform des Verbindungsmittels 100 eignet sich insbesondere zur Verbindung von Rahmenbauteilen eines Bettgestells.

Im Übrigen stimmt die in den Fig. 18 bis 22 dargestellte Ausführungsform eines Verbindungsmittels 100 hinsichtlich Aufbau und Funktion mit der in den Fig. 5 bis 9 dargestellten ersten Ausführungsform überein, so dass auf deren vorstehende Beschreibung insoweit Bezug genommen wird.

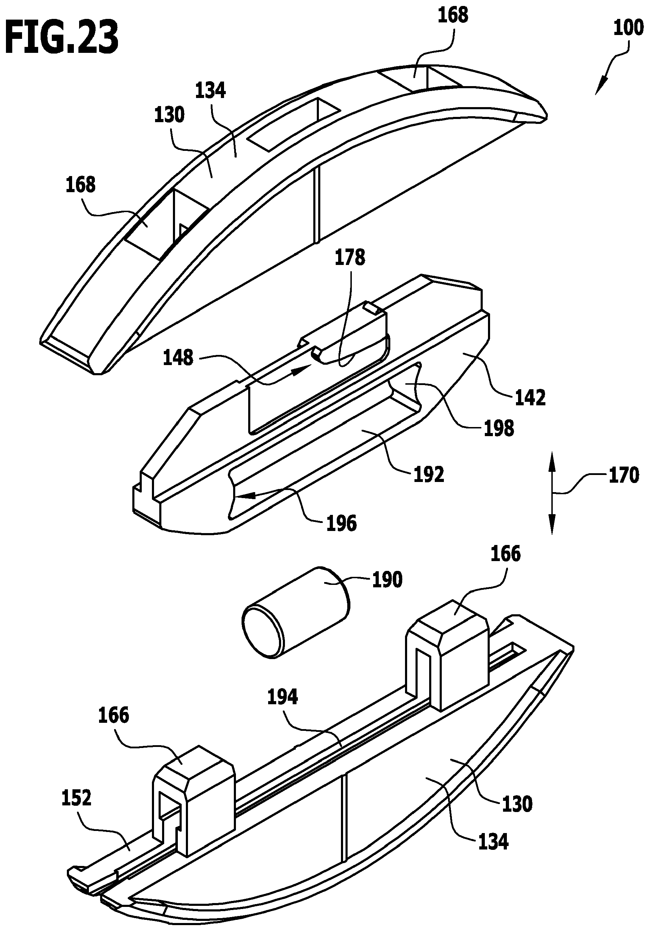

Eine in den Fig. 23 bis 26 dargestellte fünfte Ausführungsform eines Verbindungsmittels 100 unterscheidet sich von der in den Fig. 5 bis 9 dargestellten ersten Ausführungsform im Wesentlichen dadurch, dass zwei in jeweils eine Nut 110 einschiebbare Verbindungselemente 130 vorgesehen sind.

Zudem ist bei der in den Fig. 23 bis 26 dargestellten Ausführungsform des Verbindungsmittels 100 vorgesehen, dass ein Halteelement 142 mittels eines Magnetelements 190 betätigbar ist, um das Halteelement 142 von einer Freigabestellung in eine Haltestellung und/oder von der Haltestellung in die Freigabestellung zu bringen.

Das Magnetelement 190 ist insbesondere ein magnetisch mit einer (nicht dargestellten) Magnetvorrichtung betätigbares Element.

Das Magnetelement 190 ist mittels der Magnetvorrichtung beispielsweise linear hin und her bewegbar.

Das Halteelement 142 umfasst vorzugsweise eine Aufnahme 192 für das Magnetelement 190.

Eines der Verbindungselemente 130 dient vorzugsweise der Aufnahme des Halteelements 142 samt des darin aufgenommenen Magnetelements 190.

Dieses Verbindungselement 130 umfasst hierzu insbesondere eine im Wesentlichen schlitzartige Führung 194 in dem Grundkörper 134.

Das Halteelement 142 ist längs der schlitzartigen Führung 194 relativ zu dem Grundkörper 134 bewegbar.

Das Halteelement 142 umfasst ferner zwei Schrägflächen 178, welche mit Eingriffsvorsprüngen 146 in dem weiteren Verbindungselement 130 in Eingriff bringbar sind.

Die Schrägflächen 178 des Halteelements 142 bilden somit einen Eingriffsabschnitt 148 des Halteelements 142.

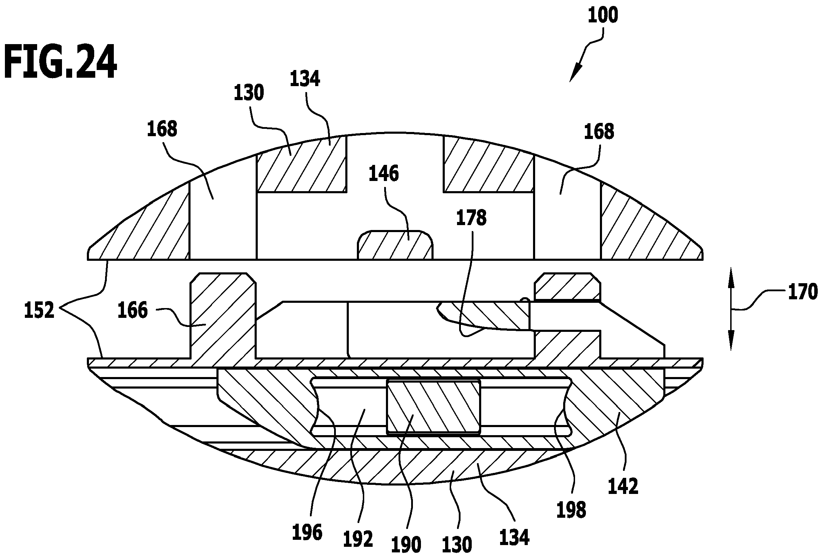

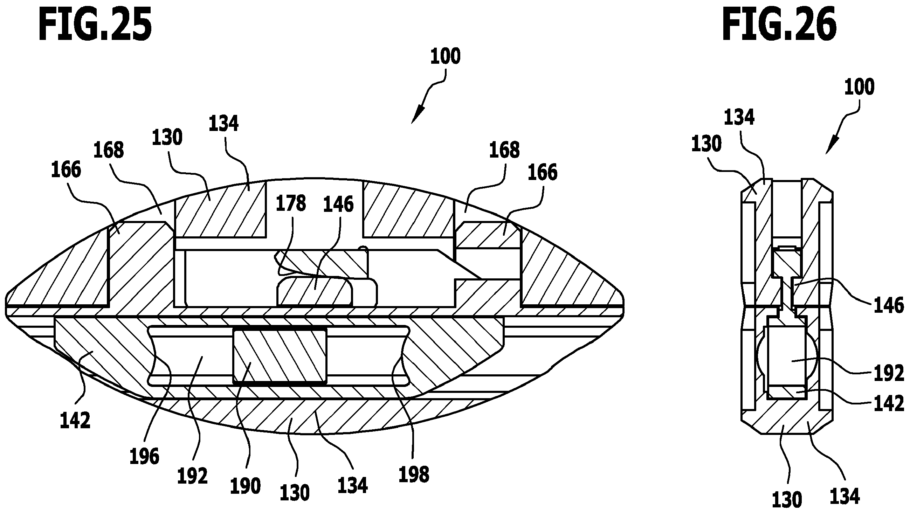

Wie insbesondere den Fig. 24 und 25 zu entnehmen ist, umfassen die Verbindungselemente 130 gemäß der in den Fig. 23 bis 26 dargestellten fünften Ausführungsform des Verbindungsmittels 100 Einsteckvorsprünge 166 und Aufnahmetaschen 168.

Beim Verbinden der Verbindungselemente 130 miteinander werden zunächst die Einsteckvorsprünge 166 in die Aufnahmetaschen 168 eingeführt.

Der Eingriffsabschnitt 148, insbesondere die Schrägflächen 178, wird gleichzeitig bezüglich der Verbindungsrichtung 170 hinter die Eingriffsvorsprünge 146 gebracht.

Schließlich gelangen die Anlageflächen 152 der Verbindungselemente 130 sowie die Kontaktflächen 106, 108 der Bauteile 102, 104 miteinander zur Anlage.

Zum Festlegen der Verbindungselemente 130 und somit der Bauteile 102, 104 relativ zueinander längs der Verbindungsrichtung 170 wird nun in einem nächsten Schritt das Magnetelement 190 betätigt.

Hierzu wird die Magnetvorrichtung in die Nähe des Verbindungsmittels 100 gebracht und das Magnetelement 190 innerhalb der Aufnahme 192 beschleunigt.

Das Magnetelement 190 wird dabei insbesondere wiederholt innerhalb der Aufnahme 192 beschleunigt und durch Anschlagen an einem Endbereich der Aufnahme 192 abgebremst.

Die Aufnahme 192 wird dabei einerseits von einer Verriegelungsfläche 196 und andererseits von einer Entriegelungsfläche 198 begrenzt.

Durch ein Auftreffen des Magnetelements 190 auf die Verriegelungsfläche 196 wird das Halteelement 142 in die Haltestellung gebracht, in welcher der Eingriffsabschnitt 148 des Halteelements 142 die Eingriffsvorsprünge 146 hintergreift.

Durch Anschlagen des Magnetelements 190 an der Entriegelungsfläche 198 wird das Halteelement 142 in die entgegengesetzte Richtung bewegt und somit der Eingriffsabschnitt 148 mit den Eingriffsvorsprüngen 146 außer Eingriff gebracht.

Das Halteelement 142 kann somit wahlweise in die Haltestellung oder in die Freigabestellung gebracht werden.

Mittels der Einsteckvorsprünge 166 und der Aufnahmetaschen 168 wird vorzugsweise verhindert, dass das Anschlagen des Magnetelements 190 an der Verriegelungsfläche 196 oder an der Entriegelungsfläche 198 eine Verschiebung der Grundkörper 134 der Verbindungselemente 130 relativ zueinander bewirkt.

Die in den Fig. 23 bis 26 dargestellte fünfte Ausführungsform des Verbindungsmittels 100 kann insbesondere den Vorteil bieten, dass die Bauteile 102, 104 ohne jegliche optische Beeinträchtigung miteinander verbunden werden können. Insbesondere kann eine Zugangsbohrung 128 entbehrlich sein.

Im Übrigen stimmt die in den Fig. 23 bis 26 dargestellte fünfte Ausführungsform des Verbindungsmittels 100 hinsichtlich Aufbau und Funktion mit der in den Fig. 5 bis 9 dargestellten ersten Ausführungsform überein, so dass auf deren vorstehende Beschreibung insoweit Bezug genommen wird.

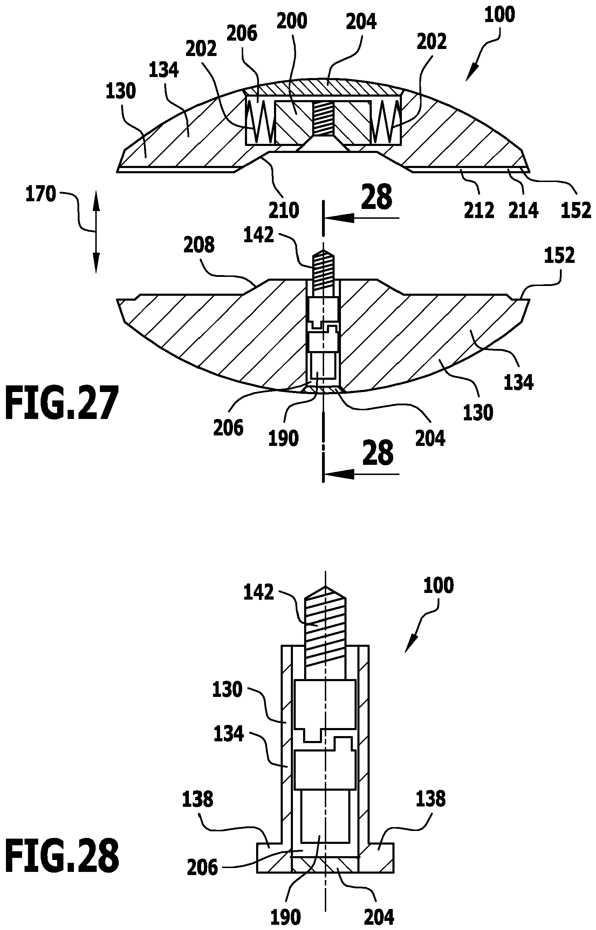

Eine in den Fig. 27 und 28 dargestellte sechste Ausführungsform eines Verbindungsmittels 100 unterscheidet sich von der in den Fig. 23 bis 26 dargestellten fünften Ausführungsform im Wesentlichen dadurch, dass das Halteelement 142 ein schraubenförmiges Halteelement 142 ist.

Das Magnetelement 190 ist mittels der Magnetvorrichtung rotierend antreibbar, um das Halteelement 142 gezielt zu betätigen.

Das Halteelement 142 und das Magnetelement 190 sind an einem Grundkörper 134 eines in eine Nut 110 einbringbaren Verbindungselements 130 angeordnet.

Ein weiteres Verbindungselement 130, welches vorzugsweise ebenfalls in eine Nut 110 einbringbar ist, umfasst vorzugsweise eine Aufnahme 200 für das schraubenförmige Halteelement 142.

Die Aufnahme 200 ist insbesondere eine Schraubenmutter.

Die Aufnahme 200 ist vorzugsweise beweglich, insbesondere federnd, an einem Grundkörper 134 des weiteren Verbindungselements 130 angeordnet. Insbesondere sind hierzu zwei Federelemente 202 an dem Grundkörper 134 vorgesehen.

Die Grundkörper 134 der Verbindungselemente 130 umfassen vorzugsweise jeweils ein Deckelelement 204, mittels welchem ein Innenraum 206 des jeweiligen Grundkörpers 134 verschließbar ist.

Insbesondere sind durch Entfernen des jeweiligen Deckelelements 204 die Aufnahme 200, das Magnetelement 190 und/oder das schraubenartige Halteelement 142 zugänglich und/oder aus dem jeweiligen Grundkörper 134 entnehmbar.

Wie insbesondere Fig. 27 zu entnehmen ist, umfassen die Verbindungselemente 130 vorzugsweise ferner jeweils mindestens einen Vorsprung 208, eine hierzu korrespondierende Ausnehmung 210 und/oder jeweils mindestens einen Kamm 212 und/oder eine hierzu korrespondierende Rille 214 zur Ausrichtung der Verbindungselemente 130 relativ zueinander in sämtlichen senkrecht zur Verbindungsrichtung 170 verlaufenden Richtungen.

Hinsichtlich der Art der Betätigung des Halteelements 142 mittels des Magnetelements 190 sowie hinsichtlich der Betätigung des Magnetelements 190 mittels der Magnetvorrichtung wird auf die WO 99/43961 A1 Bezug genommen, deren Inhalt hiermit durch Inbezugnahme zum Gegenstand dieser Beschreibung gemacht wird.

Im Übrigen stimmt die in den Fig. 27 und 28 dargestellte sechste Ausführungsform des Verbindungsmittels 100 hinsichtlich Aufbau und Funktion mit der in den Fig. 23 bis 26 dargestellten fünften Ausführungsform überein, so dass auf deren vorstehende Beschreibung insoweit Bezug genommen wird.

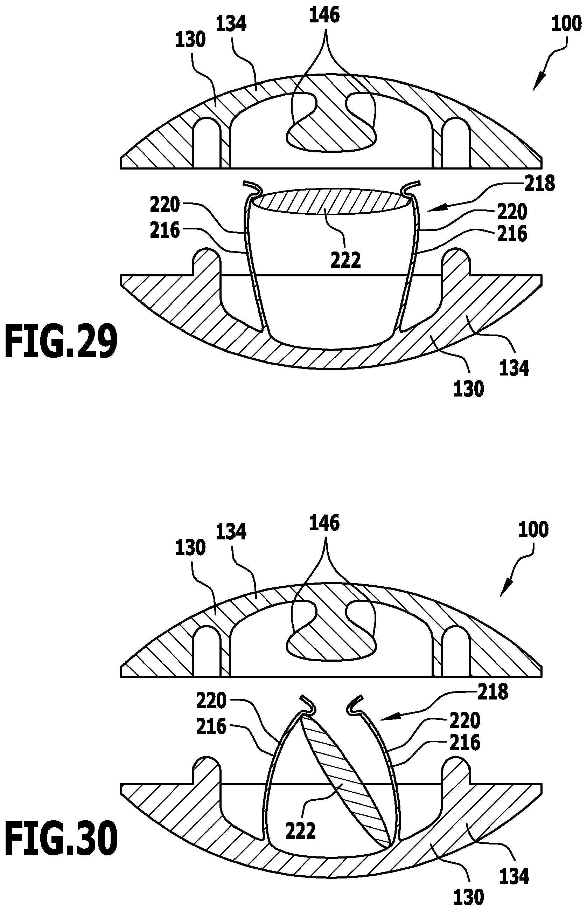

Eine in den Fig. 29 und 30 dargestellte siebte Ausführungsform eines Verbindungsmittels 100 unterscheidet sich von der in den Fig. 23 bis 26 dargestellten fünften Ausführungsform im Wesentlichen dadurch, dass die Verbindungselemente 130 mittels Federelementen 216 miteinander verbindbar sind.

Die Federelemente 216 können hierzu insbesondere Eingriffsvorsprünge 146 hintergreifen.

Die Federelemente 216 und die Eingriffsvorsprünge 146 sind an voneinander verschiedenen Verbindungselementen 130 angeordnet.

Bei der in den Fig. 29 und 30 dargestellten siebten Ausführungsform des Verbindungsmittels 100 ist eine Speichervorrichtung 218 vorgesehen, mittels welcher die zum Halten der Verbindungselemente 130 erforderliche Halteenergie oder Haltekraft speicherbar ist.

Die Speichervorrichtung 218 umfasst zwei Speicherelemente 220, welche insbesondere durch die Federelemente 216 gebildet sind, und ein Blockierelement 222.

Mittels des Blockierelements 222 können die Federelemente 216 in einer vorgespannten Stellung gehalten werden (siehe Fig. 29).

Die zum Halten der Verbindungselemente 130 und somit der Bauteile 102, 104 aneinander erforderliche Halteenergie und/oder Haltekraft kann bei der in den Fig. 29 und 30 dargestellten Ausführungsform des Verbindungsmittels 100 vor dem eigentlichen Verbinden der Bauteile 102, 104 miteinander aufgebracht und gespeichert werden.

Beim Verbinden der an den Bauteilen 102, 104 angeordneten Verbindungselemente 130 miteinander wird das Blockierelement 222 vorzugsweise mittels mindestens eines Eingriffsvorsprungs 146 aus der in Fig. 29 dargestellten Blockierstellung in die in Fig. 30 dargestellte Freigabestellung gebracht.

Die Federelemente 216 können sich in der Folge aufeinander zu bewegen und die Eingriffsvorsprünge 146 hintergreifen.

Das in den Fig. 29 und 30 dargestellte Verbindungsmittel 100 ist insbesondere ein verdecktes, selbstspannendes Verbindungsmittel 100.

Die Speichervorrichtung 218 kann vorzugsweise vor dem Einbauen, während des Einbauens oder nach dem Einbauen der Verbindungselemente 130 in die Bauteile 102, 104 geladen werden. Insbesondere kann das Blockierelement 222 zu beliebigen Zeitpunkten vor der Verbindung der Bauteile 102, 104 miteinander in die in Fig. 29 dargestellte Blockierstellung gebracht werden.

Im Übrigen stimmt die in den Fig. 29 und 30 dargestellte siebte Ausführungsform des Verbindungsmittels 100 hinsichtlich Aufbau und Funktion mit der in den Fig. 23 bis 26 dargestellten fünften Ausführungsform überein, so dass auf deren vorstehende Beschreibung insoweit Bezug genommen wird.

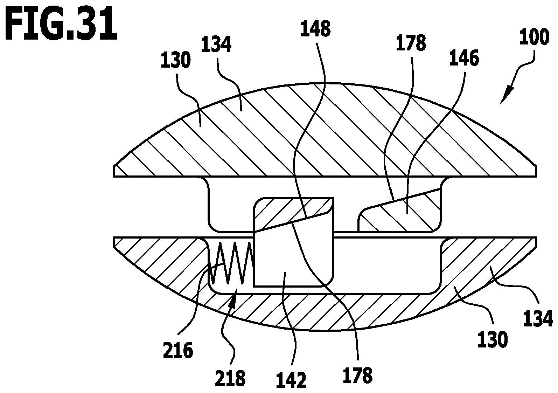

Eine in Fig. 31 dargestellte achte Ausführungsform eines Verbindungsmittels 100 unterscheidet sich von der in den Fig. 29 und 30 dargestellten siebten Ausführungsform im Wesentlichen dadurch, dass das Federelement 216 nicht unmittelbar an einem Eingriffsvorsprung 146 angreift, sondern einen Eingriffsabschnitt 148 eines im Wesentlichen linear bewegbaren Halteelements 142 betätigt.

Vorzugsweise kann auch bei der in Fig. 31 dargestellten achten Ausführungsform des Verbindungsmittels 100 die Speichervorrichtung 218 durch Spannen des Federelements 216 geladen werden, beispielsweise durch Arretieren des Halteelements 142 und/oder des Federelements 216 in einer vorgespannten Stellung.

Beim und/oder durch das Verbinden der Bauteile 102, 104 miteinander wird die gespeicherte Kraft und/oder Energie vorzugsweise freigegeben, um die Verbindungselemente 130 relativ zueinander festzulegen, insbesondere durch Hintergreifen der Eingriffsvorsprünge 146 mit dem Eingriffsabschnitt 148 des Halteelements 142.

Im Übrigen stimmt die in Fig. 31 dargestellte achte Ausführungsform des Verbindungsmittels 100 hinsichtlich Aufbau und Funktion mit der in den Fig. 29 und 30 dargestellten siebten Ausführungsform überein, so dass auf deren vorstehende Beschreibung insoweit Bezug genommen wird.

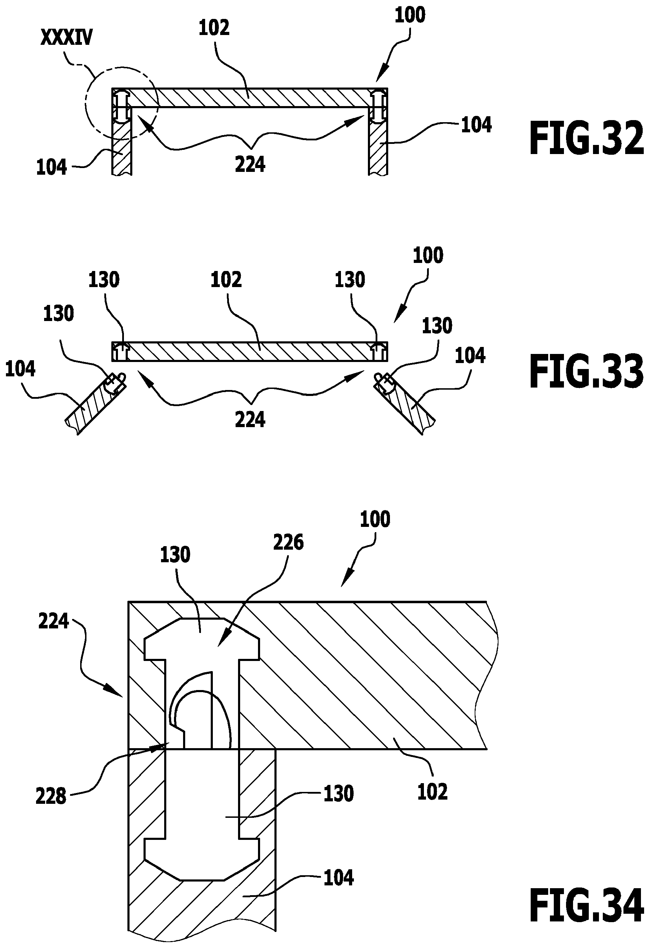

Eine in den Fig. 32 bis 34 dargestellte neunte Ausführungsform eines Verbindungsmittels 100 unterscheidet sich von der in den Fig. 23 bis 26 dargestellten fünften Ausführungsform eines Verbindungsmittels 100 im Wesentlichen dadurch, dass die Verbindungselemente 130, welche in eine Nut 110 einschiebbare Verbindungselemente 130 sind, eine Nut-Feder-Vorrichtung 224 umfassen.

Die Nut-Feder-Vorrichtung 224 ist insbesondere durch einen Nut-Teil 226 und einen Feder-Teil 228 gebildet.

Der Nut-Teil 226 und der Feder-Teil 228 sind dabei an voneinander verschiedenen Verbindungselementen 130 angeordnet und/oder ausgebildet.

Wie insbesondere den Fig. 32 und 33 zu entnehmen ist, sind die Verbindungselemente 130, insbesondere der Nut-Teil 226 und der Feder-Teil 228, durch Einschieben und Verschwenken der Verbindungselemente 130 und/oder der Bauteile 102, 104 relativ zueinander miteinander in Eingriff bringbar.

Die Nut-Feder-Vorrichtung 224 dient dabei insbesondere zur klebefreien Verankerung des einen Bauteils 102 an dem weiteren Bauteil 104.

Die Nut-Feder-Vorrichtung 224 funktioniert dabei vorzugsweise ähnlich der Verrastung bei Bodenelementen eines Klick-Parkettbodens oder Klick-Laminatbodens.

Die in den Fig. 32 bis 34 dargestellte neunte Ausführungsform eines Verbindungsmittels 100 eignet sich insbesondere zur Verbindung von Schubladenfronten mit Schubladenkästen.

Im Übrigen stimmt die in den Fig. 32 bis 34 dargestellte neunte Ausführungsform eines Verbindungsmittels 100 hinsichtlich Aufbau und Funktion mit der in den Fig. 23 bis 26 dargestellten fünften Ausführungsform überein, so dass auf deren vorstehende Beschreibung insoweit Bezug genommen wird.

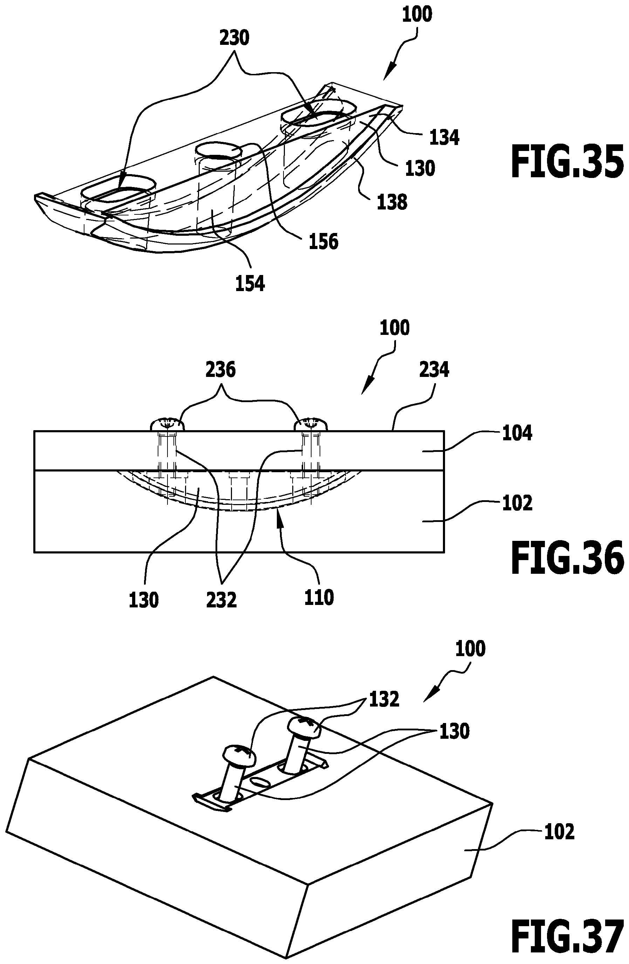

Eine in den Fig. 35 bis 37 dargestellte zehnte Ausführungsform eines Verbindungsmittels 100 unterscheidet sich von der in den Fig. 5 bis 9 dargestellten ersten Ausführungsform im Wesentlichen dadurch, dass ein in eine Nut 110 einschiebbares Verbindungselement 130 vorgesehen ist, welches eine oder mehrere Schraubaufnahmen 230 umfasst.

In den Schraubaufnahmen 230 sind als Schraubelemente 132 ausgebildete Verbindungselemente 130 formschlüssig und/oder kraftschlüssig lösbar festlegbar.

Zur Verankerung des Verbindungselements 130 in dem Bauteil 102, in welchem die Nut 110 angeordnet ist, umfasst das Verbindungselement 130 eine Durchtrittsöffnung 154 entsprechend der in den Fig. 5 bis 9 dargestellten ersten Ausführungsform des Verbindungsmittels 100. Das Verbindungselement 130 ist somit insbesondere mittels einer (nicht dargestellten) Schraube 162 (siehe beispielsweise Fig. 13) an dem ersten Bauteil 102 festlegbar.

Die als Schraubelemente 132 ausgebildeten Verbindungselemente 130 sind bei der in den Fig. 35 bis 37 dargestellten zehnten Ausführungsform des Verbindungsmittels 100 durch Durchtrittsöffnungen 232 in dem zweiten Bauteil 104 hindurchführbar.

Das in die Nut 110 einschiebbare Verbindungselement 130, insbesondere die Schraubaufnahmen 230, sind somit von einer dem ersten Bauteil 102 abgewandten Seite 234 des zweiten Bauteils 104 her zugänglich.

Das zweite Bauteil 104 kann somit durch Verschrauben der Schraubelemente 132 mit dem in die Nut 110 einschiebbaren Verbindungselement 130 zwischen Schraubenköpfe 236 der Schraubelemente 132 und das in die Nut einschiebbare Verbindungselement 130 eingespannt und/oder eingeklemmt werden.

Die Schraubaufnahmen 230 sind beispielsweise Gewindebohrungen oder Langlöcher mit einem Muttergewinde. Alternativ hierzu kann vorgesehen sein, dass die Schraubaufnahmen 230 nachgiebige Aufnahmen für gewindeschneidende Schrauben sind.

Vorzugsweise sind die Schraubaufnahmen 230 als Langlöcher ausgebildete Aufnahmen für gewindeschneidende Schrauben.

Die in den Fig. 35 bis 37 dargestellte zehnte Ausführungsform des Verbindungsmittels 100 eignet sich insbesondere als Befestigungsanker in dünnwandigen, ausrissschwachen Materialen, beispielsweise ähnlich einem Dübel zum Festlegen von Schrauben.

Im Übrigen stimmt die in den Fig. 35 bis 37 dargestellte zehnte Ausführungsform eines Verbindungsmittels 100 hinsichtlich Aufbau und Funktion mit der in den Fig. 5 bis 9 dargestellten ersten Ausführungsform überein, so dass auf deren vorstehende Beschreibung insoweit Bezug genommen wird.

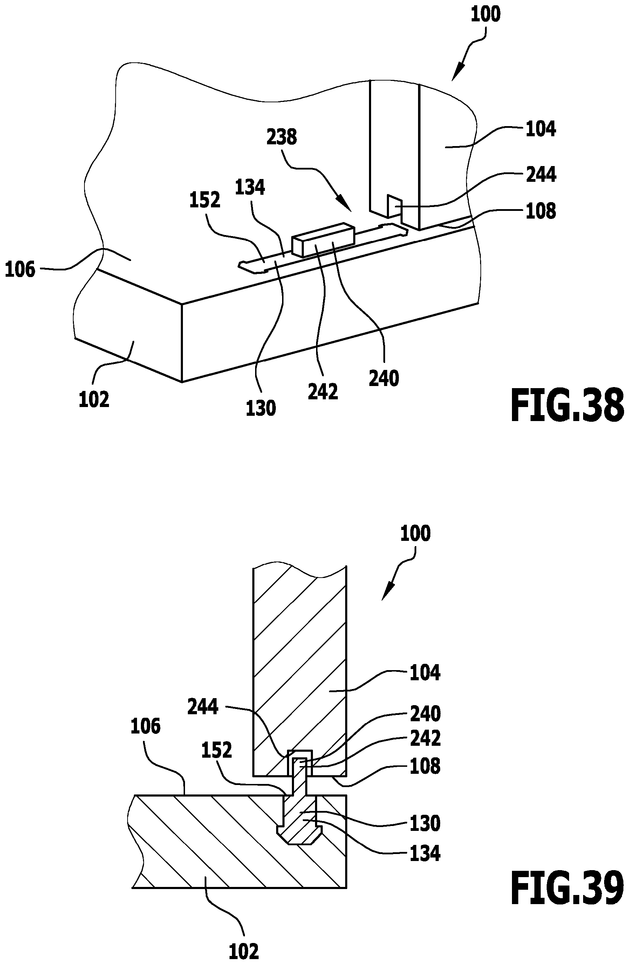

Eine in den Fig. 38 und 39 dargestellte elfte Ausführungsform eines Verbindungsmittels 100 unterscheidet sich von den vorstehend beschriebenen Ausführungsformen im Wesentlichen dadurch, dass das Verbindungsmittel 100 auch im montierten und verbundenen Zustand der Bauteile 102, 104 und des Verbindungsmittels 100 eine Relativbewegung der Bauteile 102, 104 relativ zueinander zulässt.

Mittels des Verbindungsmittels 100 ist dabei eine Führungsvorrichtung 238 gebildet, mittels welcher die Bauteile 102, 104 geführt relativ zueinander bewegbar sind.

Das Verbindungsmittel 100 umfasst dabei mindestens ein Verbindungselement 130, welches ein in eine Nut 110 einschiebbares Verbindungselement 130 ist.

Dieses Verbindungselement 130 umfasst vorzugsweise ein Führungselement 240, beispielsweise einen Führungsvorsprung 242, welcher im montierten Zustand des Verbindungselements 130 über die Anlagefläche 152 des Grundkörpers 134 des Verbindungselements 130 und über die Kontaktfläche 106 des Bauteils 102, in welchem das Verbindungselement 130 angeordnet ist, hinausragt.

Das Führungselement 240 ist dabei beispielsweise im Wesentlichen quaderförmig ausgebildet.

Das weitere Bauteil 104 umfasst vorzugsweise eine Führungsnut 244 zur Aufnahme des Führungselements 240.

Die Führungsnut 244 ist dabei beispielsweise in ein Verbindungselement 130 oder in das Bauteil 104 selbst integriert.

Bei der in den Fig. 38 und 39 dargestellten elften Ausführungsform des Verbindungsmittels 100 ist die Führungsnut 244 in dem Bauteil 104 ausgebildet, insbesondere in Form einer im Wesentlichen quaderförmigen Vertiefung in der Seite des Bauteils 104, an welcher die Kontaktfläche 108 angeordnet ist.

Wie insbesondere Fig. 39 zu entnehmen ist, kann im montierten Zustand des Verbindungsmittels 100 und der Bauteile 102, 104 ein unerwünschtes seitliches Verschieben der Bauteile 102, 104 in einer quer zur Längserstreckungsrichtung der Führungsnut 244 verlaufenden Richtung verhindert werden.

Eine Verschiebung der Bauteile 102, 104 relativ zueinander längs der Längserstreckungsrichtung der Führungsnut 244 ist dabei jedoch möglich.

Die in den Fig. 38 und 39 dargestellte elfte Ausführungsform des Verbindungsmittels 100 eignet sich insbesondere zur Verwendung als Schiebetürbeschlag, beispielsweise an einem unteren Ende einer Schiebetür.

Im Übrigen stimmt die in den Fig. 38 und 39 dargestellte elfte Ausführungsform eines Verbindungsmittels 100 hinsichtlich Aufbau und Funktion mit beispielsweise der in den Fig. 18 bis 22 dargestellten vierten Ausführungsform überein, so dass auf deren vorstehende Beschreibung insoweit Bezug genommen wird.

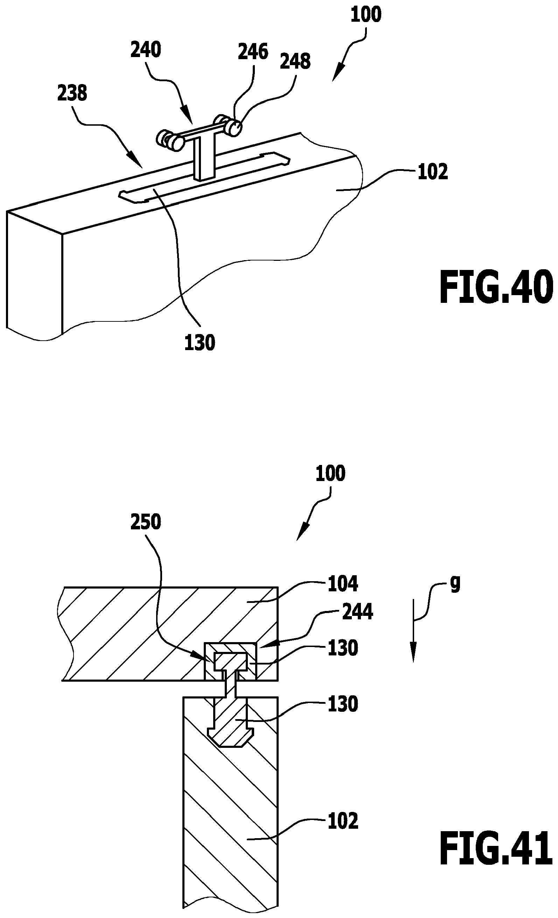

Eine in den Fig. 40 und 41 dargestellte zwölfte Ausführungsform eines Verbindungsmittels 100 unterscheidet sich von der in den Fig. 38 und 39 dargestellten elften Ausführungsform im Wesentlichen dadurch, dass das Führungselement 240 ein oder mehrere Lagerelemente 246 zur verschiebbaren Lagerung der Bauteile 102, 104 relativ zueinander umfasst.

Die Lagerelemente 246 sind insbesondere als Rollenelemente 248 ausgebildet.

Beispielsweise sind zwei Paare von Rollenelementen 248 vorgesehen.

Die Führungsnut 244 ist bei der in den Fig. 40 und 41 dargestellten zwölften Ausführungsform des Verbindungsmittels 100 durch ein Verbindungselement 130 gebildet, welches in einem der Bauteile 102, 104 angeordnet ist.

Die Führungsnut 244 umfasst dabei vorzugsweise einen Führungsabschnitt 250, an welchem das Führungselement 240, insbesondere die Lagerelemente 246 des Führungselements 240, die Führungsnut 244 hintergreifen können.

Die Führungsnut 244 ist beispielsweise bezüglich der Schwerkraftrichtung g nach unten hin geöffnet, so dass das das Führungselement 240 umfassende Verbindungselement 130 zusammen mit dem Bauteil 102, an welchem das Verbindungselement 130 angeordnet ist, in die Führungsnut 244 eingehängt werden kann.

Ein solches Verbindungsmittel 100 kann dann insbesondere als Aufhängung für eine Schiebetür verwendet werden.

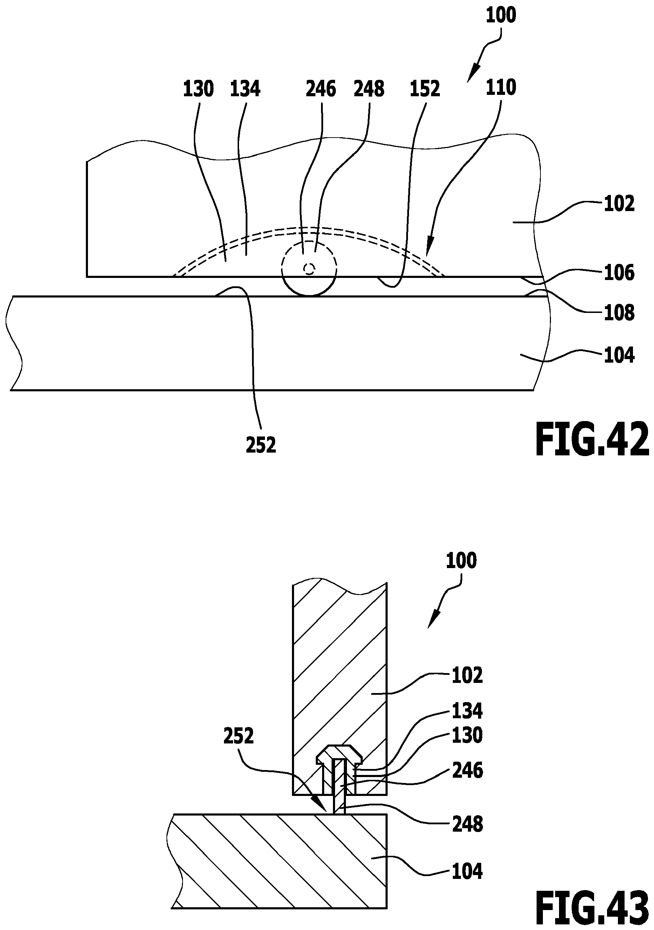

Im Übrigen stimmt die in den Fig. 40 und 41 dargestellte zwölfte Ausführungsform eines Verbindungsmittels 100 hinsichtlich Aufbau und Funktion mit der in den Fig. 38 und 39 dargestellten elften Ausführungsform überein, so dass auf deren vorstehende Beschreibung insoweit Bezug genommen wird. Eine in den Fig. 42 und 43 dargestellte dreizehnte Ausführungsform eines Verbindungsmittels 100 unterscheidet sich von der in den Fig. 40 und 41 dargestellten zwölften Ausführungsform im Wesentlichen dadurch, dass ein als Rollenelement 248 ausgebildetes Lagerelement 246 an dem Grundkörper 134 des Verbindungselements 130 angeordnet ist.

Auch dieses Verbindungselement 130 ist vorzugsweise in eine Nut 110 einschiebbar.

Das Lagerelement 246 ragt vorzugsweise über die Anlagefläche 152 des Grundkörpers 134 und über eine Kontaktfläche 106 des Bauteils 102, in welchem das Verbindungselement 130 angeordnet ist, hinaus.

Das als Rollenelement 248 ausgebildete Lagerelement 246 ist insbesondere drehbar an dem Grundkörper 134 gelagert und kann beispielsweise an einer Lauffläche 252 abrollen.

Die Lauffläche 252 ist beispielsweise an einem weiteren Bauteil 104 angeordnet oder durch das weitere Bauteil 104 gebildet.

Die Lauffläche 252 kann somit beispielsweise ein Verbindungselement 130 des Verbindungsmittels 100 bilden.

Vorteilhaft kann es sein, wenn die Lauffläche 252 durch eine Kontaktfläche 108 des weiteren Bauteils 104 gebildet ist.

Im montierten Zustand des Verbindungsmittels 100 und der Bauteile 102, 104 liegt das Lagerelement 246 vorzugsweise an der Lauffläche 252 an und ist längs der Lauffläche 252 bewegbar. Somit sind auch die Bauteile 102, 104 relativ zueinander bewegbar.

Im Übrigen stimmt die in den Fig. 42 und 43 dargestellte dreizehnte Ausführungsform eines Verbindungsmittels 100 hinsichtlich Aufbau und Funktion mit der in den Fig. 40 und 41 dargestellten zwölften Ausführungsform überein, so dass auf deren vorstehende Beschreibung insoweit Bezug genommen wird.

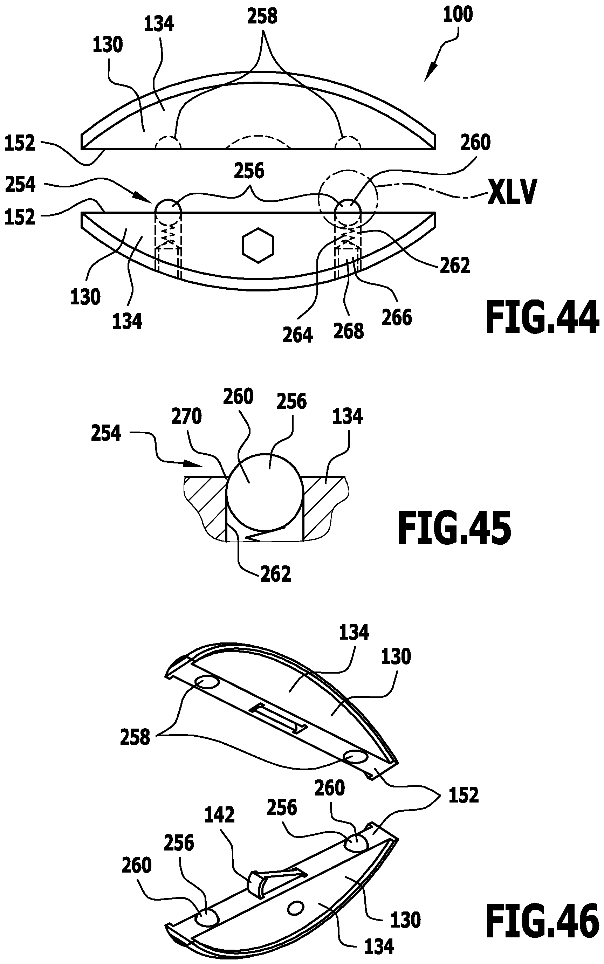

Eine in den Fig. 44 bis 46 dargestellte vierzehnte Ausführungsform eines Verbindungsmittels 100 unterscheidet sich von der in den Fig. 23 bis 26 dargestellten fünften Ausführungsform im Wesentlichen dadurch, dass die Verbindung der Verbindungselemente 130 miteinander mittels eines drehbaren Halteelements 142 entsprechend der in den Fig. 10 bis 15 dargestellten zweiten Ausführungsform herstellbar ist.

Zudem sind bei der in den Fig. 44 bis 46 dargestellten Ausführungsform des Verbindungsmittels 100 keine festen Einsteckvorsprünge 166 vorgesehen.

Das Verbindungsmittel 100 umfasst vielmehr eine Positioniervorrichtung 254 zur Positionierung der Bauteile 102, 104, insbesondere der Verbindungselemente 130, relativ zueinander.

Die Positioniervorrichtung 254 umfasst ein oder mehrere Positionierelemente 256 und ein oder mehrere Positionierelementaufnahmen 258.

Die Positionierelemente 256 sind vorzugsweise beweglich, nachgiebig, elastisch und/oder federnd gelagert.

Bei der in den Fig. 44 bis 46 dargestellten Ausführungsform eines Verbindungsmittels 100 sind zwei als Stahlkugeln 260 ausgebildete Positionierelemente 256 vorgesehen, welche innerhalb jeweils einer Durchtrittsöffnung 262 verschiebbar an einem der Verbindungselemente 130 angeordnet sind.

In den Durchtrittsöffnungen 262 sind zudem jeweils ein Federelement 264 und ein Verschlusselement 266, beispielsweise eine Madenschraube 268, angeordnet.

Zur Anlagefläche 152 des Grundkörpers 134 hin ist die mindestens eine Durchtrittsöffnung 262 verjüngt ausgebildet, so dass ein oder mehrere Haltevorsprünge 270 gebildet sind.

Mittels der Haltevorsprünge 270 kann ein unerwünschtes Entweichen eines Positionierelements 256, insbesondere einer Stahlkugel 260, aus der Durchtrittsöffnung 262 vorzugsweise verhindert werden.

Mittels des Verschlusselements 266 ist ein Entweichen des Positionierelements 256 an einem der Anlagefläche 152 gegenüberliegenden Ende der Durchtrittsöffnung 262 verhindert.

Das Federelement 264 ist zwischen dem Verschlusselement 266 und dem Positionierelement 256 angeordnet. Auf diese Weise ist das Positionierelement 256 vorzugsweise federnd nachgiebig in einer Positionierstellung haltbar.

In dieser Positionierstellung ragt das Positionierelement 256 über die Anlagefläche 152 hinaus.

Eine oder mehrere Positionierelementaufnahmen 258 sind vorzugsweise zumindest abschnittsweise komplementär zu dem einen oder den mehreren Positionierelementen 256 ausgebildet. Insbesondere sind die Positionierelementaufnahmen 258 komplementär zu den über die Anlagefläche 152 hinausstehenden Abschnitten der Positionierelemente 256 in der Positionierstellung derselben ausgebildet.

Durch die federnd nachgiebige Lagerung der Positionierelemente 256 können diese in den Grundkörper 134 hineinbewegt werden, insbesondere um die Verbindungselemente 130 und die Bauteile 102, 104 relativ zueinander verschieben zu können, während die Anlageflächen 152 und/oder die Kontaktflächen 106, 108 aneinander anliegen.

Sobald die Verbindungselemente 130 in einer gewünschten Position angeordnet sind, in welcher die Positionierelemente 256 den Positionierelementaufnahmen 258 gegenüberliegend angeordnet sind, werden die Positionierelemente 256 mittels der Federelemente 264 automatisch in die Positionierelementaufnahmen 258 bewegt.

Auf diese Weise kann eine einfache Positionierung der Bauteile 102, 104 relativ zueinander erfolgen. Zudem können die Bauteile 102, 104 hierdurch miteinander verrastet werden, um beispielsweise die Betätigung des Halteelements 142 zur stabilen Verbindung der Bauteile 102, 104 miteinander zu erleichtern.

Insbesondere zur Verleimung von Bauteilen 102, 104 miteinander kann auch vorgesehen sein, dass das Verbindungsmittel 100 ausschließlich eine Positioniervorrichtung 254 und kein Halteelement 142 umfasst.

Die in den Fig. 44 bis 46 dargestellte vierzehnte Ausführungsform eines Verbindungsmittels 100 eignet sich insbesondere zur Montage von eingeschobenen Regalböden, Trennwänden, Rückwänden, Schrankelementen, etc.

Ferner kann das Verbindungsmittel 100 als Verleimhilfe an Stellen verwendet werden, an welchen kein Druck aufgebracht werden kann und an welchen ein Einschieben oder sonstiges In-Eingriff-Bringen zweier Verbindungselemente 130 miteinander unmöglich ist.

Im Übrigen stimmt die in den Fig. 44 bis 46 dargestellte vierzehnte Ausführungsform des Verbindungsmittels 100 hinsichtlich Aufbau und Funktion mit der in den Fig. 23 bis 26 dargestellten fünften Ausführungsform überein, so dass auf deren vorstehende Beschreibung insoweit Bezug genommen wird.

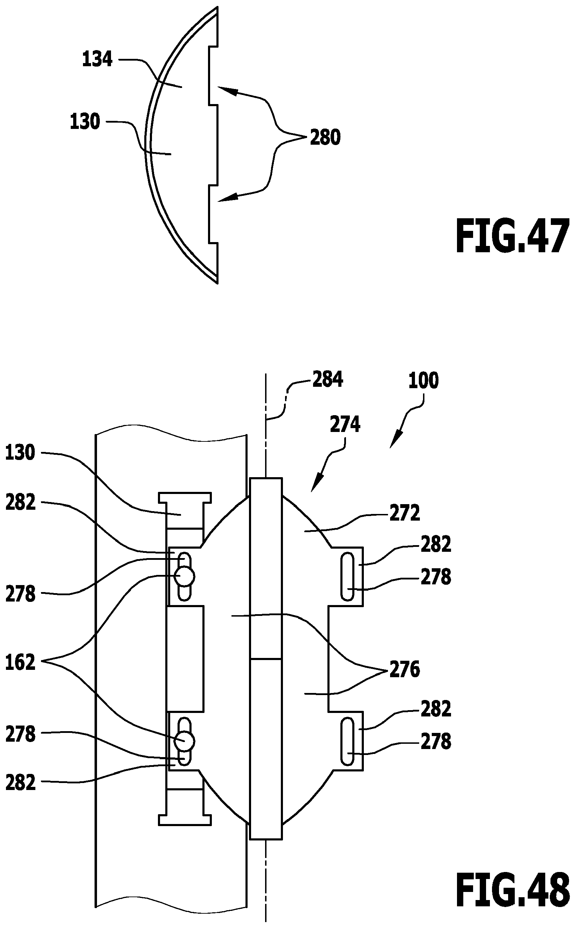

Eine in den Fig. 47 bis 49 dargestellte fünfzehnte Ausführungsform eines Verbindungsmittels 100 unterscheidet sich von der in den Fig. 32 bis 34 dargestellten neunten Ausführungsform im Wesentlichen dadurch, dass die Verbindungselemente 130 und somit auch die Bauteile 102, 104 mittels eines Scharnierelements 272 einer Scharniervorrichtung 274 miteinander verbindbar oder verbunden sind.

Dabei sind zwei in jeweils eine Nut 110 an einem der Bauteile 102, 104 einschiebbare Verbindungselemente 130 vorgesehen.

Jedes der Verbindungselemente 130 umfasst zwei Schraubaufnahmen 230 zur Aufnahme von Schrauben 162.

Das Scharnierelement 272 umfasst zwei relativ zueinander schwenkbare Abschnitte 276.

Jeder der Abschnitte 276 umfasst zwei Langlöcher 278 zur Durchführung der Schrauben 162 und zur Festlegung des jeweiligen Abschnitts 276 an jeweils einem der Verbindungselemente 130.

Zur einfachen und/oder ästhetisch ansprechenden Montage des Scharnierelements 272 an den Verbindungselementen 130 können Vertiefungen 280 in den Verbindungselementen 130 vorgesehen sein.

In diesen Vertiefungen 280 sind insbesondere vorstehende Laschen 282 der Abschnitte 276 des Scharnierelements 272 aufnehmbar.

In diesen Laschen 282 sind vorzugsweise die Langlöcher 278 angeordnet und/oder ausgebildet.

Das Scharnierelement 272 kann beispielsweise ein metallisches Bauteil sein oder aus metallischen Bauteilen gebildet sein.

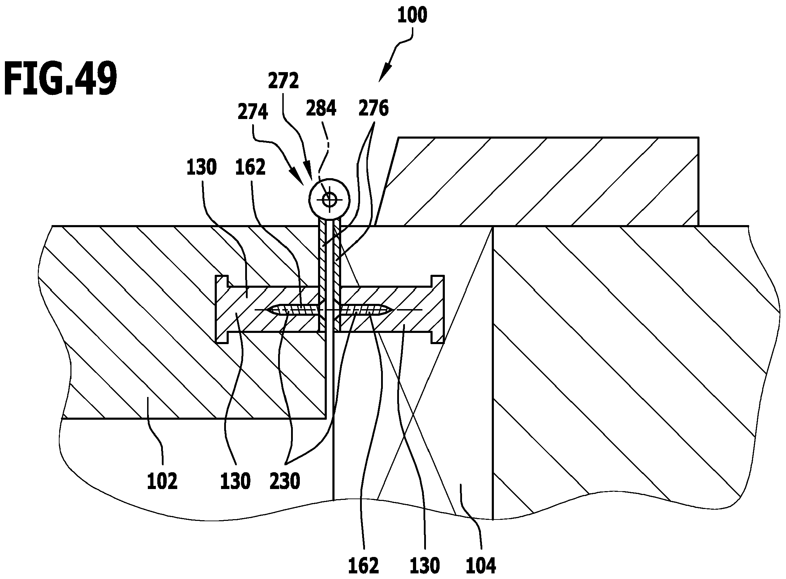

Wie insbesondere Fig. 49 zu entnehmen ist, sind die Verbindungselemente 130 und die Bauteile 102, 104 mittels des Scharnierelements 272 um eine Schwenkachse 284 schwenkbar.

Die in den Fig. 47 bis 49 dargestellte fünfzehnte Ausführungsform eines Verbindungsmittels 100 eignet sich insbesondere zur Verwendung als Türscharnier.

Im Übrigen stimmt die in den Fig. 47 bis 49 dargestellte fünfzehnte Ausführungsform eines Verbindungsmittels 100 hinsichtlich Aufbau und Funktion mit der in den Fig. 32 bis 34 dargestellten neunten Ausführungsform überein, so dass auf deren vorstehende Beschreibung insoweit Bezug genommen wird.

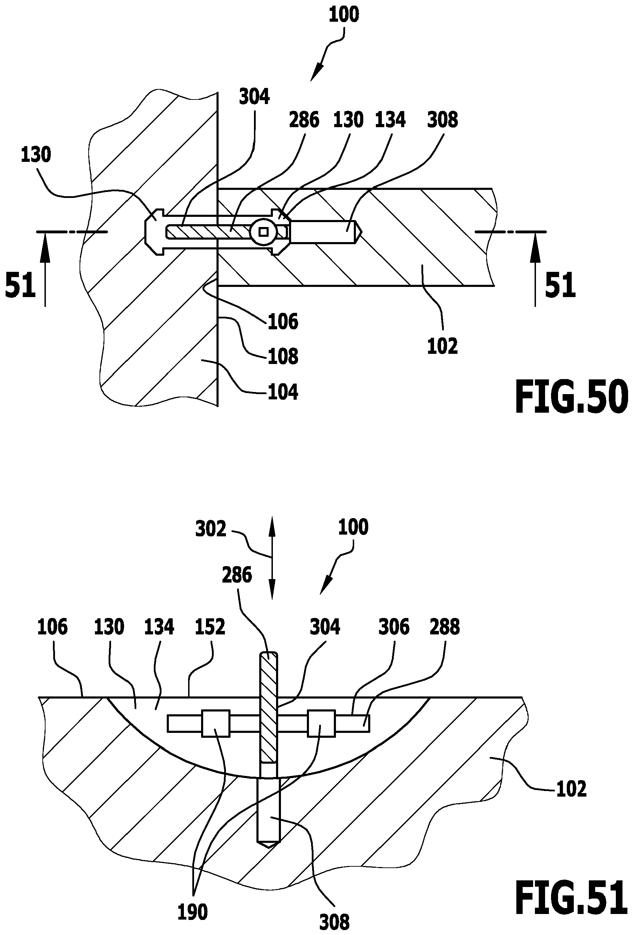

Eine in den Fig. 50 bis 53 dargestellte sechzehnte Ausführungsform eines Verbindungsmittels 100 unterscheidet sich von der in den Fig. 27 und 28 dargestellten sechsten Ausführungsform im Wesentlichen dadurch, dass anstelle einer Schraubverbindung zur Verbindung der zwei Verbindungselemente 130 miteinander eine Verriegelung vorgesehen ist.

Das Verbindungsmittel 100 umfasst hierzu ein bewegbares, insbesondere linear verschiebbares, Riegelelement 286.

Das Riegelelement 286 ist Bestandteil eines in eine Nut 110 einschiebbaren Verbindungselements 130, welches zusätzlich zu dem Grundkörper 134 und dem Riegelelement 286 eine Antriebswelle 288 und ein oder mehrere Magnetelemente 190 zum Antreiben der Antriebswelle 288 umfasst.

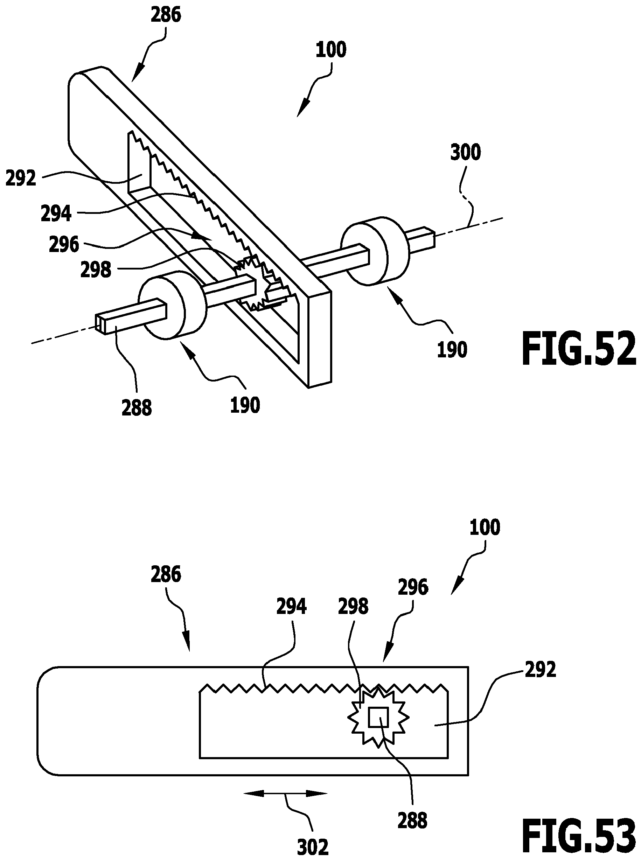

Wie insbesondere den Fig. 52 und 53 zu entnehmen ist, weist das Riegelelement 286 eine Öffnung 292 auf, welche im Wesentlichen quaderförmig ausgebildet ist und einseitig einen Zahnstangenabschnitt 294 einer Zahnradvorrichtung 296 umfasst.

Der Zahnstangenabschnitt 294 ist insbesondere mit einem Zahnrad 298 der Zahnradvorrichtung 296, welches auf der Antriebswelle 288 angeordnet ist, in Eingriff.

Auch die Magnetelemente 190 sind auf der Antriebswelle 288 angeordnet, so dass die Antriebswelle 288 zusammen mit dem Zahnrad 298 mittels der Magnetelemente 190 um eine Drehachse 300 drehbar ist, insbesondere durch externe berührungslose Betätigung mittels einer Magnetvorrichtung.

Aufgrund der Kopplung des Zahnrads 298 mit dem Zahnstangenabschnitt 294 des Riegelelements 286 ist durch Drehung der Antriebswelle 288 das Riegelelement 286 linear verschiebbar, insbesondere längs einer Verriegelungsrichtung 302.

Die Verriegelungsrichtung 302 ist insbesondere im Wesentlichen senkrecht zur Anlagefläche 152 und/oder zur Kontaktfläche 106, 108 von zumindest einem der Bauteile 102, 104.

Das Riegelelement 286 ist linear verschiebbar in einer im Wesentlichen komplementär hierzu ausgebildeten Riegelelementaufnahme 304 des Grundkörpers 134 aufnehmbar oder aufgenommen.

Die Antriebswelle 288 samt der Magnetelemente 190 und des Zahnrads 298 ist in einer Wellenaufnahme 306 des Grundkörpers 134 des Verbindungselements 130 aufnehmbar oder aufgenommen.

Das Riegelelement 286 ist vorzugsweise längs der Verriegelungsrichtung 302 soweit in den Grundkörper 134 bewegbar, dass das Riegelelement 286 nicht mehr über die Anlagefläche 152 und/oder die Kontaktfläche 106, 108 mindestens eines Bauteils 102, 104 hervorsteht.

In dieser Position kann es jedoch sein, dass das Riegelelement 286 an einem der Anlagefläche 152 des Grundkörpers 134 gegenüberliegenden Ende der Riegelelementaufnahme 304 über den Grundkörper 134 hinausragt.

Diese Position des Riegelelements 286 kann somit nur dann realisiert werden, wenn der Grundkörper 134 groß genug dimensioniert ist, um das gesamte Riegelelement 286 aufzunehmen, oder wenn das Bauteil 102, in welchem das das Riegelelement 286 aufweisende Verbindungselement 130 angeordnet ist, mit einer sich an die Riegelelementaufnahme 304 in der Verriegelungsrichtung 302 anschließenden Ausnehmung 308 versehen ist (siehe Fig. 51).

Zur Verriegelung zweier Bauteile 102, 104 miteinander mittels des Verbindungsmittels 100 ist das Riegelelement 286 beispielsweise in die in den Fig. 50 und 51 dargestellte Verriegelungsstellung bringbar, in welcher das Riegelelement 286 über die Anlagefläche 152 des Verbindungselements 130 und über die Kontaktfläche 106 des Bauteils 102 hinausragt.

Das Riegelelement 286 erstreckt sich dann beispielsweise in eine Riegelelementaufnahme 304 eines weiteren Verbindungselements 130, welches in dem weiteren Bauteil 104 angeordnet ist. Alternativ oder ergänzend hierzu kann vorgesehen sein, dass das weitere Bauteil 104 lediglich eine Ausnehmung 308 zur Aufnahme des Riegelelements 286 umfasst.

Zur Optimierung einer Drehmomentübertragung von den Magnetelementen 190 auf die Antriebswelle 288 und/oder das Zahnrad 298 ist insbesondere eine Antriebswelle 288 mit nicht rotationssymmetrischem Querschnitt, beispielsweise mit rechteckigem Querschnitt, vorgesehen. Die Magnetelemente 190 und das Zahnrad 298 weisen dann vorzugsweise hierzu korrespondierende Aufnahmen auf.

Die Antriebswelle 288 kann beispielsweise ein Stabmagnet sein.

Vorzugsweise sind die Magnetelemente 190, die Antriebswelle 288, das Zahnrad 298 und/oder der Zahnstangenabschnitt 294 des Riegelelements 286 so dimensioniert, ausgebildet und/oder angeordnet, dass das Riegelelement 286 durch eine Drehung der Antriebswelle 288 um 180° aus einer Haltestellung in eine Freigabestellung, insbesondere aus einer Verriegelungsstellung in eine Freigabestellung, bringbar ist.

Durch Anlegen eines Magnets an unterschiedliche Seitenflächen des Bauteils 102 kann das Riegelelement 286 dann besonders einfach in die gewünschten unterschiedlichen Stellungen gebracht werden.

Die in den Fig. 50 bis 53 dargestellte sechzehnte Ausführungsform des Verbindungsmittels 100 eignet sich insbesondere zur Verwendung als Möbelschloss, als Tablarverbinder und/oder zur Wandpaneelenmontage.

Im Übrigen stimmt die in den Fig. 50 bis 53 dargestellte sechzehnte Ausführungsform des Verbindungsmittels 100 hinsichtlich Aufbau und Funktion mit der in den Fig. 27 und 28 dargestellten sechsten Ausführungsform überein, so dass auf deren vorstehende Beschreibung insoweit Bezug genommen wird.

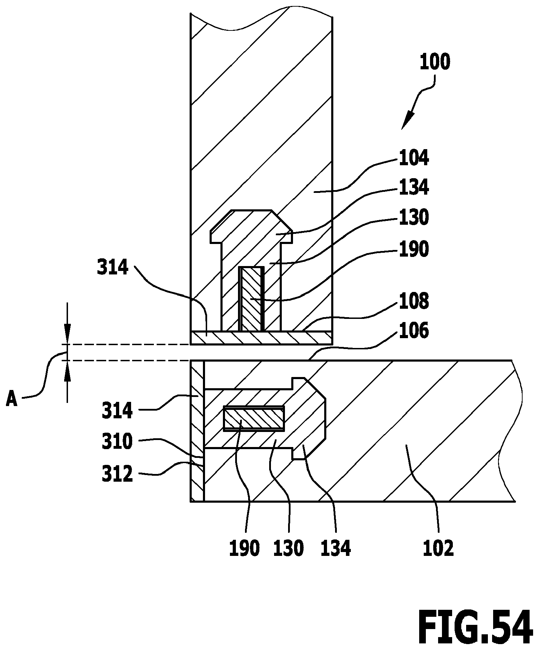

Eine in Fig. 54 dargestellte siebzehnte Ausführungsform eines Verbindungsmittels 100 unterscheidet sich von der in den Fig. 50 bis 53 dargestellten sechzehnten Ausführungsform im Wesentlichen dadurch, dass zwei Verbindungselemente 130 vorgesehen sind, welche jeweils mindestens ein Magnetelement 190 umfassen.

Das Magnetelement 190 kann dabei beispielsweise vollständig in den Grundkörper 134 eines Verbindungselements 130 integriert sein, insbesondere beabstandet von der Anlagefläche 152 des Grundkörpers 134 innerhalb des Grundkörpers 134 angeordnet sein.

Es kann jedoch auch vorgesehen sein, dass sich das Magnetelement 190 innerhalb des Grundkörpers 134 bis zu der Anlagefläche 152 erstreckt.

Bei der in Fig. 54 dargestellten siebzehnten Ausführungsform des Verbindungsmittels 100 erfolgt eine Verbindung der Verbindungselemente 130 und somit auch der Bauteile 102, 104 miteinander dadurch, dass die Magnetelemente 190 magnetisch miteinander wechselwirken, insbesondere dadurch, dass sich die Magnetelemente 190 anziehen.

Die Bauteile 102, 104 werden somit mittels der Verbindungsmittels 100 in eine Position gebracht, in welcher die Abstände der Magnetelemente 190 voneinander minimal sind.

Die Bauteile 102, 104 müssen dabei nicht zwangsweise miteinander in Kontakt sein, insbesondere nicht aneinander anliegen. Vielmehr kann vorgesehen sein, dass die Bauteile 102, 104 in einem beliebigen Abstand A voneinander angeordnet sind.

Die Verbindungselemente 130 des Verbindungsmittels 100 müssen ebenfalls nicht mechanisch miteinander in Eingriff gebracht werden.

Es ist daher nicht entscheidend, dass die Verbindungselemente 130 in Nuten 110 angeordnet sind, welche an die Kontaktflächen 106, 108 der Bauteile 102, 104 angrenzen.

Vielmehr kann vorgesehen sein, dass beispielsweise mindestens ein Verbindungselement 130 in einer Nut 110 angeordnet ist, welche an eine senkrecht zur Kontaktfläche 106 ausgerichtete Seitenfläche 310, beispielsweise eine Stirnfläche 312 des Bauteils 102, angrenzt.

Insbesondere zur ästhetisch ansprechenden Ausgestaltung der Bauteile 102, 104 kann vorgesehen sein, dass die Flächen 108, 310, in welchen die Nuten 110 und somit auch die Verbindungselemente 130 angeordnet sind, nach der Montage der Verbindungselemente 130 mit jeweils einem Abdeckelement 314 versehen werden.

Das Abdeckelement 314 kann beispielsweise eine Kante des Bauteils 102, 104 bilden.

Wie bereits bei vorhergehenden Ausführungsbeispielen ist unter einem Magnetelement 190 grundsätzlich ein magnetisch wechselwirkendes Element zu verstehen.

Die beiden Magnetelemente 190 müssen somit nicht zwingend beide magnetisiert sein. Vielmehr können beispielsweise ein magnetisiertes Magnetelement 190 und ein magnetisierbares Element, insbesondere ein Stahlelement, vorgesehen sein.

Die in Fig. 54 dargestellte siebzehnte Ausführungsform des Verbindungsmittels 100 eignet sich insbesondere zur Verwendung in oder an Möbeltüren und Büromöbeln mit unsichtbarem, schnell zu montierendem Schnäpper zur magnetischen Fixierung einer Tür.

Im Übrigen stimmt die in Fig. 54 dargestellte siebzehnte Ausführungsform eines Verbindungsmittels 100 hinsichtlich Aufbau und Funktion mit der in den Fig. 50 bis 53 dargestellten sechzehnten Ausführungsform überein, so dass auf deren vorstehende Beschreibung insoweit Bezug genommen wird.

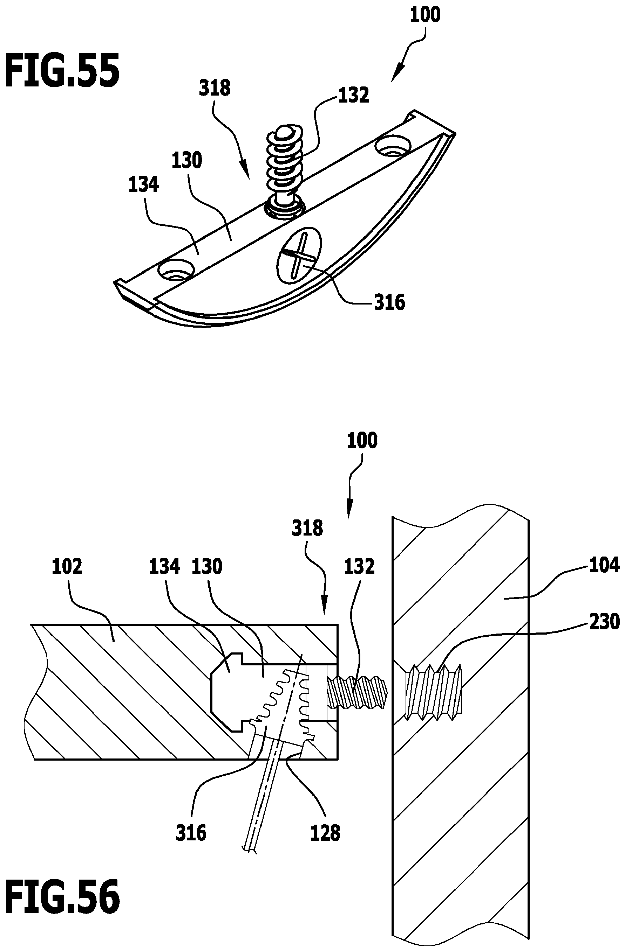

Eine in den Fig. 55 und 56 dargestellte achtzehnte Ausführungsform eines Verbindungsmittels 100 unterscheidet sich von der in den Fig. 5 bis 9 dargestellten ersten Ausführungsform im Wesentlichen dadurch, dass das Schraubelement 132 drehbar an dem Verbindungselement 130 angeordnet ist, welches in eine Nut 110 einschiebbar ist.

Anstelle eines drehbaren Halteelements 142 zum Ergreifen des Schraubelements 132 ist ein Betätigungselement 316 zum Betätigen des Schraubelements 132 vorgesehen.

Das Betätigungselement 316 und das Schraubelement 132 bilden dabei insbesondere eine winkelgetriebene Schraubvorrichtung 318.

Wie insbesondere Fig. 56 zu entnehmen ist, ist die winkelgetriebene Schraubvorrichtung 318, insbesondere das Betätigungselement 316, seitlich durch eine Zugangsbohrung 128 in einem Bauteil 102 zugänglich. Das Schraubelement 132 kann einerseits ohne weitere Elemente direkt in das weitere Bauteil 104 eingeschraubt werden.

Es kann jedoch auch vorgesehen sein, dass das weitere Bauteil 104 eine Schraubaufnahme 230 umfasst, mit einer Schraubaufnahme 230 versehen ist oder mit einem eine Schraubaufnahme 230 versehenen Verbindungselement 130, welches in einer Nut 110 in dem Bauteil 104 anordenbar ist, versehen ist.

Alternativ zu dem Betätigen eines Schraubelements 132 mittels des Betätigungselements 316 kann auch vorgesehen sein, dass mittels des Betätigungselements 316 eine Mutter betätigbar ist, um eine an dem weiteren Bauteil 104 angeordnete Schraube aufzunehmen.

Mittels derartiger Verbindungsmittel 100 können insbesondere Verbindungen mit Nicht-Holzmaterialien hergestellt werden. Ferner eignen sich diese Verbindungsmittel 100 zur Verwendung in oder als Tablarträger.

Im Übrigen stimmt die in den Fig. 55 und 56 dargestellte achtzehnte Ausführungsform eines Verbindungsmittels 100 hinsichtlich Aufbau und Funktion mit der in den Fig. 5 bis 9 dargestellten ersten Ausführungsform überein, so dass auf deren vorstehende Beschreibung insoweit Bezug genommen wird.

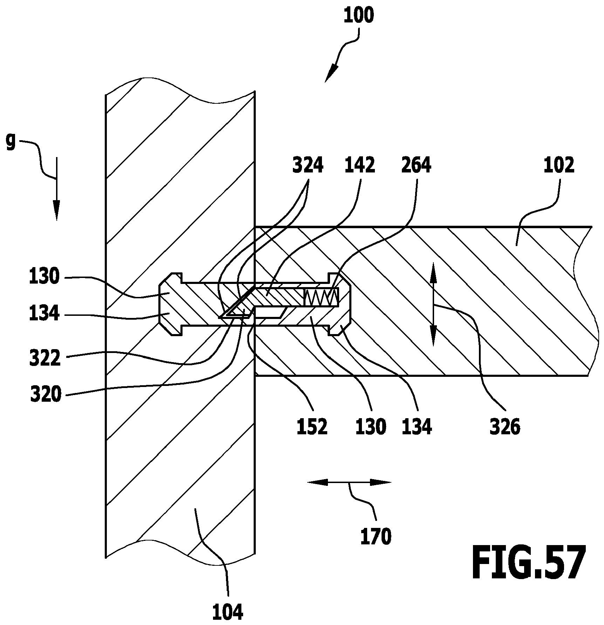

Eine in Fig. 57 dargestellte neunzehnte Ausführungsform eines Verbindungsmittels 100 unterscheidet sich von der in den Fig. 32 bis 34 dargestellten neunten Ausführungsform im Wesentlichen dadurch, dass eines der Verbindungselemente 130 ein bewegliches Halteelement 142 umfasst, welches als Rasthaken 320 ausgebildet ist.

Der Rasthaken 320 ist insbesondere mit einer Rastaufnahme 322 in Eingriff bringbar, welche an dem weiteren Verbindungselement 130 angeordnet ist.

Der Rasthaken 320 ist insbesondere mittels eines Federelements 264 federnd an dem einen Verbindungselement 130 angeordnet.

Insbesondere kann der Rasthaken 320 längs der Verbindungsrichtung 170 aus einer Raststellung (siehe Fig. 57), in welcher der Rasthaken 320 über die Anlagefläche 152 des Verbindungselements 130 hinausragt, in eine Freigabestellung gebracht werden, in welcher der Rasthaken 320 im Wesentlichen vollständig innerhalb des Grundkörpers 134 des Verbindungselements 130 angeordnet ist.

Der Rasthaken 320 und/oder die Rastaufnahme 322 ist vorzugsweise mit mindestens einer Schrägfläche 324 versehen.

Die Schrägfläche 324 ist insbesondere schräg zur Anlagefläche 152 und/oder zu den Kontaktflächen 106, 108 der Bauteile 102, 104 ausgerichtet.

Die Schrägflächen 324 ermöglichen dabei ein Einschieben des Rasthakens 320 in den Grundkörper 134, wenn die Bauteile 102, 104 und somit auch die Verbindungselemente 130 in einer parallel zur Anlagefläche 152 und/oder zu den Kontaktflächen 106, 108 verlaufenden Querrichtung 326 verschoben werden.

Dies ist vorzugsweise jedoch nur in einer einzigen Querrichtung 326 möglich.

Die Bauteile 102, 104 und die Verbindungselemente 130 sind dabei vorzugsweise so ausgebildet und/oder angeordnet, dass diese Querrichtung 326 zum Entrasten des Rasthakens 320 einer Schwerkraftrichtung g entgegengerichtet ist.

Bei einer Belastung des Bauteils 102 in einer parallel zur Schwerkraftrichtung g verlaufenden Querrichtung 326 verbleibt der Rasthaken 320 vorzugsweise in der Rastaufnahme 322, so dass eine zuverlässige und stabile Verbindung zwischen den Bauteilen 102, 104 gewährleistet ist.

Die in Fig. 57 dargestellte neunzehnte Ausführungsform eines Verbindungsmittels 100 eignet sich insbesondere zur Verwendung als Tablarträger.

Im Übrigen stimmt die in Fig. 57 dargestellte neunzehnte Ausführungsform eines Verbindungsmittels 100 hinsichtlich Aufbau und Funktion mit der in den Fig. 32 bis 34 dargestellten neunten Ausführungsform überein, so dass auf deren vorstehende Beschreibung insoweit Bezug genommen wird.

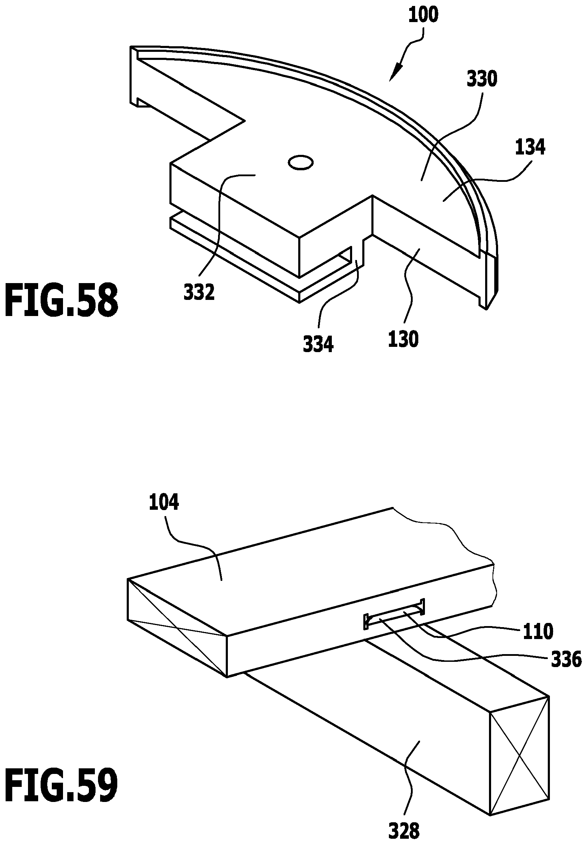

Eine in den Fig. 58 bis 60 dargestellte zwanzigste Ausführungsform eines Verbindungsmittels 100 unterscheidet sich von der in den Fig. 32 bis 34 dargestellten neunten Ausführungsform im Wesentlichen dadurch, dass das Verbindungsmittel 100 einerseits der Verbindung zweier Bauteile 102, 104 und andererseits der Verbindung der Bauteile 102, 104 mit einem oder mehreren weiteren Bauteilen, insbesondere mit einer Basiskonstruktion 328, dient.

Eine Basiskonstruktion 328 ist insbesondere eine Unterkonstruktion eines Bodenbelags oder einer Wandvertäfelung.

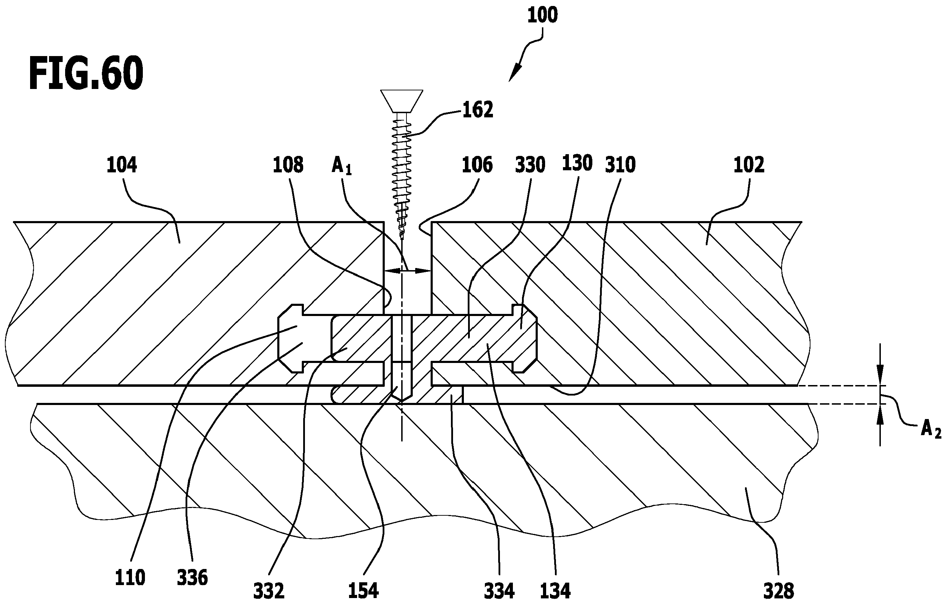

Wie insbesondere den Fig. 58 und 60 zu entnehmen ist, umfasst das Verbindungsmittel 100 ein Verbindungselement 130, welches in eine Nut 110 in einem der Bauteile 102, 104 einschiebbar ist.

Das Verbindungselement 130 ist beispielsweise einstückig ausgebildet und umfasst zusätzlich zu einem in die Nut 110 einbringbaren Teil 330 einen Vorsprung 332 sowie einen umgreifenden Abschnitt 334.

Der Vorsprung 332 dient insbesondere zur Anordnung und/oder Aufnahme des weiteren Bauteils 104.

Das weitere Bauteil 104 ist hierzu insbesondere mit einer Ausnehmung 336, beispielsweise einer Nut 110, auf den Vorsprung 332 aufschiebbar.

Der umgreifende Abschnitt 334 des Verbindungselements 130 umgreift das Bauteil 102 an einer quer, insbesondere im Wesentlichen senkrecht, zur Kontaktfläche 106 verlaufenden Seitenfläche 310.

Das Verbindungselement 130 umgibt das Bauteil 102 somit abschnittsweise im Wesentlichen C-förmig.

Der umgreifende Abschnitt 334 kann sich beispielsweise parallel zu dem Vorsprung 332 erstrecken, so dass auch das weitere Bauteil 104 im montierten Zustand desselben im Wesentlichen C-förmig von dem Verbindungselement 130 umgriffen ist.

Wie insbesondere Fig. 60 zu entnehmen ist, ist zwischen dem Vorsprung 332 und dem den Grundkörper 134 des Verbindungselements 130 bildenden Teil 330 des Verbindungselements 130 eine Durchtrittsöffnung 154 vorgesehen.

In diese Durchtrittsöffnung 154 ist eine Schraube 162 einbringbar, insbesondere um das Verbindungselement 130 samt des Bauteils 102 oder samt beider Bauteile 102, 104 an der Basiskonstruktion 328 festzulegen, insbesondere festzuschrauben.

Aufgrund des umgreifenden Abschnitts 334 des Verbindungselements 130 liegen ein oder mehrere Bauteile 102, 104 vorzugsweise nicht unmittelbar auf der Basiskonstruktion 328 auf.

Vielmehr ist mittels des umgreifenden Abschnitts 334 vorzugsweise ein Abstand A₂ zwischen dem einen oder den mehreren Bauteilen 102, 104 gebildet.

Ferner werden vorzugsweise auch die Bauteile 102, 104 mittels des Verbindungselements 130 in einem vorgegebenen Abstand A₁ voneinander gehalten.

Die in den Fig. 58 bis 60 dargestellte zwanzigste Ausführungsform des Verbindungsmittels 100 eignet sich insbesondere als Terrassenverbinder zur Verbindung von Brettern (Bauteile 102, 104) miteinander und mit einer Balkenkonstruktion (Basiskonstruktion 328).

Zur Montage kann dabei beispielsweise vorgesehen sein, dass ein Bauteil 102 mit einer oder mehreren Nuten 110 versehen wird.

Mindestens eine Nut 110 wird dann mit einem Verbindungselement 130 versehen, indem der den Grundkörper 134 bildende Teil 330 des Verbindungselements 130 in die Nut 110 eingeschoben wird.

Der umgreifende Abschnitt 334 des Verbindungselements 130 umgreift dabei das Bauteil 102 an dessen Seitenfläche 310.

In einem nächsten Schritt wird das Bauteil 102 zusammen mit dem Verbindungselement 130 auf die Basiskonstruktion 328 aufgelegt.

Insbesondere werden der umgreifende Abschnitt 334 des Verbindungselements 130 und die Basiskonstruktion 328 miteinander zur Anlage gebracht und mittels einer oder mehrerer Schrauben 162 miteinander verschraubt.

Ein weiteres Bauteil 104 wird dann dadurch an der Basiskonstruktion 328 festgelegt, dass es mit einer vorbereiteten Ausnehmung 336 oder Nut 110 auf den Vorsprung 332 des Verbindungselements 130 aufgeschoben wird.

An einer Seite des Bauteils 104, welche derjenigen Seite des Bauteils 104 gegenüber liegt, die der Aufnahme des Vorsprungs 332 dient, wird oder ist eine weitere Nut 110 vorgesehen, in welche wiederum ein weiteres Verbindungselement 130 eingebracht wird, um dieses zusammen mit dem weiteren Bauteil 104 an der Basiskonstruktion 328 festzulegen.

Zum Lösen der Verbindung müssen lediglich die Schrauben 162 entfernt werden.

Die Bauteile 102, 104 können dann vorzugsweise relativ zueinander verschoben werden, um einzelne Bauteile 102, 104 zu entfernen.

Im Übrigen stimmt die in den Fig. 58 bis 60 dargestellte zwanzigste Ausführungsform eines Verbindungsmittels 100 hinsichtlich Aufbau und Funktion mit der in den Fig. 32 bis 34 dargestellten neunten Ausführungsform überein, so dass auf deren vorstehende Beschreibung insoweit Bezug genommen wird.

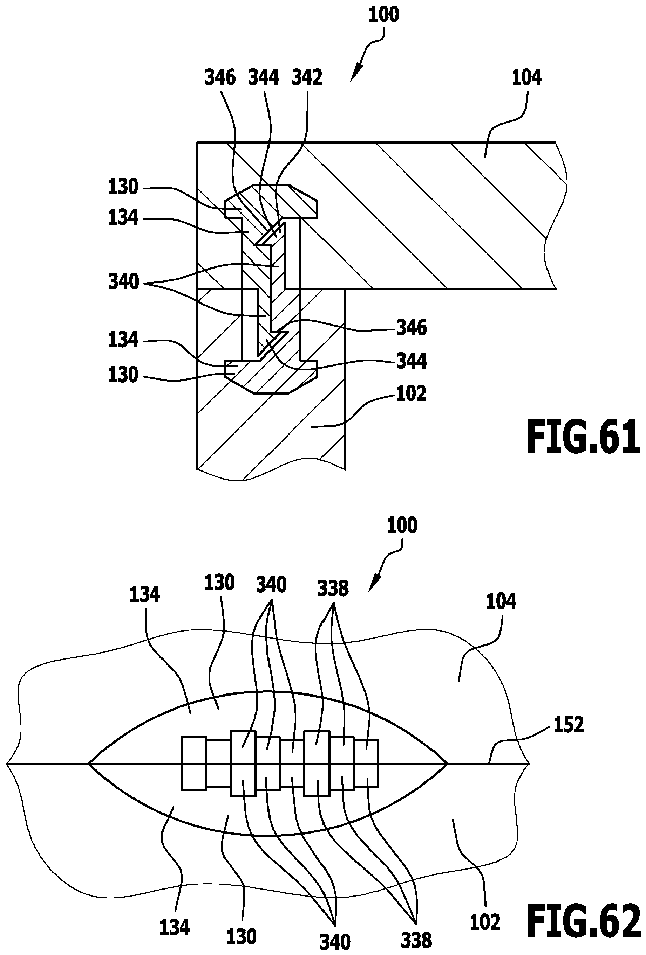

Eine in den Fig. 61 und 62 dargestellte einundzwanzigste Ausführungsform eines Verbindungsmittels 100 unterscheidet sich von der in den Fig. 32 bis 34 dargestellten neunten Ausführungsform im Wesentlichen dadurch, dass das Verbindungsmittel 100 mehrere Federelemente 338 oder Rastelemente 340 umfasst, mittels welchen die Verbindungselemente 130 und somit auch die Bauteile 102, 104 miteinander verbindbar, insbesondere verrastbar, sind.

Die Federelemente 338 oder Rastelemente 340 weisen dabei Federnasen 342 oder Rastnasen 344 auf, welche mit entsprechenden Aufnahmen 346 in Eingriff bringbar sind.

Zur vereinfachten Bezugnahme wird nachfolgend auf die Federelemente 338 und die Rastelemente 340 einheitlich als "Rastelemente 340" Bezug genommen.

Die Federnasen 342 und die Rastnasen 344 werden folglich einheitlich als "Rastnasen 344" bezeichnet.

Wie insbesondere Fig. 61 zu entnehmen ist, sind bei der in den Fig. 61 und 62 dargestellten einundzwanzigsten Ausführungsform eines Verbindungsmittels 100 beide Verbindungselemente 130 jeweils mit Rastelementen 340 und mit Aufnahmen 346 für die Rastnasen 344 der Rastelemente 340 versehen.

Die Rastelemente 340 und die Aufnahmen 346 sind dabei relativ zueinander so angeordnet, dass zwei Rastelemente 340 von unterschiedlichen Verbindungselementen 130 aneinander vorbeigeführt und mit der jeweils zugehörigen Aufnahme 346 in Eingriff gebracht werden können.

Wie insbesondere Fig. 62 zu entnehmen ist, kann beispielsweise vorgesehen sein, dass jedes Verbindungselement 130 jeweils acht Rastelemente 340 und acht Aufnahmen 346 umfasst.

Die Rastnasen 344 der Rastelemente 340 sind dabei vorzugsweise in unterschiedlichen Abständen von der Anlagefläche 152 des jeweiligen Verbindungselements 130 angeordnet. Hierdurch kann eine verbesserte Verrastung der Verbindungselemente 130 und somit eine verbesserte Verbindung der Bauteile 102, 104 ermöglicht werden.

Wie beispielsweise Fig. 61 zu entnehmen ist, sind benachbart zueinander angeordnete Rastelemente 340 vorzugsweise so ausgerichtet, dass die Rastnasen 344 der Rastelemente 340 in voneinander verschiedene Richtungen wegragen.

Zudem kann vorgesehen sein, dass jedes Verbindungselement 130 für sich genommen zwei oder mehr Rastelemente 340 umfasst, welche benachbart zueinander angeordnet sind, wobei unmittelbar aneinander angrenzende Rastelemente 340 vorzugsweise derart ausgebildet und/oder angeordnet sind, dass deren Rastnasen 344 in voneinander verschiedene Richtung wegragen.

Im Übrigen stimmt die in den Fig. 61 und 62 dargestellte einundzwanzigste Ausführungsform eines Verbindungsmittels 100 hinsichtlich Aufbau und Funktion mit der in den Fig. 32 bis 34 dargestellten neunten Ausführungsform überein, so dass auf deren vorstehende Beschreibung insoweit Bezug genommen wird.

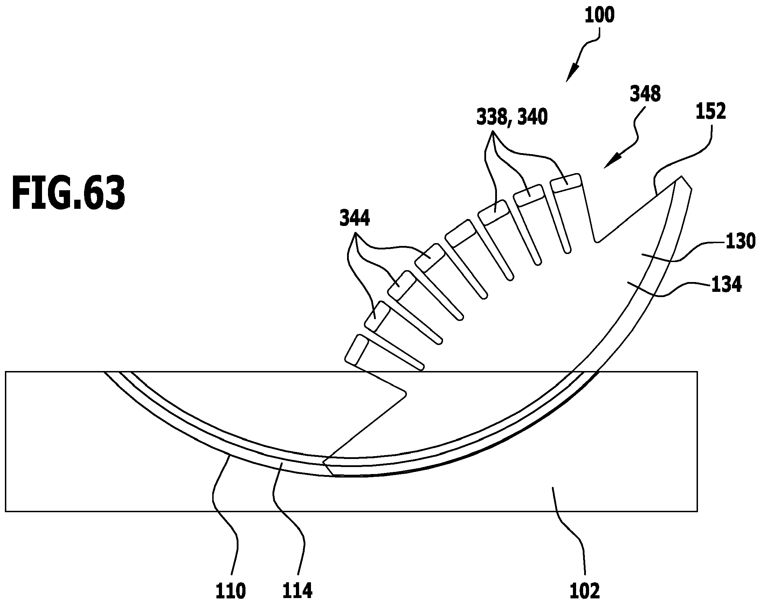

Eine in den Fig. 63 bis 67 dargestellte zweiundzwanzigste Ausführungsform eines Verbindungsmittels 100 unterscheidet sich von der in den Fig. 61 und 62 dargestellten einundzwanzigsten Ausführungsform im Wesentlichen dadurch, dass lediglich ein Verbindungselement 130 vorgesehen ist, welches Federelemente 338 und/oder Rastelemente 340 umfasst.

Auch hinsichtlich dieser Ausführungsform wird nachfolgend vereinheitlichend ausschließlich auf Rastelemente 340 Bezug genommen. Diese Rastelemente 340 können jedoch auch einfache Federelemente 338 sein.

Bei der in den Fig. 63 bis 67 dargestellten zweiundzwanzigsten Ausführungsform eines Verbindungsmittels 100 ist ein Verbindungselement 130, welches in eine Nut 110 einführbar ist, mit zwei Reihen 348 aus Rastelementen 340 vorgesehen.

Die Reihen 348 sind parallel zueinander angeordnet.

Rastnasen 344 der Rastelemente 340 einer Reihe 348 ragen in derselben Richtung weg.

Dabei sind die Rastnasen 344 einer jeden Reihe 348 längs eines kreisbogenförmigen Wegs angeordnet.

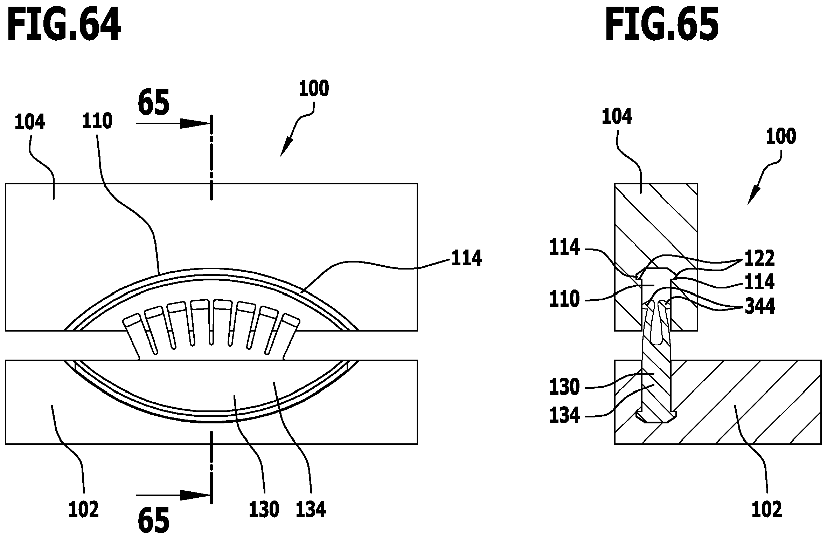

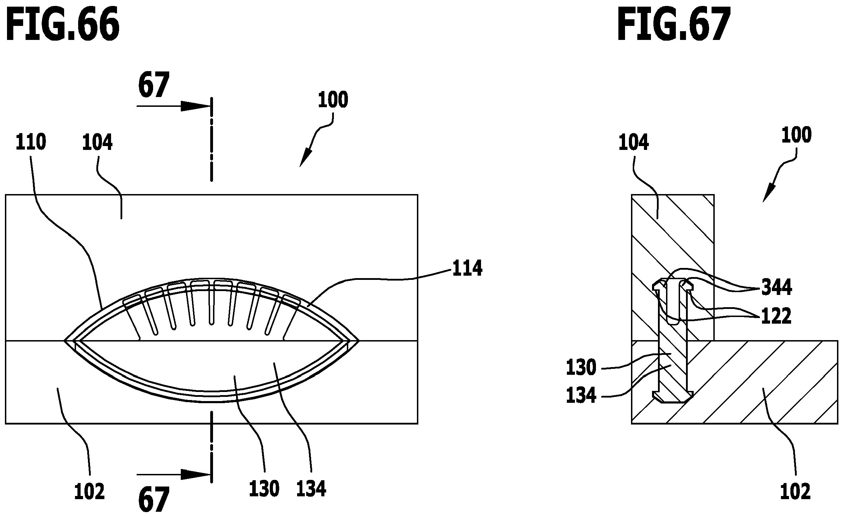

Wie insbesondere den Fig. 65 und 67 zu entnehmen ist, sind die Rastelemente 340 so angeordnet, dass die Rastnasen 344 der Rastelemente 340 in einer der jeweils anderen Reihe 348 abgewandten Richtung wegragen.

Die Länge der Rastelemente 340, das heißt, der Abstand der Rastnasen 344 der Rastelemente 340 von der Anlagefläche 152 des Verbindungselements 130 ist dabei vorzugsweise so gewählt, dass die Rastnasen 344 in eine Nut 110 der in den Fig. 1 bis 4 dargestellten Art einführbar und an den Hinterschneidungsflächen 122 der Nut 110 verrastbar sind.

Mit nur einem Verbindungselement 130 und zwei Nuten 110 kann somit eine einfache Rastverbindung zwischen zwei Bauteilen 102, 104 hergestellt werden.

Vorzugsweise sind die Rastnasen 344 mit (nicht dargestellten) Schrägflächen versehen, so dass die Bauteile 102, 104 beim Verrasten der Rastnasen 344 aufeinander zu gezogen werden können.

Im Übrigen stimmt die in den Fig. 63 bis 67 dargestellte zweiundzwanzigste Ausführungsform eines Verbindungsmittels 100 hinsichtlich Aufbau und Funktion mit der in den Fig. 61 und 62 dargestellten einundzwanzigsten Ausführungsform überein, so dass auf deren vorstehende Beschreibung insoweit Bezug genommen wird.

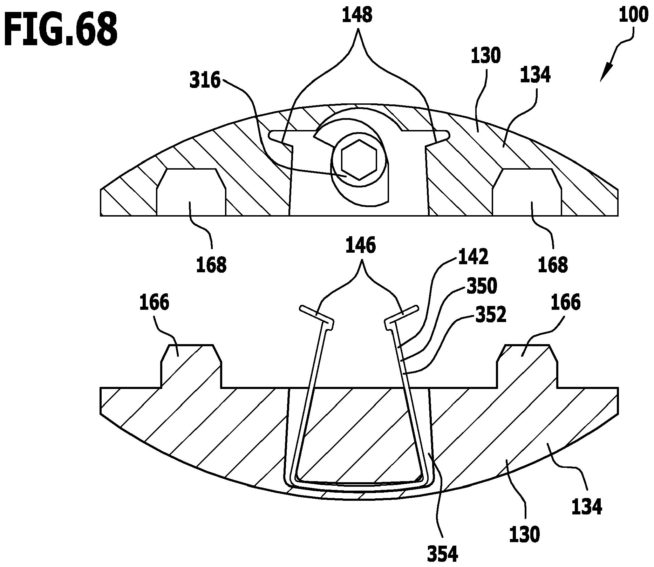

Eine in den Fig. 68 bis 70 dargestellte dreiundzwanzigste Ausführungsform eines Verbindungsmittels 100 unterscheidet sich von der in den Fig. 61 und 62 dargestellten einundzwanzigsten Ausführungsform im Wesentlichen dadurch, dass anstelle von Rastelementen 340 ein oder mehrere Verriegelungselemente 350 vorgesehen sind.

Ein Verriegelungselement 350 bildet insbesondere ein Halteelement 142.

Das Verriegelungselement 350 kann dabei beispielsweise als ein Metallbiegeteil 352 ausgebildet sein.

Wie insbesondere Fig. 68 zu entnehmen ist, ist das Verriegelungselement 350 in einer Aufnahme 354 eines Verbindungselements 130 aufnehmbar.

Das Verriegelungselement 350 ist vorzugsweise ein von dem Grundkörper 134 des Verbindungselements 130 verschiedenes Element, welches an dem Grundkörper 134 insbesondere lösbar festlegbar ist.

Das Verriegelungselement 350 umfasst beispielsweise zwei Eingriffsvorsprünge 146, welche relativ zu dem Grundkörper 134 des Verbindungselements 130 bewegbar ausgebildet und/oder angeordnet sind.

Das weitere Verbindungselement 130 umfasst ein Betätigungselement 316 zum Betätigen des Verriegelungselements 350.

Das Betätigungselement 316 ist beispielsweise als ein Exzenterelement ausgebildet.

Vorzugsweise ist das Betätigungselement 316 durch eine seitliche Zugangsbohrung 128 in einem der Bauteile 102, 104 hindurch zugänglich, insbesondere um das Betätigungselement 316 mittels eines Schraubschlüssels zu drehen und damit das Verriegelungselement 350 zu betätigen.

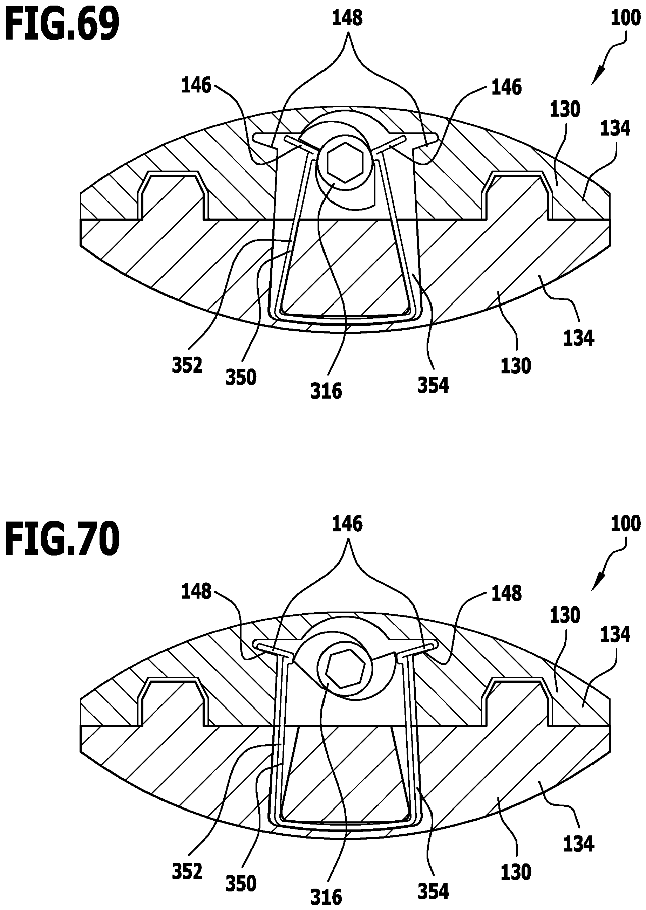

Wie insbesondere den Fig. 69 und 70 zu entnehmen ist, kann das Verriegelungselement 350 mittels des Betätigungselements 316 insbesondere dadurch betätigt werden, dass die Eingriffsvorsprünge 146 mittels des Betätigungselements 316 voneinander weg bewegt und dabei in die Eingriffsabschnitte 148 an dem Verbindungselement 130, an welchem das Betätigungselement 316 angeordnet ist, gebracht werden.

Dadurch, dass das Verriegelungselement 350 und das Betätigungselement 316 an voneinander verschiedenen Verbindungselementen 130 angeordnet sind, können die Hebelarmverhältnisse zur Betätigung des Verriegelungselements 350 optimiert werden. Hierdurch kann eine mechanische Belastung des Verbindungsmittels 100 beim Verriegeln desselben reduziert werden, während die Stabilität und Zuverlässigkeit der Verbindung vorzugsweise erhalten oder sogar verbessert werden.

Im Übrigen stimmt die in den Fig. 68 bis 70 dargestellte dreiundzwanzigste Ausführungsform eines Verbindungsmittels 100 hinsichtlich Aufbau und Funktion mit der in den Fig. 61 und 62 dargestellten einundzwanzigsten Ausführungsform überein, so dass auf deren vorstehende Beschreibung insoweit Bezug genommen wird.

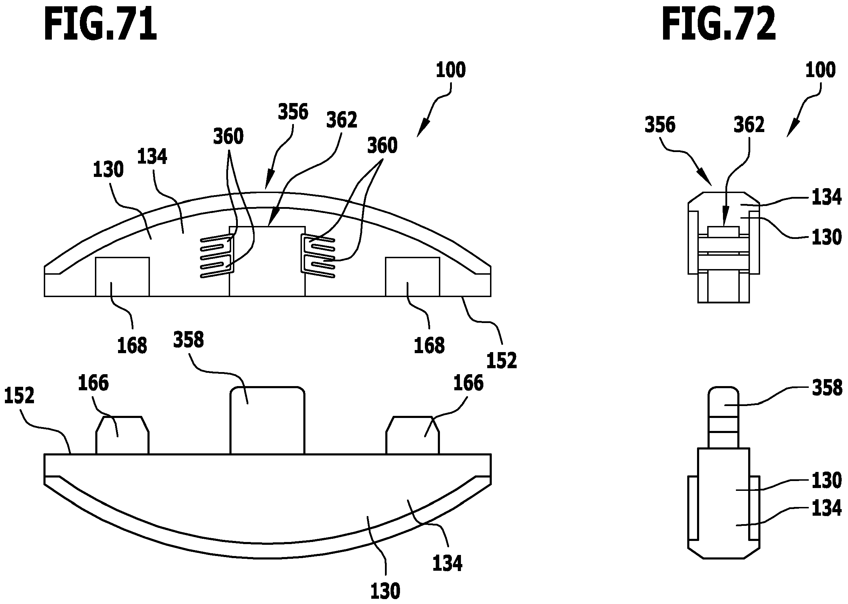

Eine in den Fig. 71 bis 74 dargestellte vierundzwanzigste Ausführungsform eines Verbindungsmittels 100 unterscheidet sich von der in den Fig. 61 und 62 dargestellten einundzwanzigsten Ausführungsform im Wesentlichen dadurch, dass anstelle der Rastelemente 340 eine Klemmvorrichtung 356 vorgesehen ist.

Die Klemmvorrichtung 356 umfasst einen oder mehrere Klemmvorsprünge 358 und ein oder mehrere Klemmelemente 360.

Ein Klemmvorsprung 358 ist beispielsweise an einem der in eine Nut 110 einschiebbaren Verbindungselemente 130 angeordnet.

Die Klemmelemente 360, beispielsweise vier Klemmelemente 360, sind an dem weiteren Verbindungselement 130 angeordnet.

Insbesondere sind die Klemmelemente 360 an einander gegenüberliegenden Seiten einer Klemmaufnahme 362 angeordnet.

Der Klemmvorsprung 358 ist im Wesentlichen quaderförmig ausgebildet.

Die Klemmelemente 360 sind an ihren mit dem Klemmvorsprung 358 in Kontakt kommenden Enden vorzugsweise mit einem Material mit hohem Reibungskoeffizienten versehen oder aus einem Material mit hohem Reibungskoeffizienten gebildet.

Die Klemmelemente 360 sind vorzugsweise nachgiebig, elastisch und/oder federnd ausgebildet und/oder an dem Grundkörper 134 des Verbindungselements 130 angeordnet.

Die Klemmelemente 360 ragen vorzugsweise schräg zur Anlagefläche 152 in die Klemmaufnahme 362 hinein. Zudem sind die Klemmelemente 360 vorzugsweise von der Anlagefläche 152 weg gerichtet.

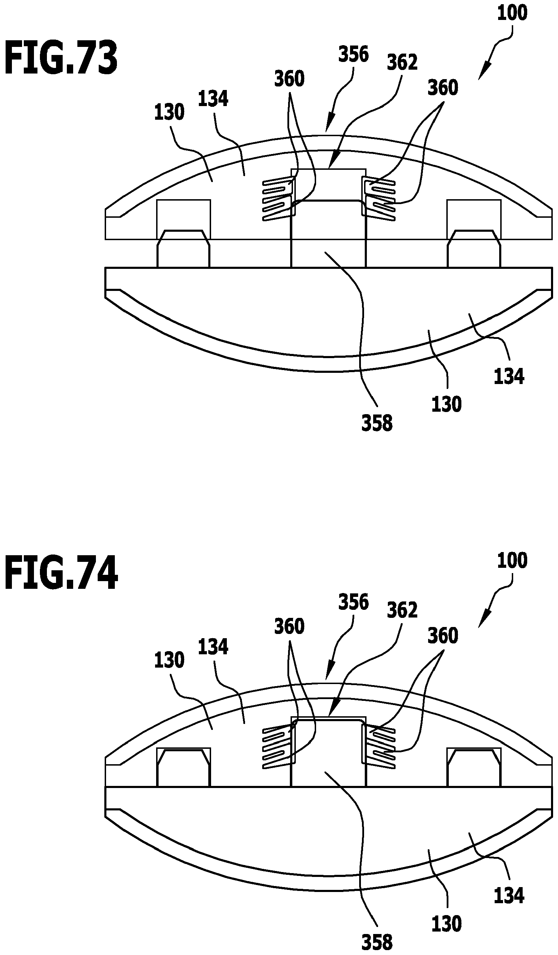

Beim Einschieben des Klemmvorsprungs 358 in die Klemmaufnahme 362 können die Klemmelemente 360 einfach zur Seite bewegt werden. Der Klemmvorsprung 358 kann somit ohne wesentlichen Widerstand in die Klemmaufnahme 362 eingebracht werden (siehe Fig. 73 und 74).

Die Verbindung zwischen den Verbindungselementen 130 und somit die Verbindung zwischen zwei Bauteilen 102, 104 kann somit einfach hergestellt werden.

Zum Lösen der Verbindung muss der Klemmvorsprung 358 aus der Klemmaufnahme 362 herausgezogen werden.

Aufgrund der Form und Ausgestaltung der Klemmelemente 360 ergibt sich hierbei jedoch ein großer Widerstand, insbesondere aufgrund der Tatsache, dass die Klemmelemente 360 durch die schräge Anordnung und Ausrichtung auf den Klemmvorsprung 358 zu bewegt werden und somit eine Klemmkraft noch verstärkt wird.

Die Klemmvorrichtung 356 ist folglich eine selbsthemmende Klemmvorrichtung 356.

Die Klemmelemente 360 können beispielsweise als Druckkämme ausgebildet sein.

Der Klemmvorsprung 358 ist insbesondere ein im Wesentlichen quaderförmiger Zapfen.

Im Übrigen stimmt die in den Fig. 71 bis 74 dargestellte vierundzwanzigste Ausführungsform eines Verbindungsmittels 100 hinsichtlich Aufbau und Funktion mit der in den Fig. 61 und 62 dargestellten einundzwanzigsten Ausführungsform überein, so dass auf deren vorstehende Beschreibung insoweit Bezug genommen wird.

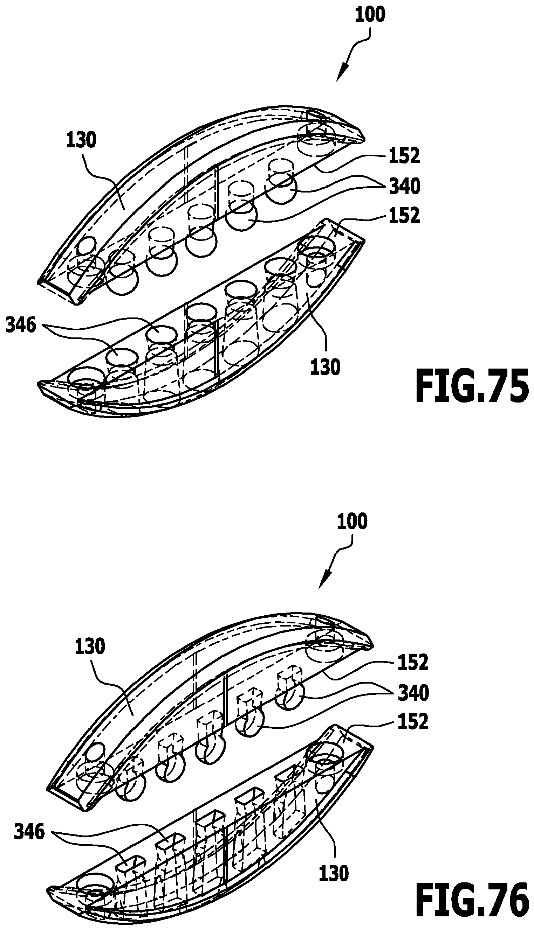

Eine in Fig. 75 dargestellte fünfundzwanzigste Ausführungsform eines Verbindungsmittels 100 unterscheidet sich von der in den Fig. 61 und 62 dargestellten einundzwanzigsten Ausführungsform im Wesentlichen dadurch, dass die Rastelemente 340 und die Aufnahmen 346 für die Rastelemente 340 im Wesentlichen kugelförmig ausgebildet sind.

Die Rastelemente 340 und/oder die Aufnahmen 346 für die Rastelemente 340 sind dabei vorzugsweise elastisch und/oder nachgiebig ausgebildet.

Beispielsweise kann vorgesehen sein, dass die kugelförmigen Rastelemente 340 deformierbar sind, um in die ebenfalls kugelförmigen Aufnahmen 346 eingebracht werden zu können.

Bei der in Fig. 75 dargestellten fünfundzwanzigsten Ausführungsform des Verbindungsmittels 100 sind die Rastelemente 340 und die Aufnahmen 346 an voneinander verschiedenen Verbindungselementen 130 vorgesehen.

Die kugelförmigen Rastelemente 340 sind dabei in unterschiedlichen Abständen von der Anlagefläche 152 angeordnet. Hierdurch kann eine optimierte Verrastung der Bauteile 102, 104 miteinander ermöglicht werden.

Insbesondere dann, wenn die Aufnahmen 346 für die Rastelemente 340 in stets demselben Abstand zu der Anlagefläche 152 des betreffenden Verbindungselements 130 angeordnet sind, kann vorgesehen sein, dass die kugelförmigen Rastelemente 340 nacheinander in die Aufnahmen 346 eingeführt und mit denselben verrastet werden.

Vorzugsweise kann hierdurch eine Verrastung des Verbindungsmittels 100 in verschiedenen Positionen, insbesondere verschiedenen Abständen zwischen den Anlageflächen 152 der Verbindungselemente 130, realisiert werden.

Im Übrigen stimmt die in Fig. 75 dargestellte fünfundzwanzigste Ausführungsform eines Verbindungsmittels 100 hinsichtlich Aufbau und Funktion mit der in den Fig. 61 und 62 dargestellten einundzwanzigsten Ausführungsform überein, so dass auf deren vorstehende Beschreibung insoweit Bezug genommen wird.

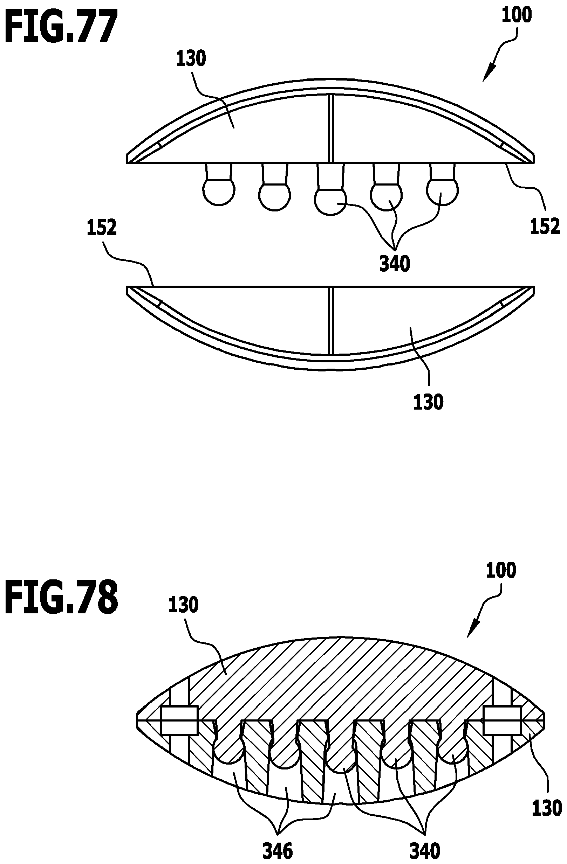

Eine in den Fig. 76 bis 78 dargestellte sechsundzwanzigste Ausführungsform eines Verbindungsmittels 100 unterscheidet sich von der in Fig. 75 dargestellten fünfundzwanzigsten Ausführungsform im Wesentlichen dadurch, dass die Rastelemente 340 im Wesentlichen kreiszylinderabschnittsförmig ausgebildet sind und in hierzu korrespondierende im Wesentlichen kreiszylinderabschnittsförmige Aufnahmen 346 einführbar sind.

Im Übrigen stimmt die in den Fig. 76 bis 78 dargestellte sechsundzwanzigste Ausführungsform eines Verbindungsmittels 100 hinsichtlich Aufbau und Funktion mit der in Fig. 75 dargestellten fünfundzwanzigsten Ausführungsform überein, so dass auf deren vorstehende Beschreibung insoweit Bezug genommen wird.

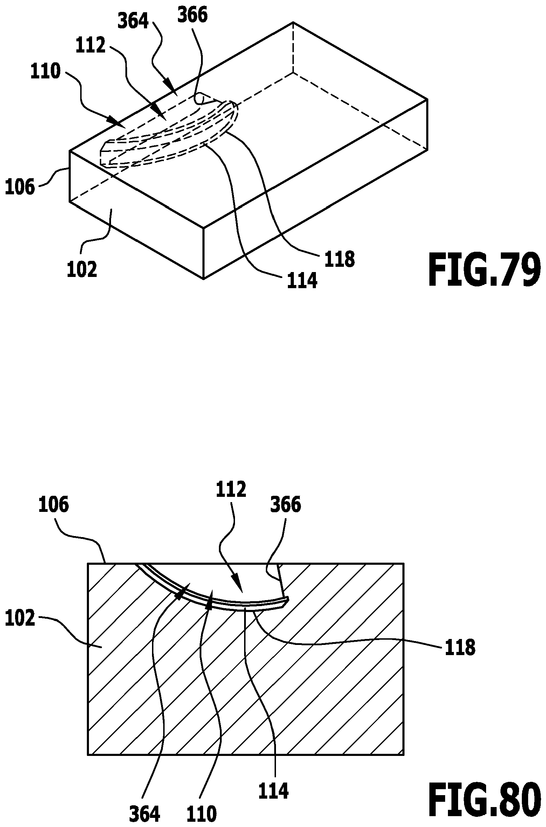

In den Fig. 79 und 80 ist eine alternative Ausgestaltung einer Nut 110 dargestellt.

Diese Nut 110 ist als Teilnut 364 ausgebildet.

Bei dieser Teilnut 364 erstreckt sich die Nutgrundfläche 118 zwar kreisbogenförmig ausgehend von der Kontaktfläche 106 des Bauteils 102 in das Bauteil 102 hinein. Jedoch endet die Nutgrundfläche 118 nicht erneut an der Kontaktfläche 106, sondern innerhalb des Bauteils 102 oder auch an einer Seitenfläche 310 des Bauteils 102 (in den Zeichnungen nicht dargestellt).

Bei der in den Fig. 79 und 80 dargestellten Ausgestaltung einer Nut 110 endet die Nutgrundfläche 118 an einer Anschlagfläche 366 der Nut 110.

Die Anschlagfläche 366 verläuft insbesondere quer zur Kontaktfläche 106.

Die Anschlagfläche 366 begrenzt vorzugsweise den Basisabschnitt 112 und die Hinterschneidungsabschnitte 114.

Durch eine geeignet verkürzte Ausbildung der Verbindungselemente 130 sind vorzugsweise sämtliche Verbindungselemente 130, welche in einer Nut 110 gemäß den Fig. 1 bis 4 anordenbar sind, auch in einer Teilnut 364 gemäß den Fig. 79 und 80 anordenbar.

Die Teilnut 364 ist beispielsweise mittels eines (nicht dargestellten) Fingerfräsers herstellbar.

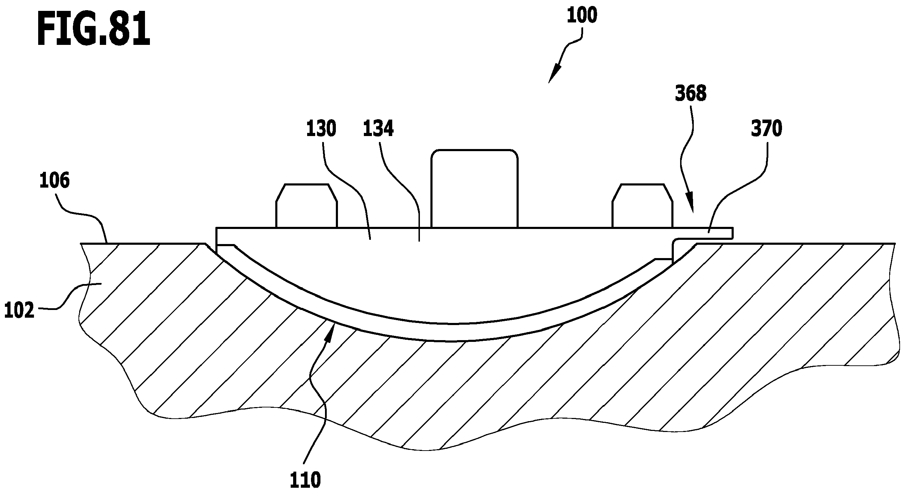

Eine in Fig. 81 dargestellte siebenundzwanzigste Ausführungsform eines Verbindungsmittels 100 unterscheidet sich von der in den Fig. 71 bis 74 dargestellten vierundzwanzigsten Ausführungsform im Wesentlichen dadurch, dass das Verbindungsmittel 100 eine Sicherungsvorrichtung 368 umfasst.

Mittels der Sicherungsvorrichtung 368 ist das Verbindungselement 130 vorzugsweise gegen ein unerwünschtes Verschieben desselben innerhalb und/oder längs der Nut 110 sicherbar.

Die Sicherungsvorrichtung 368 umfasst insbesondere ein als Sicherungsvorsprung ausgebildetes Sicherungselement 370, welches im montierten Zustand des Verbindungselements 130 insbesondere an einer Kontaktfläche 106, 108 eines Bauteils 102, 104 zur Anlage kommt und hierdurch das Verbindungselement 130 gegen ein unerwünschtes Verschieben innerhalb und/oder längs der Nut 110 sichert.

Das Sicherungselement 370 kann insbesondere zwischen die Bauteile 102, 104, beispielsweise zwischen die Kontaktflächen 106, 108 der Bauteile 102, 104, eingeklemmt werden, um das Verbindungselement 130 zu sichern.

Im Übrigen stimmt die in Fig. 81 dargestellte siebenundzwanzigste Ausführungsform eines Verbindungsmittels 100 hinsichtlich Aufbau und Funktion mit der in den Fig. 71 bis 74 dargestellten vierundzwanzigsten Ausführungsform überein, so dass auf deren vorstehende Beschreibung insoweit Bezug genommen wird.

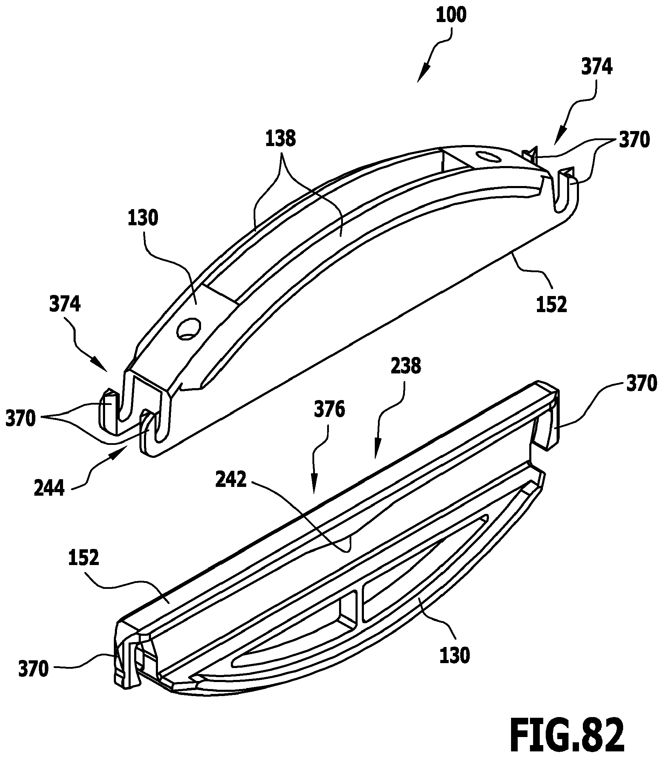

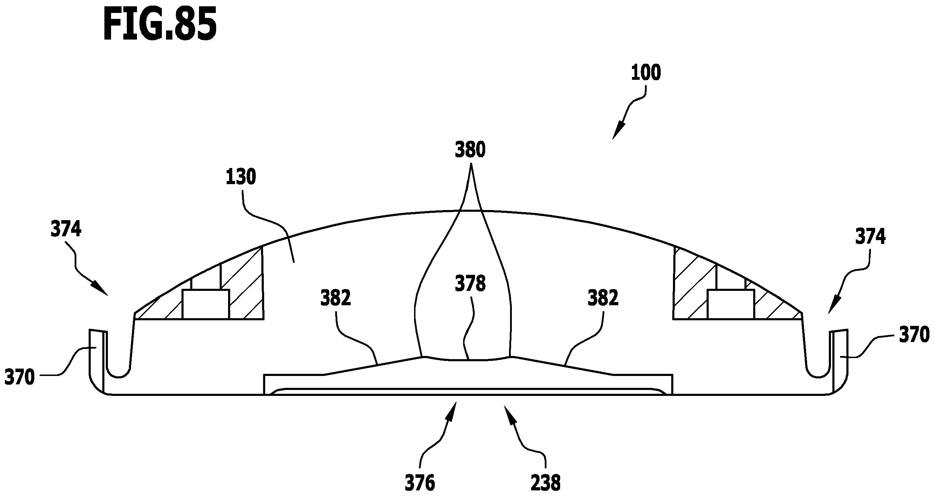

Eine in den Fig. 82 bis 87 dargestellte achtundzwanzigste Ausführungsform eines Verbindungsmittels 100 unterscheidet sich von der in Fig. 81 dargestellten siebenundzwanzigsten Ausführungsform insbesondere dadurch, dass die Sicherungsvorrichtung 368 zwei Paare von Sicherungselementen 370 umfasst, welche an bezüglich einer Einschubrichtung 372 der Verbindungselemente 130 einander gegenüberliegenden Endbereichen 374 des jeweiligen Verbindungselements 130 angeordnet sind.

Die Sicherungselemente 370 sind dabei insbesondere elastisch, nachgiebig und/oder federnd ausgebildete und/oder angeordnete Sicherungselemente 370.

Beim Einschieben der Verbindungselemente 130 in die Nuten 110 werden die Sicherungselemente 370 vorzugsweise automatisch in eine Freigabestellung bewegt.

Sobald die Verbindungselemente 130 in der vorgegebenen Stellung in der Nut 110 angeordnet sind, insbesondere sobald die Anlagefläche 152 des Verbindungselements 130 parallel, insbesondere bündig, mit der Kontaktfläche 106, 108 des Bauteils 102, 104 ausgerichtet ist, gelangen die Sicherungselemente 370 vorzugsweise automatisch in eine Haltestellung, in welcher ein weiteres Verschieben des Verbindungselements 130 innerhalb und/oder längs der Nut 110 wirksam verhindert ist.

Die Sicherungselemente 370 stützen sich dann insbesondere auf der Kontaktfläche 106, 108 mindestens eines der Bauteile 102, 104 ab.

Bei der in den Fig. 82 bis 87 dargestellten achtundzwanzigsten Ausführungsform des Verbindungsmittels 100 erfolgt die eigentliche Verbindung der zwei Verbindungselemente 130 und der Bauteile 102, 104 miteinander durch eine Führungsvorrichtung 238.

Die Führungsvorrichtung 238 umfasst ein an einem Verbindungselement 130 angeordnetes Führungselement 240, welches einen oder mehrere Führungsvorsprünge 242 umfasst.

Das Führungselement 240 ist insbesondere in eine Führungsnut 244 des weiteren Verbindungselements 130 einbringbar.

Diese Führungsnut 244 umfasst einen Führungsabschnitt 250, welcher von dem Führungselement 240 mittels der Führungsvorsprünge 242 hintergreifbar ist.

Die Führungsvorrichtung 238 umfasst insbesondere eine Kulissenführung 376, welche durch die Führungsnut 244 gebildet ist.

Die Kulissenführung 376 dient insbesondere der Führung des Führungselements 240 längs eines vorgegebenen Führungswegs.

Dieser Führungsweg weist längs der Führungsnut 244 variierende Abstände von den Kontaktflächen 106, 108 der Bauteile 102, 104 und/oder von den Anlageflächen 152 der Verbindungselemente 130 auf.

Insbesondere ist bei der Kulissenführung 376 ein lokaler Minimalbereich 378 vorgesehen, welcher von zwei lokalen oder globalen Maximalbereichen 380 umgeben ist.

Die Maximalbereiche 380 sind auf der dem Minimalbereich 378 abgewandten Seite von Auslaufbereichen 382 umgeben.

Zum Verbinden der Verbindungselemente 130 sowie der Bauteile 102, 104 miteinander werden zunächst die Verbindungselemente 130 an den Bauteilen 102, 104 angeordnet.

In einem nächsten Schritt werden die Bauteile 102, 104 zusammen mit den daran angeordneten Verbindungselementen 130 relativ zueinander verschoben, so dass das Führungselement 240 des einen Verbindungselements 130 in die Führungsnut 244 des weiteren Verbindungselements 130 gelangt.

Die Bauteile 102, 104 und die Verbindungselemente 130 werden dabei insbesondere parallel zu den Kontaktflächen 106, 108 der Bauteile 102, 104 verschoben.

Der Führungsvorsprung 242 gelangt dabei zunächst mit einem Auslaufbereich 382 in Eingriff und wird dann über den Maximalbereich 380 hinweg in den Minimalbereich 378 geführt.

Aufgrund des auf diesen Minimalbereich 378 folgenden weiteren Maximalbereichs 380 ist dieser Minimalbereich 378 eine stabile Position für den Führungsvorsprung 242 längs des mittels der Kulissenführung 376 gebildeten Führungswegs.

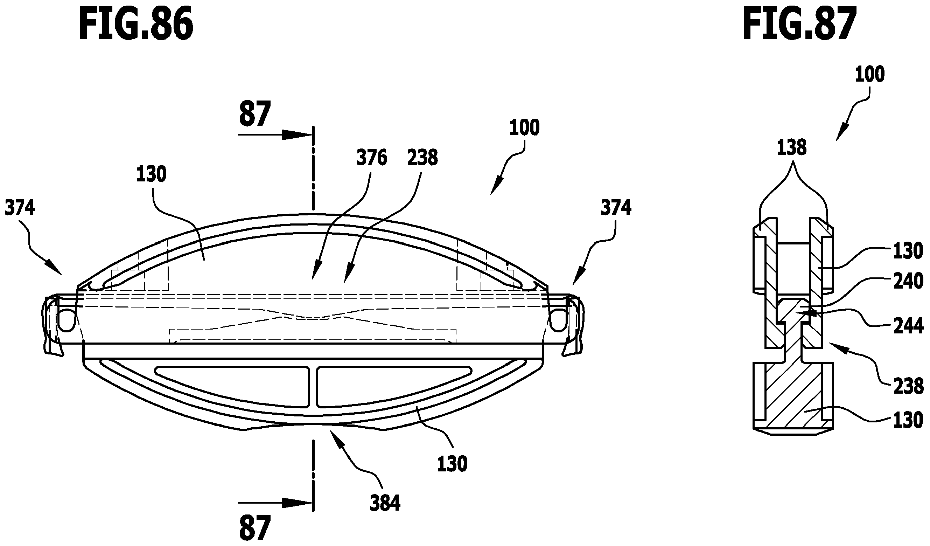

Die Verbindungselemente 130 sind somit stabil miteinander verbunden, wenn der Führungsvorsprung 242 in dem Minimalbereich 378 der Kulissenführung 376 angeordnet ist (siehe insbesondere Fig. 86).

Bei Bedarf kann der Führungsvorsprung 242 zusammen mit dem zugehörigen Verbindungselement 130 und dem zugehörigen Bauteil 102, 104 auch über den weiteren Maximalbereich 380 hinweg sowie aus dem weiteren Auslaufbereich 382 heraus geschoben werden.

Die Verbindungselemente 130 sind somit bei Bedarf vollständig aneinander vorbeischiebbar.

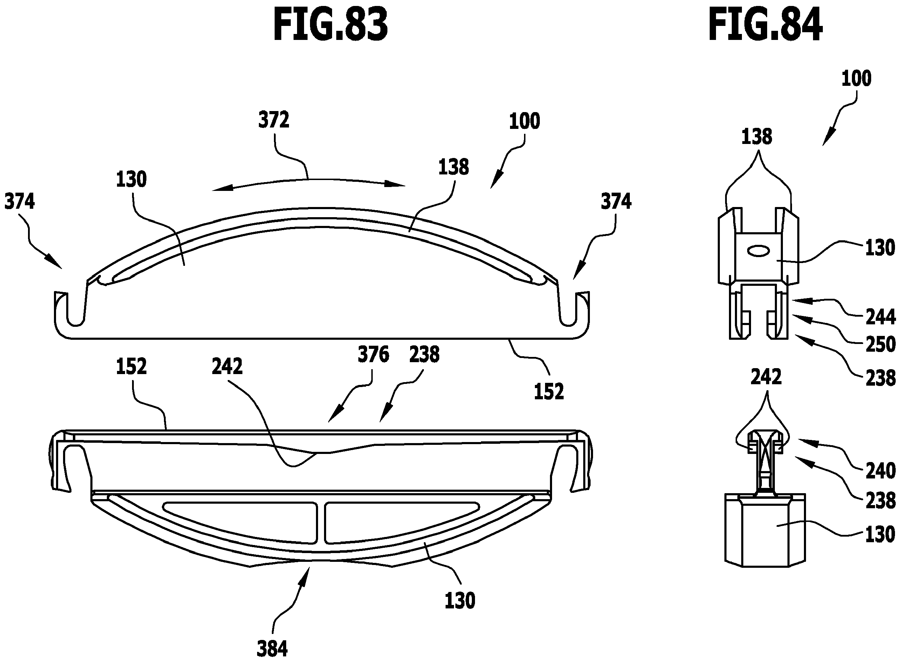

Wie insbesondere den Fig. 83 und 86 zu entnehmen ist, kann bei einem oder mehreren Verbindungselementen 130 eine Einbuchtung 384 in einem der Anlagefläche 152 abgewandten Bereich vorgesehen sein.

Diese Einbuchtung 384 ist beispielsweise kreisbogenförmig ausgebildet.

Eine solche Einbuchtung 384 kann insbesondere dann vorteilhaft sein, wenn das Verbindungselement 130 in einem flachen Bauteil 102, 104 angeordnet werden soll und zusätzlich zu diesem Verbindungselement 130 weitere Führungselemente 240 an demselben Bauteil 102, 104 vorgesehen sind.

Beispielsweise dann, wenn zwei Nuten 110 zur Aufnahme von Verbindungselementen 130 auf einander gegenüberliegenden Seiten eines Bauteils 102, 104 angeordnet sind und die Nuten 110 soweit in das Bauteil 102, 104 hineinragen, dass sich die Nuten 110 im Bereich der Nutgrundflächen 118 überschneiden, kann die Einbuchtung 384 es ermöglichen, trotz der Überschneidung zwei Verbindungselemente 130 in dem Bauteil 102, 104 anzuordnen.

Im Übrigen stimmt die in den Fig. 82 bis 87 dargestellte achtundzwanzigste Ausführungsform eines Verbindungsmittels 100 hinsichtlich Aufbau und Funktion mit der in Fig. 81 dargestellten siebenundzwanzigsten Ausführungsform überein, so dass auf deren vorstehende Beschreibung insoweit Bezug genommen wird.

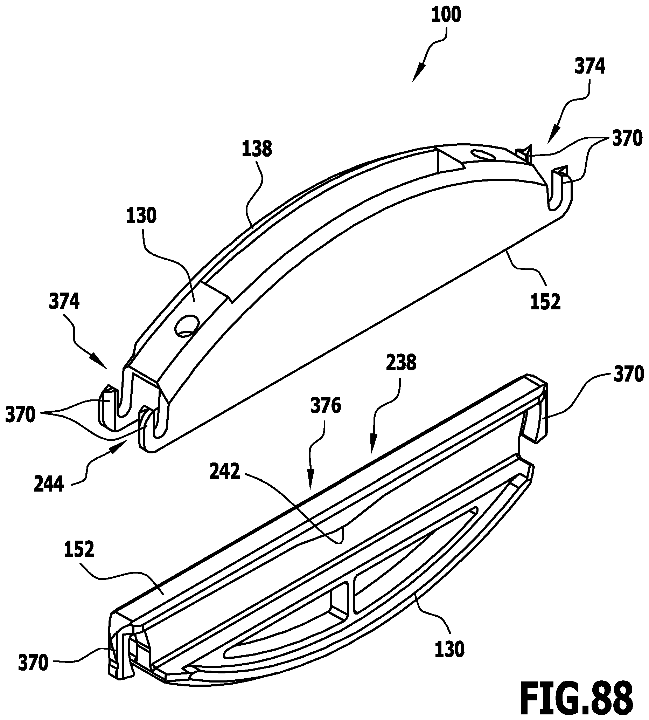

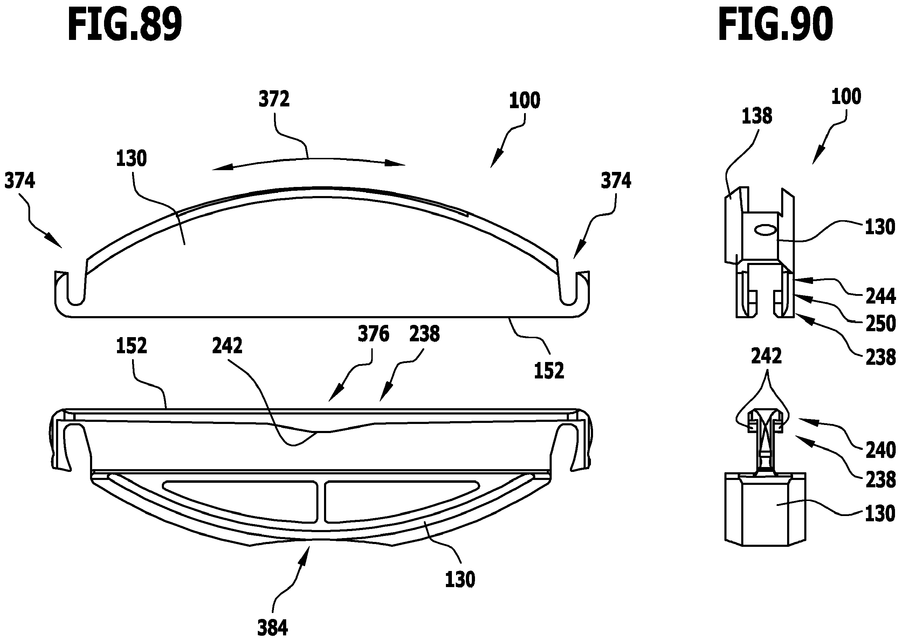

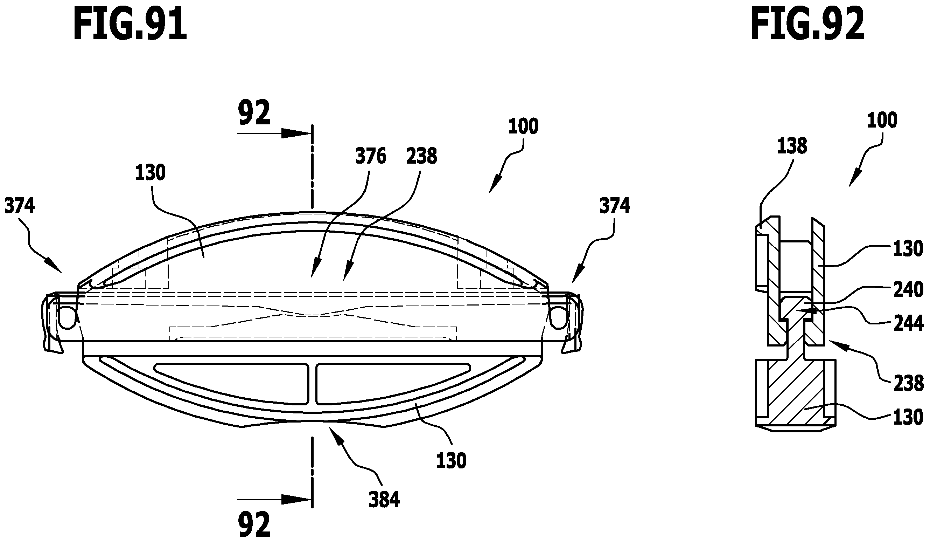

Eine in den Fig. 88 bis 92 dargestellte neunundzwanzigste Ausführungsform eines Verbindungsmittels 100 unterscheidet sich von der in den Fig. 82 bis 87 dargestellten achtundzwanzigsten Ausführungsform im Wesentlichen dadurch, dass eines der Verbindungselemente 130, insbesondere das die Führungsnut 244 aufweisende Verbindungselement 130, nur einseitig mit einem Haltevorsprung 138 versehen ist.

Dieses Verbindungselement 130 kann somit insbesondere in eine Nut 110 eingebracht werden, welche nur einen sich von dem Basisabschnitt 112 weg erstreckenden Hinterschneidungsabschnitt 114 umfasst.

Eine solche Nut 110 kann beispielsweise bei der Verwendung von dünnen und weniger stabilen Bauteilen 102, 104 vorteilhaft sein.

Grundsätzlich kann die Reduktion der Nut 110 und/oder der Verbindungselemente 130 auf nur einen Hinterschneidungsabschnitt 114 bzw. nur einen Haltevorsprung 138 bei sämtlichen beschriebenen und denkbaren Varianten von Nuten 110 und Verbindungselementen 130 vorteilhaft sein.

Im Übrigen stimmt die in den Fig. 88 bis 92 dargestellte neunundzwanzigste Ausführungsform eines Verbindungsmittels 100 hinsichtlich Aufbau und Funktion mit der in den Fig. 82 bis 87 dargestellten achtundzwanzigsten Ausführungsform überein, so dass auf deren vorstehende Beschreibung insoweit Bezug genommen wird.

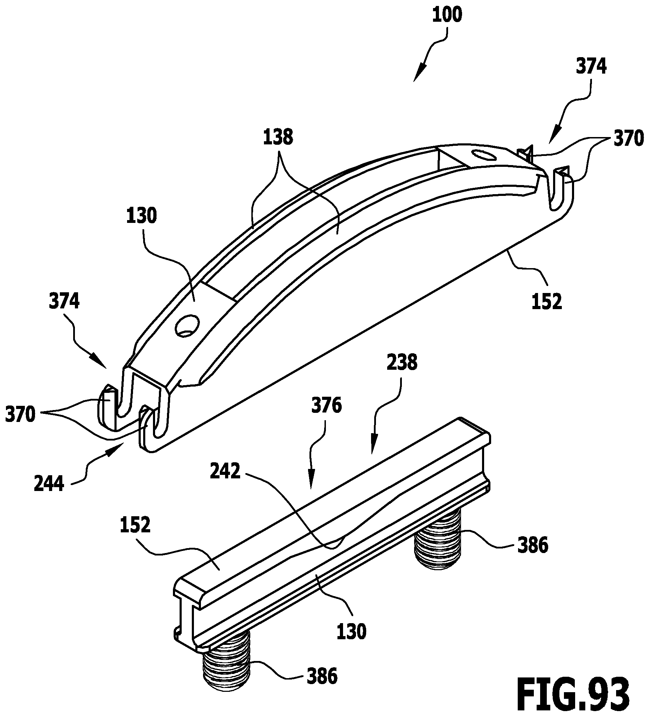

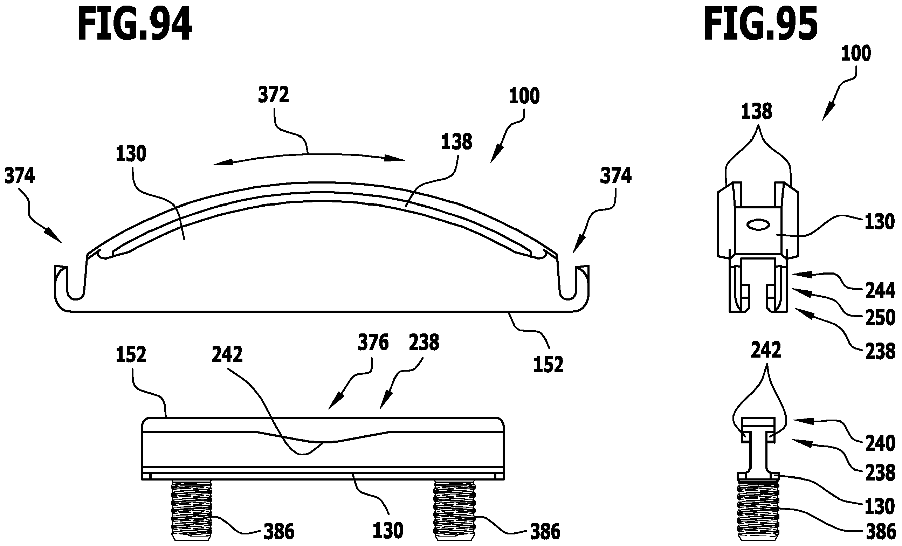

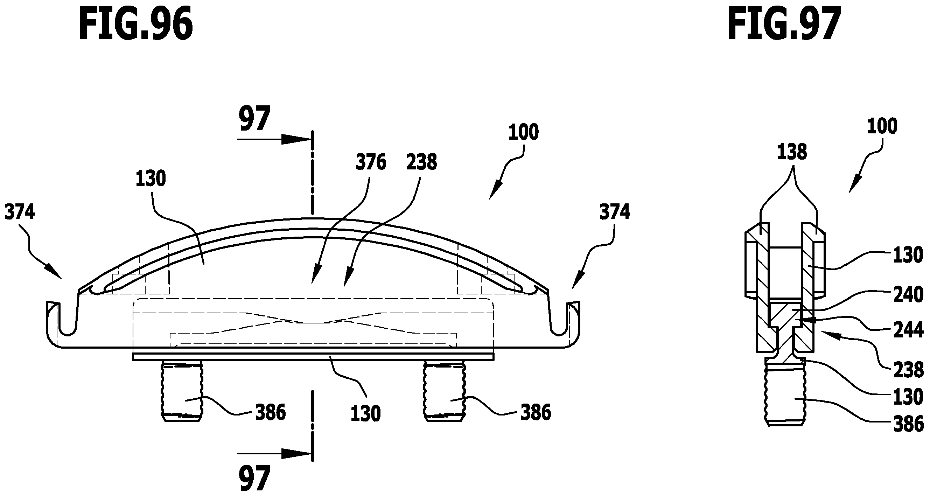

Eine in den Fig. 93 bis 97 dargestellte dreißigste Ausführungsform eines Verbindungsmittels 100 unterscheidet sich von der in den Fig. 82 bis 87 dargestellten achtundzwanzigsten Ausführungsform im Wesentlichen dadurch, dass eines der Verbindungselemente 130, beispielsweise das das Führungselement 240 umfassende Verbindungselement 130, nicht zum Einschieben in eine Nut 110 vorgesehen ist, sondern vielmehr zwei Einsteckabschnitte 386 zum Einstecken des Verbindungselements 130 in hierzu korrespondierende (nicht dargestellte) Aufnahmen eines Bauteils 102, 104 umfasst.

Die Einsteckabschnitte 386 können beispielsweise mit einer Riffelung, mit Lamellen und/oder sonstigen Halteelementen versehen sein, um das Verbindungselement 130 stabil mit dem entsprechenden Bauteil 102, 104 zu verbinden.

Im Übrigen stimmt die in den Fig. 93 bis 97 dargestellte dreißigste Ausführungsform eines Verbindungsmittels 100 hinsichtlich Aufbau und Funktion mit der in den Fig. 82 bis 87 dargestellten achtundzwanzigsten Ausführungsform überein, so dass auf deren vorstehende Beschreibung insoweit Bezug genommen wird.

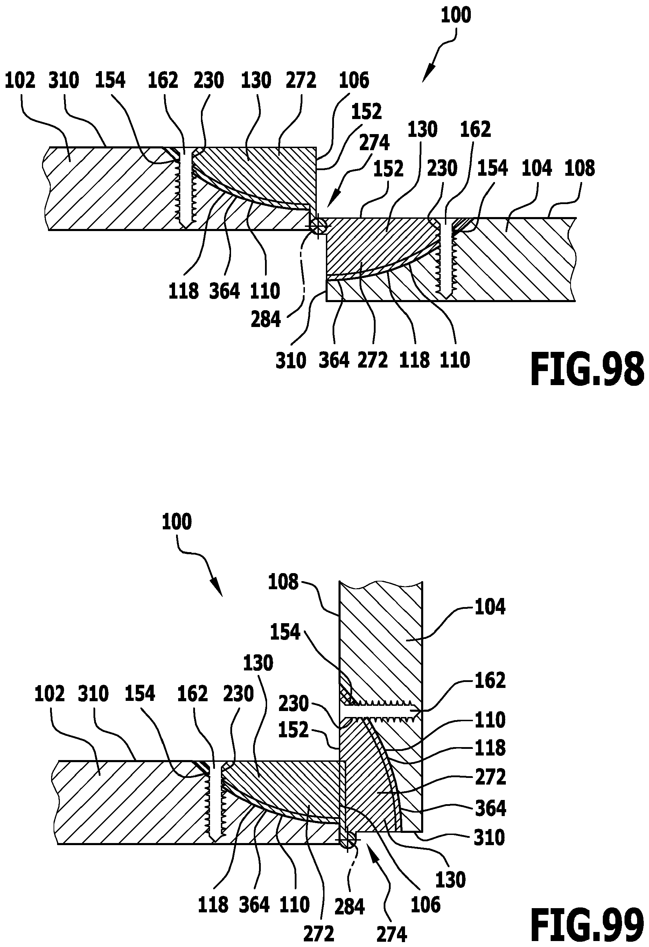

Eine in den Fig. 98 und 99 dargestellte einunddreißigste Ausführungsform eines Verbindungsmittels 100 unterscheidet sich von der in den Fig. 47 bis 49 dargestellten fünfzehnten Ausführungsform im Wesentlichen dadurch, dass die Verbindungselemente 130 selbst Scharnierelemente 272 der Scharniervorrichtung 274 bilden.

Die Verbindungselemente 130 sind dabei so ausgebildet, dass diese in Teilnuten 364 (siehe die Fig. 79 und 80) aufnehmbar sind.

Bei diesen Teilnuten 364 ist insbesondere vorgesehen, dass die Nutgrundflächen 118 der jeweiligen Teilnut 364 jeweils einerseits an eine Kontaktfläche 106, 108 und andererseits an eine Seitenfläche 310 des jeweiligen Bauteils 102, 104 angrenzen.

Mittels Schrauben 162 sind die in den Teilnuten 364 angeordneten Verbindungselemente 130 in den Teilnuten 364 und somit in den Bauteilen 102, 104 festlegbar.

Mittels der Scharniervorrichtung 274 sind die Verbindungselemente 130 und somit auch die Bauteile 102, 104 um die Schwenkachse 284 schwenkbar.

Wie insbesondere aus einem Vergleich der Fig. 98 und 99 hervorgeht, kann insbesondere eine Schwenkbewegung der Bauteile 102, 104 um ungefähr 90° relativ zueinander ermöglicht werden. Das Verbindungsmittel 100 eignet sich somit insbesondere zum Festlegen von Türen an einem Korpus eines Schranks.

Die Teilnuten 364 sind bei der in den Fig. 98 und 99 dargestellten einunddreißigsten Ausführungsform eines Verbindungsmittels 100 insbesondere dadurch herstellbar, dass die Bauteile 102, 104 unmittelbar aneinander angelegt werden und mit einer einzigen durchgängigen Nut 110 gemäß den Fig. 1 bis 4 versehen werden.

Die Nut 110 wird dabei vorzugsweise so in den Bauteilen 102, 104 ausgebildet, dass sich diese Nut 110 jeweils im Wesentlichen hälftig in das eine Bauteil 102 und im Wesentlichen hälftig in das andere Bauteil 104 erstreckt.

Die Teilnuten 364 sind somit vorzugsweise Halbnuten, das heißt jeweils eine Hälfte einer Nut 110 gemäß den Fig. 1 bis 4.

Durch ein Verbindungsmittel 100 gemäß der in den Fig. 98 und 99 dargestellten einunddreißigsten Ausführungsform kann insbesondere eine sehr stabile und hochgenaue Verbindung zweier relativ zueinander zu verschwenkenden Bauteile 102, 104 hergestellt werden.

Im Übrigen stimmt die in den Fig. 98 und 99 dargestellte einunddreißigste Ausführungsform eines Verbindungsmittels 100 hinsichtlich Aufbau und Funktion mit der in den Fig. 47 bis 49 dargestellten fünfzehnten Ausführungsform überein, so dass auf deren vorstehende Beschreibung insoweit Bezug genommen wird.

Bei weiteren (nicht dargestellten) Ausführungsformen eines Verbindungsmittels 100 können einzelne oder mehrere Merkmale der vorstehend beschriebenen Ausführungsformen beliebig miteinander kombiniert sein.

Beispielsweise kann vorgesehen sein, dass die Verbindungselemente 130 der in den Fig. 61 und 62 dargestellten einundzwanzigsten Ausführungsform des Verbindungsmittels 100 in jeweils einer Teilnut 364 in den Bauteilen 102, 104 anordenbar sind. Zudem ist beispielsweise eine magnetische Betätigung des Verriegelungselements 350 der in den Fig. 68 bis 70 dargestellten dreiundzwanzigsten Ausführungsform eines Verbindungsmittels 100 denkbar.

Bevorzugte Ausführungsformen sind die folgenden:
1. Verbindungsmittel (100) zum Verbinden zweier Bauteile (102, 104), insbesondere zum Verbinden von Möbel- oder Maschinenteilen, und/oder zum Festlegen eines Objekts an einem Bauteil (102, 104) umfassend ein oder mehrere Verbindungselemente (130), welche in einem Verbindungszustand und/oder Verankerungszustand an mindestens einem der Bauteile (102, 104) angeordnet sind,
   wobei mindestens ein Verbindungselement (130) einen oder mehrere nicht-selbstschneidende Haltevorsprünge (138) umfasst, welche jeweils eine gekrümmte Abstützfläche (140) aufweisen, die in einem Längsschnitt kreisbogenförmig ist,
   wobei der eine oder die mehreren Haltevorsprünge (138) in eine an einem der Bauteile (102, 104) vorgesehene Nut (110) mit einer gekrümmten Hinterschneidungsfläche (122), die in einem Längsschnitt kreisbogenförmig ist, einführbar sind,
   wobei die Nut (110) einen Basisabschnitt (112) und einen oder mehrere sich in einer Dickenrichtung (116) von dem Basisabschnitt (112) weg erstreckende Hinterschneidungsabschnitte (114) umfasst und
   wobei der eine oder die mehreren Haltevorsprünge (138) im Verbindungszustand und/oder Verankerungszustand in den einen oder die mehreren Hinterschneidungsabschnitte (114) der Nut (110) eingreifen.
2. Verbindungsmittel (100) nach Ausführungsform 1, dadurch gekennzeichnet, dass ein oder mehrere Verbindungselemente (130) ein oder mehrere Schraubelemente (132) umfassen oder als ein oder mehrere Schraubelemente (132) ausgebildet sind.
3. Verbindungsmittel (100) nach einer der Ausführungsformen 1 oder 2, dadurch gekennzeichnet, dass ein oder mehrere Verbindungselemente (130) ein oder mehrere Halteelemente (142) umfassen, welche abschnittsweise oder vollständig und/oder zeitweise oder permanent innerhalb einer Außenkontur eines Grundkörpers (134) oder Gehäuses des einen oder der mehreren Verbindungselemente (130) angeordnet sind.
4. Verbindungsmittel (100) nach einer der Ausführungsformen 1 bis 3, dadurch gekennzeichnet, dass ein oder mehrere Verbindungselemente (130) ein oder mehrere Halteelemente (142) umfassen, welche abschnittsweise oder vollständig und/oder zeitweise oder permanent außerhalb einer Außenkontur eines Grundkörpers (134) oder Gehäuses des einen oder der mehreren Verbindungselemente (130) angeordnet sind.
5. Verbindungsmittel (100) nach einer der Ausführungsformen 1 bis 4, dadurch gekennzeichnet, dass ein oder mehrere Verbindungselemente (130) ein oder mehrere bewegliche Halteelemente (142) umfassen, insbesondere relativ zu einem Grundkörper (134) oder Gehäuse bewegliche Halteelemente (142).
6. Verbindungsmittel (100) nach einer der Ausführungsformen 1 bis 5, dadurch gekennzeichnet, dass ein oder mehrere Verbindungselemente (130) ein oder mehrere Halteelemente (142) umfassen, welche im verbundenen Zustand der Bauteile (102, 104) über eine Kontaktfläche (106, 108) eines Bauteils (102, 104), welche dem weiteren Bauteil (104, 102) zugewandt angeordnet ist und/oder an welcher das weitere Bauteil (104, 102) anliegt, überstehen.
7. Verbindungsmittel (100) nach einer der Ausführungsformen 1 bis 6, dadurch gekennzeichnet, dass ein oder mehrere Verbindungselemente (130) eine Sicherungsvorrichtung (184, 368) umfassen, mittels welcher das Verbindungselement (130) oder die Verbindungselemente (130) gegen ein Verschieben und/oder Verdrehen desselben oder derselben relativ zu einem Bauteil (104, 102) sicherbar sind.
8. Verbindungsmittel (100) nach einer der Ausführungsformen 1 bis 7, dadurch gekennzeichnet, dass ein oder mehrere Verbindungselemente (130) eine Sicherungsvorrichtung (184, 368) umfassen, mittels welcher das Verbindungselement (130) oder die Verbindungselemente (130) gegen ein Verschieben desselben oder derselben in und/oder längs einer Nut (110) mit einer gekrümmten Hinterschneidungsfläche (122), die in einem Längsschnitt kreisbogenförmig ist, sicherbar sind.
9. Verbindungsmittel (100) nach einer der Ausführungsformen 7 oder 8, dadurch gekennzeichnet, dass die Sicherungsvorrichtung (184, 368) ein oder mehrere Sicherungselemente (370) umfasst, welche zum Sichern eines oder mehrerer Verbindungselemente (130) gegen ein Verschieben und/oder Verdrehen desselben oder derselben an eine Kontaktfläche (106, 108) eines Bauteils (102, 104), welche dem weiteren Bauteil (104, 102) zugewandt angeordnet ist und/oder an welcher das weitere Bauteil (104, 102) anliegt, anlegbar oder angelegt sind.
10. Verbindungsmittel (100) nach einer der Ausführungsformen 7 bis 9, dadurch gekennzeichnet, dass die Sicherungsvorrichtung (184, 368) ein oder mehrere bewegliche, elastische, reversibel verformbare und/oder federnd ausgebildete Sicherungselemente (370) umfasst.
11. Verbindungsmittel (100) nach einer der Ausführungsformen 7 bis 10, dadurch gekennzeichnet, dass die Sicherungsvorrichtung (184, 368) mindestens zwei an einander gegenüberliegenden Enden eines Verbindungselements (130) angeordnete Sicherungselemente (370) umfasst.
12. Verbindungsmittel (100) nach einer der Ausführungsformen 1 bis 11, dadurch gekennzeichnet, dass ein oder mehrere Verbindungselemente (130), insbesondere ein Grundkörper (134) oder Gehäuse eines oder mehrerer Verbindungselemente (130), eine oder mehrere Durchtrittsöffnungen (188) zur Aufnahme von Befestigungselementen und/oder Sicherungselementen umfasst.
13. Verbindungsmittel (100) nach einer der Ausführungsformen 1 bis 12, dadurch gekennzeichnet, dass ein oder mehrere Halteelemente (142) eines oder mehrerer Verbindungselemente (130) durch eine oder mehrere Zugangsöffnungen (128) in einem Bauteil (102, 104) oder in beiden Bauteilen (102, 104) hindurch zugänglich und/oder betätigbar sind.
14. Verbindungsmittel (100) nach einer der Ausführungsformen 1 bis 13, dadurch gekennzeichnet, dass ein oder mehrere Halteelemente (142) eines oder mehrerer Verbindungselemente (130) durch eine oder mehrere solide Wandungen eines Bauteils (102, 104) oder beider Bauteile (102, 104) hindurch mittels einer Magnetvorrichtung zugänglich und/oder betätigbar sind.
15. Verbindungsmittel (100) nach einer der Ausführungsformen 1 bis 14, dadurch gekennzeichnet, dass mindestens ein Verbindungselement (130) zur Verbindung der Bauteile (102, 104) miteinander auf eine Kontaktfläche (106, 108) eines Bauteils (102, 104) aufsetzbar oder aufgesetzt ist, insbesondere an eine Kontaktfläche (106, 108) eines Bauteils (102, 104) angeschraubt ist.
16. Verbindungsmittel (100) nach einer der Ausführungsformen 1 bis 15, dadurch gekennzeichnet, dass ein oder mehrere Verbindungselemente (130) ein oder mehrere Einsteckvorsprünge (166) und/oder eine oder mehrere Aufnahmetaschen (168) für einen oder mehrere Einsteckvorsprünge (166) umfassen.
17. Verbindungsmittel (100) nach einer der Ausführungsformen 1 bis 16, dadurch gekennzeichnet, dass das Verbindungsmittel (100) zwei oder mehr Verbindungselemente (130) zur Anordnung an und/oder in einem ersten Bauteil (102) und/oder zwei oder mehr Verbindungselemente (130) zur Anordnung an und/oder in einem zweiten Bauteil (104) umfasst, wobei zur Verbindung der Bauteile (102, 104) miteinander mindestens ein Verbindungselement (130) an und/oder in dem ersten Bauteil (102) mit dem zweiten Bauteil (104), insbesondere mit mindestens einem Verbindungselement (130) an und/oder in dem zweiten Bauteil (104), in Eingriff bringbar ist.
18. Verbindungsmittel (100) nach einer der Ausführungsformen 1 bis 17, dadurch gekennzeichnet, dass das Verbindungsmittel (100) zwei oder mehr Verbindungselemente (130) umfasst, welche an oder in einem der Bauteile (102, 104) anordenbar sind und welche miteinander in Eingriff bringbar sind.
19. Verbindungsmittel (100) nach einer der Ausführungsformen 1 bis 18, dadurch gekennzeichnet, dass das Verbindungsmittel (100) zwei oder mehr Verbindungselemente (130) umfasst, welche in einander überlappenden Nuten (110) in einem der Bauteile (102, 104) anordenbar sind.
20. Verbindungsmittel (100) nach einer der Ausführungsformen 1 bis 19, dadurch gekennzeichnet, dass das Verbindungsmittel (100) zwei oder mehr im Wesentlichen identisch ausgebildete Verbindungselemente (130) zur Anordnung in einem der Bauteile (102, 104) oder zur Anordnung in beiden Bauteilen (102, 104) und zur Verbindung der Bauteile (102, 104) miteinander umfasst.
21. Verbindungsmittel (100) nach einer der Ausführungsformen 1 bis 20, dadurch gekennzeichnet, dass ein Verbindungselement (130) zur Anordnung an oder in einem ersten Bauteil (102) und ein Verbindungselement (130) zur Anordnung an oder in einem zweiten Bauteil (104) derart mit Durchtrittsöffnungen (188) versehen sind, dass diese sich in einem verbundenen Zustand der Bauteile (102, 104), insbesondere in einer Haltestellung der Verbindungselemente (130), überlappen, insbesondere miteinander fluchten.
22. Verbindungsmittel (100) nach Ausführungsform 21, dadurch gekennzeichnet, dass die Durchtrittsöffnungen (188) im verbundenen Zustand der Bauteile (102, 104) zugänglich sind.
23. Verbindungsmittel (100) nach Ausführungsform 22, dadurch gekennzeichnet, dass die Durchtrittsöffnungen (188) im verbundenen Zustand der Bauteile (102, 104) durch eine sich quer, insbesondere zumindest näherungsweise senkrecht, zu einer Kontaktfläche (106, 108) der Bauteile (102, 104) erstreckende Seitenwandung hindurch zugänglich sind.
24. Verbindungsmittel (100) nach einer der Ausführungsformen 1 bis 23, dadurch gekennzeichnet, dass das Verbindungsmittel (100) ein Magnetelement (190) umfasst, welches mittels eines von außerhalb des Verbindungsmittels (100) auf das Magnetelement (190) einwirkenden zeitlich veränderlichen Antriebsmagnetfeldes zu einer Drehbewegung und/oder zu einer Linearbewegung innerhalb des Verbindungsmittels (100) antreibbar ist.
25. Verbindungsmittel (100) nach Ausführungsform 24, dadurch gekennzeichnet, dass mindestens ein Halteelement (142) mittels des Magnetelements (190) zu einer Drehbewegung und/oder zu einer Linearbewegung relativ zu einem Gehäuse oder Grundkörper (134) eines Verbindungselements (130) antreibbar ist.
26. Verbindungsmittel (100) nach einer der Ausführungsformen 24 oder 25, dadurch gekennzeichnet, dass das Magnetelement (190) periodisch antreibbar ist, so dass mindestens ein Halteelement (142) des Verbindungsmittels (100) mittels des Magnetelements (190) betätigbar, insbesondere in eine Freigabestellung und/oder in eine Haltestellung bringbar, ist.
27. Verbindungsmittel (100) nach einer der Ausführungsformen 1 bis 26, dadurch gekennzeichnet, dass ein Verbindungselement (130) eine Aufnahme (200) für ein Halteelement (142) des Verbindungsmittels (100) umfasst, wobei die Aufnahme (200) relativ zu einem Gehäuse oder Grundkörper (134) des Verbindungselements (130) bewegbar, insbesondere verschiebbar gelagert, ist.
28. Verbindungsmittel (100) nach einer der Ausführungsformen 1 bis 27, dadurch gekennzeichnet, dass ein oder mehrere Verbindungselemente (130) im Wesentlichen vollständig in einer Nut (110) eines Bauteils (102, 104) anordenbar sind, so dass das Verbindungselement (130) oder die Verbindungselemente (130) nicht über eine Kontaktfläche (106, 108) des Bauteils (102, 104) hinausragen.
29. Verbindungsmittel (100) zum Verbinden zweier Bauteile (102, 104), insbesondere nach einer der Ausführungsformen 1 bis 28, umfassend mindestens ein Verbindungselement (130), welches ein Halteelement (142) zum Herstellen einer Verbindung zwischen den zwei Bauteilen (102, 104) und eine Speichervorrichtung (218) zum Speichern einer Halteenergie des Halteelements (142) umfasst.
30. Verbindungsmittel (100) nach Ausführungsform 29, dadurch gekennzeichnet, dass der Speichervorrichtung (218) vor dem Herstellen einer Verbindung zwischen den zwei Bauteilen (102, 104) Halteenergie zuführbar ist und dass die zugeführte Halteenergie bis zum Herstellen der Verbindung mittels der Speichervorrichtung (218) speicherbar ist.
31. Verbindungsmittel (100) nach einer der Ausführungsformen 29 oder 30, dadurch gekennzeichnet, dass die Speichervorrichtung (218) beim Herstellen der Verbindung zwischen den zwei Bauteilen (102, 104) und/oder zum Herstellen der Verbindung zwischen den zwei Bauteilen (102, 104) betätigbar ist, so dass das Halteelement (142) unter Nutzung der Halteenergie in eine Haltestellung bringbar ist.
32. Verbindungsmittel (100) nach einer der Ausführungsformen 29 bis 31, dadurch gekennzeichnet, dass die Speichervorrichtung (218) eine Arretiervorrichtung zum Arretieren einer Federvorrichtung in einer vorgespannten Stellung umfasst.
33. Verbindungsmittel (100) nach einer der Ausführungsformen 29 bis 32, dadurch gekennzeichnet, dass der Speichervorrichtung (218) vor, während und/oder nach dem Einbauen des Verbindungselements (130) in das Bauteil (102, 104) Halteenergie zuführbar ist.
34. Verbindungsmittel (100) nach einer der Ausführungsformen 1 bis 33, dadurch gekennzeichnet, dass das Verbindungsmittel (100) zwei oder mehr Verbindungselemente (130) umfasst, welche eine Nut-Feder-Vorrichtung (224), insbesondere eine selbstverrastende, durch Verschwenken betätigbare Nut-Feder-Vorrichtung (224), bilden.
35. Verbindungsmittel (100) nach einer der Ausführungsformen 1 bis 34, dadurch gekennzeichnet, dass das Verbindungsmittel (100) ein oder mehrere Verbindungselemente (130) umfasst, welche durch Durchtrittsöffnungen (232) in einem Bauteil (102, 104) von einer dem weiteren Bauteil (104, 102) abgewandten Seite einem weiteren Verbindungselement (130) zuführbar und mit demselben verbindbar, insbesondere verschraubbar, sind.
36. Verbindungsmittel (100) nach einer der Ausführungsformen 1 bis 35, dadurch gekennzeichnet, dass das Verbindungsmittel (100) eine Führungsvorrichtung (238) zur Führung der Bauteile (102, 104) relativ zueinander bildet, wobei ein Verbindungselement (130) eine Führungsnut (244) umfasst und wobei das weitere Verbindungselement (130) ein Führungselement (240) umfasst, wobei das Führungselement (240) zusammen mit dem zugehörigen Bauteil (102, 104) längs der Führungsnut (244) relativ zu dem weiteren Bauteil (104, 102) bewegbar, insbesondere linear verschiebbar, ist.
37. Verbindungsmittel (100) nach Ausführungsform 36, dadurch gekennzeichnet, dass die Führungsnut (244) im Wesentlichen linear ausgebildet ist.
38. Verbindungsmittel (100) nach einer der Ausführungsformen 36 oder 37, dadurch gekennzeichnet, dass die Führungsnut (244) einen Führungsabschnitt (250) umfasst, an welchem das Führungselement (240) die Führungsnut (244) hintergreift.
39. Verbindungsmittel (100) nach einer der Ausführungsformen 36 bis 38, dadurch gekennzeichnet, dass die Führungsnut (244) eine Kulissenführung (376) zur Führung des Führungselements (240) längs eines vorgegebenen Führungsweges umfasst, wobei der Führungsweg längs der Führungsnut (244) variierende Abstände von einer Kontaktfläche (106, 108) des Bauteils (102, 104) und/oder von einer Anlagefläche (152) des Verbindungselements (130) aufweist.
40. Verbindungsmittel (100) nach Ausführungsform 39, dadurch gekennzeichnet, dass der Führungsweg zwei Maximalbereiche (380) mit zumindest lokal, insbesondere mit global, maximalem Abstand von einer Kontaktfläche (106, 108) des Bauteils (102, 104) und/oder von einer Anlagefläche (152) des Verbindungselements (130) aufweist.
41. Verbindungsmittel (100) nach Ausführungsform 40, dadurch gekennzeichnet, dass der Führungsweg einen Minimalbereich (378) mit lokal oder global minimalem Abstand von einer Kontaktfläche (106, 108) des Bauteils (102, 104) und/oder von einer Anlagefläche (152) des Verbindungselements (130) aufweist.
42. Verbindungsmittel (100) nach einer der Ausführungsformen 40 oder 41, dadurch gekennzeichnet, dass der Führungsweg einen zwischen den Maximalbereichen (380) angeordneten Minimalbereich (378) mit lokal minimalem Abstand von einer Kontaktfläche (106, 108) des Bauteils (102, 104) und/oder von einer Anlagefläche (152) des Verbindungselements (130) sowie an die Maximalbereiche (380) angrenzende und dem Minimalbereich (378) abgewandt angeordnete Auslaufbereiche (382) mit abnehmendem Abstand von einer Kontaktfläche (106, 108) des Bauteils (102, 104) und/oder von einer Anlagefläche (152) des Verbindungselements (130) aufweist.
43. Verbindungsmittel (100) nach einer der Ausführungsformen 36 bis 42, dadurch gekennzeichnet, dass das Führungselement (240) und/oder die Führungsnut (244) Lagerelemente (246), insbesondere Rollenelemente (248), zur verschiebbaren Lagerung der Bauteile (102, 104) aneinander umfasst.
44. Verbindungsmittel (100) nach einer der Ausführungsformen 1 bis 43, dadurch gekennzeichnet, dass das Verbindungsmittel (100) mindestens ein Gleitelement und/oder mindestens ein Rollenelement (248) umfasst, welches bei einer Bewegung der Bauteile (102, 104) relativ zueinander an einem Bauteil (102, 104) entlanggleitet und/oder an einem Bauteil (102, 104) abrollt.
45. Verbindungsmittel (100) nach einer der Ausführungsformen 1 bis 44, dadurch gekennzeichnet, dass ein Verbindungselement (130) als eine Lauffläche (252) eines Bauteils (102, 104) ausgebildet ist, längs welcher ein Bewegungselement (246, 248) eines Verbindungselements (130) des weiteren Bauteils (104, 102) bewegbar ist.
46. Verbindungsmittel (100) nach einer der Ausführungsformen 1 bis 45, dadurch gekennzeichnet, dass das Verbindungsmittel (100) eine Positioniervorrichtung (254) zur Positionierung zweier Bauteile (102, 104), insbesondere zweier Verbindungselemente (130), relativ zueinander umfasst.
47. Verbindungsmittel (100) nach Ausführungsform 46, dadurch gekennzeichnet, dass die Positioniervorrichtung (254) mindestens ein bewegliches, nachgiebiges, elastisches und/oder federnd gelagertes Positionierelement (256) umfasst.
48. Verbindungsmittel (100) nach einer der Ausführungsformen 46 oder 47, dadurch gekennzeichnet, dass mindestens ein Bauteil (102, 104) und/oder mindestens ein Verbindungselement (130) mindestens eine Positionierelementaufnahme (258) zur Aufnahme des mindestens einen Positionierelements (256) umfasst.
49. Verbindungsmittel (100) nach einer der Ausführungsformen 46 bis 48, dadurch gekennzeichnet, dass mindestens ein Positionierelement (256) sich in einer Haltestellung, in welcher die Bauteile (102, 104) mittels der Positioniervorrichtung (254) relativ zueinander positioniert sind, in die mindestens eine Positionierelementaufnahme (258) hineinerstreckt.
50. Verbindungsmittel (100) nach einer der Ausführungsformen 46 bis 49, dadurch gekennzeichnet, dass die Bauteile (102, 104) durch und/oder bei Betätigung mindestens eines Positionierelements (256) der Positioniervorrichtung (254) relativ zueinander verschiebbar sind.
51. Verbindungsmittel (100) nach einer der Ausführungsformen 1 bis 50, dadurch gekennzeichnet, dass das Verbindungsmittel (100) ein Scharnierelement (272) umfasst, welches einerseits an einem ersten Bauteil (102), insbesondere an einem Verbindungselement (130), welches an dem ersten Bauteil (102) festgelegt oder festlegbar ist, und andererseits an einem zweiten Bauteil (104), insbesondere an einem Verbindungselement (130), welches an dem zweiten Bauteil (104) festgelegt oder festlegbar ist, festgelegt oder festlegbar ist.
52. Verbindungsmittel (100) nach einer der Ausführungsformen 1 bis 51, dadurch gekennzeichnet, dass mindestens ein Verbindungselement (130) ein verschiebbares Riegelelement (286) umfasst, welches relativ zu einem Grundkörper (134) des Verbindungselements (130) verschiebbar ist.
53. Verbindungsmittel (100) nach Ausführungsform 52, dadurch gekennzeichnet, dass das Riegelelement (286) magnetisch verschiebbar ist, insbesondere durch magnetisches Antreiben einer mit dem Riegelelement (286) gekoppelten Antriebswelle (288).
54. Verbindungsmittel (100) nach einer der Ausführungsformen 1 bis 53, dadurch gekennzeichnet, dass das Verbindungsmittel (100) mindestens zwei Verbindungselemente (130) umfasst, welche an voneinander verschiedenen Bauteilen (102, 104) angeordnet oder anordenbar sind und jeweils mindestens ein Magnetelement (190) und/oder mindestens ein magnetisierbares Element umfassen, wobei die Bauteile (102, 104) durch magnetische Anziehung zwischen den mindestens zwei Magnetelementen (190) oder zwischen dem mindestens einen Magnetelement (190) und dem mindestens einen magnetisierbaren Element miteinander verbindbar sind.
55. Verbindungsmittel (100) nach einer der Ausführungsformen 1 bis 54, dadurch gekennzeichnet, dass ein Verbindungselement (130) eine winkelgetriebene Schraubvorrichtung (318) umfasst.
56. Verbindungsmittel (100) nach einer der Ausführungsformen 1 bis 55, dadurch gekennzeichnet, dass das Verbindungsmittel (100) ein bewegliches Halteelement (142) umfasst, welches durch Kraftbeaufschlagung in einer quer, insbesondere senkrecht, zu einer Verbindungsrichtung (170) verlaufenden Querrichtung (326) in eine Freigabestellung bewegbar ist.
57. Verbindungsmittel (100) nach Ausführungsform 56, dadurch gekennzeichnet, dass das Halteelement (142) als ein Rasthaken (320) ausgebildet ist.
58. Verbindungsmittel (100) nach einer der Ausführungsformen 1 bis 57, dadurch gekennzeichnet, dass mindestens ein Verbindungselement (130) in eine an einem der Bauteile (102, 104) vorgesehene Nut (110) mit einer gekrümmten Hinterschneidungsfläche (122), die in einem Längsschnitt kreisbogenförmig ist, einführbar ist und dass das mindestens eine Verbindungselement (130) einen umgreifenden Abschnitt (334) umfasst, welcher das Bauteil (102, 104) an einer quer, insbesondere im Wesentlichen senkrecht, zu einer Kontaktfläche (106, 108) verlaufenden Seitenfläche des Bauteils (102, 104) umgreift.
59. Verbindungsmittel (100) nach einer der Ausführungsformen 1 bis 58, dadurch gekennzeichnet, dass ein oder mehrere Verbindungselemente (130) jeweils mehrere Federelemente (338) und/oder mehrere Rastelemente (340) unterschiedlicher Länge umfassen.
60. Verbindungsmittel (100) nach einer der Ausführungsformen 1 bis 59, dadurch gekennzeichnet, dass das Verbindungsmittel (100) zwei Verbindungselemente (130) umfasst, welche jeweils ein oder mehrere Federelemente (338) und/oder Rastelemente (340) und/oder jeweils ein oder mehrere Federelementaufnahmen (346) und/oder Rastelementaufnahmen (346) umfassen.
61. Verbindungsmittel (100) nach einer der Ausführungsformen 59 oder 60, dadurch gekennzeichnet, dass benachbart zueinander angeordnete Federelemente (338) und/oder Rastelemente (340) Federnasen (342) und/oder Rastnasen (344) aufweisen, welche in voneinander verschiedenen Richtungen, insbesondere in einander entgegengesetzten Richtungen, von den Federelementen (338) und/oder Rastelementen (340) wegragen.
62. Verbindungsmittel (100) nach einer der Ausführungsformen 1 bis 61, dadurch gekennzeichnet, dass das Verbindungsmittel (100) mindestens ein Verbindungselement (130) umfasst, welches eine oder mehrere Reihen (348) aus Federelementen (338) und/oder Rastelementen (340) umfasst.
63. Verbindungsmittel (100) nach Ausführungsform 62, dadurch gekennzeichnet, dass die Federelemente (338) und/oder Rastelemente (340) mindestens einer Reihe (348) aus Federelementen (338) und/oder Rastelementen (340) Federnasen (342) und/oder Rastnasen (344) umfassen, welche längs eines kreisbogenförmigen Wegs angeordnet sind.
64. Verbindungsmittel (100) nach einer der Ausführungsformen 1 bis 63, dadurch gekennzeichnet, dass das Verbindungsmittel (100), insbesondere ein oder mehrere Verbindungselemente (130), eine selbsthemmende Federvorrichtung und/oder Klemmvorrichtung (356) umfasst.
65. Verbindungsmittel (100) nach Ausführungsform 64, dadurch gekennzeichnet, dass die selbsthemmende Federvorrichtung und/oder Klemmvorrichtung (356) ein oder mehrere Klemmelemente (360) umfasst, welche schräg zur Verbindungsrichtung (170) ausgerichtet und/oder welche ausgehend von einem Grundkörper (134) des Verbindungselements (130) von einer Anlagefläche (152) des Verbindungselements (130) weggerichtet sind.
66. Verbindungsmittel (100) nach einer der Ausführungsformen 64 oder 65, dadurch gekennzeichnet, dass das eine Klemmelement (360) oder die mehreren Klemmelemente (360) nachgiebig, elastisch und/oder federnd ausgebildet und/oder nachgiebig, elastisch und/oder federnd an einem Grundkörper (134) oder Gehäuse eines Verbindungselements (130) angeordnet sind.
67. Verbindungsmittel (100) nach einer der Ausführungsformen 1 bis 66, dadurch gekennzeichnet, dass das Verbindungsmittel (100) mindestens ein Verriegelungselement (350) und mindestens ein Betätigungselement (316) zur Betätigung des mindestens einen Verriegelungselements (350) umfasst, wobei das mindestens eine Verriegelungselement (350) und das mindestens eine Betätigungselement (316) an voneinander verschiedenen Bauteilen (102, 104) und/oder Verbindungselementen (130) angeordnet sind.
68. Verbindungsmittel (100) nach Ausführungsform 67, dadurch gekennzeichnet, dass das mindestens eine Betätigungselement (316) ein Exzenterelement umfasst.
69. Verbindungsmittel (100) nach einer der Ausführungsformen 67 oder 68, dadurch gekennzeichnet, dass das mindestens eine Betätigungselement (316) von einer Seite des Verbindungselements (130) her zugänglich ist.
70. Verbindungsmittel (100) nach einer der Ausführungsformen 1 bis 69, dadurch gekennzeichnet, dass mindestens ein Verbindungselement (130) ein oder mehrere Rastelemente (340) und/oder Klemmelemente (360) umfasst, welche einen parallel zur Verbindungsrichtung (170) genommenen im Wesentlichen kreisförmigen oder kreisabschnittsförmigen Querschnitt aufweisen.
71. Verbindungsmittel (100) nach Ausführungsform 70, dadurch gekennzeichnet, dass die Rastelemente (340) und/oder Klemmelemente (360) voneinander verschiedene Abstände von einer Anlagefläche (152) des Verbindungselements (130) und/oder von einer Kontaktfläche (106, 108) eines Bauteils (102, 104) aufweisen.
72. Verbindungsmittel (100) nach einer der Ausführungsformen 1 bis 71, dadurch gekennzeichnet, dass das Verbindungsmittel (100) mindestens ein Verbindungselement (130) umfasst, welches in eine Nut (110) in einem Bauteil (102, 104) einbringbar ist, die eine gekrümmte Abstützfläche (140), welche in einem Längsschnitt kreisbogenförmig ist, umfasst, wobei die Abstützfläche (140) nur einseitig an eine Kontaktfläche (106, 108) des Bauteils (102, 104) angrenzt.
73. Verfahren zum Verbinden zweier Bauteile (102, 104), insbesondere von Möbel- oder Maschinenteilen, umfassend Folgendes:
   - Bereitstellen eines Verbindungsmittels (100), insbesondere eines Verbindungsmittels (100) nach einer der Ausführungsformen 1 bis 72;
   - Einbringen eines Verbindungselements (130) in eines der Bauteile (102, 104);
   - Verbinden des Verbindungselements (130) mit dem weiteren Bauteil (104, 102), insbesondere mit einem an oder in dem weiteren Bauteil (104, 102) angeordneten weiteren Verbindungselement (130).

### Bezugszeichenliste

- 100: Verbindungsmittel
- 102: Bauteil
- 104: Bauteil
- 106: Kontaktfläche
- 108: Kontaktfläche
- 110: Nut
- 112: Basisabschnitt
- 114: Hinterschneidungsabschnitt
- 116: Dickenrichtung
- 118: Nutgrundfläche
- 120: Grundfläche
- 122: Hinterschneidungsfläche
- 124: Begrenzungsfläche
- 126: Begrenzungswand
- 128: Zugangsbohrung
- 129: Hauptfläche
- 130: Verbindungselement
- 132: Schraubelement
- 134: Grundkörper
- 136: Basisteil
- 138: Haltevorsprung
- 140: Abstützfläche
- 142: Halteelement
- 144: Rotationsachse
- 146: Eingriffsvorsprung
- 148: Eingriffsabschnitt
- 150: Anschlag
- 152: Anlagefläche
- 154: Durchtrittsöffnung
- 156: Vertiefung
- 158: Aufnahmeöffnung
- 160: Schraubschlüsselaufnahme
- 162: Schraube
- 164: Eingriffskanal
- 166: Einsteckvorsprung
- 168: Aufnahmetasche
- 170: Verbindungsrichtung
- 172: quaderförmiger Abschnitt
- 174: Einhängeelement
- 176: Einhängeelementaufnahme
- 178: Schrägfläche
- 180: Sicherungsvorsprung
- 182: Sicherungsausnehmung
- 184: Sicherungsvorrichtung
- 186: Endbereich
- 188: Durchtrittsöffnung
- 190: Magnetelement
- 192: Aufnahme (für Magnetelement)
- 194: schlitzartige Führung
- 196: Verriegelungsfläche
- 198: Entriegelungsfläche
- 200: Aufnahme (für Halteelement)
- 202: Federelement
- 204: Deckelelement
- 206: Innenraum
- 208: Vorsprung
- 210: Ausnehmung
- 212: Kamm
- 214: Rille
- 216: Federelement
- 218: Speichervorrichtung
- 220: Speicherelement
- 222: Blockierelement
- 224: Nut-Feder-Vorrichtung
- 226: Nut-Teil
- 228: Feder-Teil
- 230: Schraubaufnahme
- 232: Durchtrittsöffnung
- 234: Seite
- 236: Schraubenkopf
- 238: Führungsvorrichtung
- 240: Führungselement
- 242: Führungsvorsprung
- 244: Führungsnut
- 246: Lagerelement
- 248: Rollenelement
- 250: Führungsabschnitt
- 252: Lauffläche
- 254: Positioniervorrichtung
- 256: Positionierelement
- 258: Positionierelementaufnahme
- 260: Stahlkugel
- 262: Durchtrittsöffnung
- 264: Federelement
- 266: Verschlusselement
- 268: Madenschraube
- 270: Haltevorsprung
- 272: Scharnierelement
- 274: Scharniervorrichtung
- 276: Abschnitt (des Scharnierelements)
- 278: Langloch
- 280: Vertiefung
- 282: Lasche
- 284: Schwenkachse
- 286: Riegelelement
- 288: Antriebswelle
- 292: Öffnung (des Riegelelements)
- 294: Zahnstangenabschnitt
- 296: Zahnradvorrichtung
- 298: Zahnrad
- 300: Drehachse
- 302: Verriegelungsrichtung
- 304: Riegelelementaufnahme
- 306: Wellenaufnahme
- 308: Ausnehmung
- 310: Seitenfläche
- 312: Stirnfläche
- 314: Abdeckelement
- 316: Betätigungselement
- 318: Schraubvorrichtung
- 320: Rasthaken
- 322: Rastaufnahme
- 324: Schrägfläche
- 326: Querrichtung
- 328: Basiskonstruktion
- 330: Teil
- 332: Vorsprung
- 334: umgreifender Abschnitt
- 336: Ausnehmung
- 338: Federelement
- 340: Rastelement
- 342: Federnase
- 344: Rastnase
- 346: Aufnahme
- 348: Reihe
- 350: Verriegelungselement
- 352: Metallbiegeteil
- 354: Aufnahme (für Verriegelungselement)
- 356: Klemmvorrichtung
- 358: Klemmvorsprung
- 360: Klemmelement
- 362: Klemmaufnahme
- 364: Teilnut
- 366: Anschlagfläche
- 368: Sicherungsvorrichtung
- 370: Sicherungselement
- 372: Einschubrichtung
- 374: Endbereich
- 376: Kulissenführung
- 378: Minimalbereich
- 380: Maximalbereich
- 382: Auslaufbereich
- 384: Einbuchtung
- 386: Einsteckabschnitt
- A: Abstand
- A₁: Abstand
- A₂: Abstand
- g: Schwerkraftrichtung
- h: Höhe
- b: Breite
- T: Nuttiefe
- B: Nutbreite

## Patentansprüche

1. Verbindungsmittel (100) zum Verbinden zweier Bauteile (102, 104), insbesondere zum Verbinden von Möbel- oder Maschinenteilen, und/oder zum Festlegen eines Objekts an einem Bauteil (102, 104),
umfassend ein oder mehrere Verbindungselemente (130), welche in einem Verbindungszustand und/oder Verankerungszustand an mindestens einem der Bauteile (102, 104) angeordnet sind,
wobei das Verbindungsmittel (100) eine Positioniervorrichtung (254) zur Positionierung zweier Bauteile (102, 104) relativ zueinander umfasst, wobei die Positioniervorrichtung (254) mindestens ein federnd gelagertes Positionierelement (256) umfasst.

2. Verbindungsmittel (100) nach Anspruch 1, **dadurch gekennzeichnet, dass** mindestens ein Verbindungselement (130) einen oder mehrere nichtselbstschneidende Haltevorsprünge (138) umfasst, welche jeweils eine gekrümmte Abstützfläche (140) aufweisen, die in einem Längsschnitt kreisbogenförmig ist,
wobei der eine oder die mehreren Haltevorsprünge (138) in eine an einem der Bauteile (102, 104) vorgesehene Nut (110) mit einer gekrümmten Hinterschneidungsfläche (122), die in einem Längsschnitt kreisbogenförmig ist, einführbar sind,
wobei die Nut (110) einen Basisabschnitt (112) und einen oder mehrere sich in einer Dickenrichtung (116) von dem Basisabschnitt (112) weg erstreckende Hinterschneidungsabschnitte (114) umfasst und
wobei der eine oder die mehreren Haltevorsprünge (138) im Verbindungszustand und/oder Verankerungszustand in den einen oder die mehreren Hinterschneidungsabschnitte (114) der Nut (110) eingreifen.

3. Verbindungsmittel (100) nach einem der Ansprüche 1 oder 2, **dadurch gekennzeichnet, dass** die Positioniervorrichtung (254) mindestens ein bewegliches, nachgiebiges und/oder elastisches Positionierelement (256) umfasst.

4. Verbindungsmittel (100) nach einem der Ansprüche 1 bis 3, **dadurch gekennzeichnet, dass** mindestens ein Bauteil (102, 104) und/oder mindestens ein Verbindungselement (130) mindestens eine Positionierelementaufnahme (258) zur Aufnahme des mindestens einen Positionierelements (256) umfasst.

5. Verbindungsmittel (100) nach einem der Ansprüche 1 bis 4, **dadurch gekennzeichnet, dass** mindestens ein Positionierelement (256) sich in einer Haltestellung, in welcher die Bauteile (102, 104) mittels der Positioniervorrichtung (254) relativ zueinander positioniert sind, in die mindestens eine Positionierelementaufnahme (258) hineinerstreckt.

6. Verbindungsmittel (100) nach einem der Ansprüche 1 bis 5, **dadurch gekennzeichnet, dass** die Bauteile (102, 104) durch und/oder bei Betätigung mindestens eines Positionierelements (256) der Positioniervorrichtung (254) relativ zueinander verschiebbar sind.

7. Verbindungsmittel (100) nach einem der Ansprüche 1 bis 6, **dadurch gekennzeichnet, dass** eine oder mehrere Positionierelementaufnahmen (258) zumindest abschnittsweise komplementär zu dem einen oder den mehreren Positionierelementen (256) ausgebildet sind, wobei insbesondere vorgesehen ist, dass die Positionierelementaufnahmen (258) komplementär zu den über eine Anlagefläche (152) hinausstehenden Abschnitten der Positionierelemente (256) in der Positionierstellung derselben ausgebildet sind.

8. Verbindungsmittel (100) nach einem der Ansprüche 1 bis 7, **dadurch gekennzeichnet,**
a) **dass** ein oder mehrere federnd nachgiebig gelagerte Positionierelemente (256) in einen Grundkörper (134) hineinbewegbar sind, insbesondere um das eine oder die mehreren Verbindungselemente (130) und die Bauteile (102, 104) relativ zueinander verschieben zu können, während die Anlageflächen (152) und/oder die Kontaktflächen (106, 108) aneinander anliegen; und/oder
b) **dass** ein oder mehrere Positionierelemente (256) mittels eines oder mehrerer Federelemente (264) automatisch in eine oder mehrere Positionierelementaufnahmen (258) bewegbar sind, sobald ein oder mehrere Verbindungselemente (130) in einer gewünschten Position angeordnet sind, in welcher das eine oder die mehreren Positionierelemente (256) der einen oder den mehreren Positionierelementaufnahmen (258) gegenüberliegend angeordnet sind, wobei die Bauteile (102, 104) hierdurch insbesondere miteinander verrastbar sind.

9. Verbindungsmittel (100) nach einem der Ansprüche 1 bis 8, **dadurch gekennzeichnet,**
a) **dass** das Verbindungsmittel (100) ausschließlich eine Positioniervorrichtung (254) und kein Halteelement umfasst; und/oder
b) **dass** das Verbindungsmittel (100) lediglich ein einziges Verbindungselement (130) umfasst, welches an nur einem Bauteil (102, 104) festlegbar ist, um ein separates Objekt an dem Bauteil (102, 104) festlegen, insbesondere verankern, zu können.

10. Verbindungsmittel (100) nach einem der Ansprüche 1 bis 9, **dadurch gekennzeichnet,**
a) **dass** das Verbindungselement (130) zur Verbindung der Bauteile (102, 104) miteinander auf eine Kontaktfläche (106, 108) eines Bauteils (102, 104) aufsetzbar oder aufgesetzt ist; und/oder
b) **dass** das Verbindungselement (130) im Wesentlichen vollständig in einer Nut (110) eines Bauteils (102, 104) anordenbar ist, so dass das Verbindungselement (130) nicht über eine Kontaktfläche (106, 108) des Bauteils (102, 104) hinausragt.

11. Verbindungsmittel (100) nach einem der Ansprüche 1 bis 10, **dadurch gekennzeichnet, dass** das Verbindungsmittel (100) zwei oder mehr Verbindungselemente (130) zur Anordnung an und/oder in einem ersten Bauteil (102) umfasst, wobei zur Verbindung der Bauteile (102, 104) miteinander mindestens ein Verbindungselement (130) an und/oder in dem ersten Bauteil (102) mit dem zweiten Bauteil (104) in Eingriff bringbar ist.

12. Verbindungsmittel (100) zum Verbinden zweier Bauteile (102, 104), insbesondere zum Verbinden von Möbel- oder Maschinenteilen, und/oder zum Festlegen eines Objekts an einem Bauteil (102, 104), insbesondere Verbindungsmittel (100) gemäß einem der Ansprüche 1 bis 11, wobei das Verbindungsmittel ein oder mehrere Verbindungselemente (130) umfasst, welche in einem Verbindungszustand und/oder Verankerungszustand an mindestens einem der Bauteile (102, 104) angeordnet sind,
wobei das Verbindungsmittel (100) ein bewegliches Halteelement (142) umfasst, welches durch Kraftbeaufschlagung in einer quer, insbesondere senkrecht, zu einer Verbindungsrichtung (170) verlaufenden Querrichtung (326) in eine Freigabestellung bewegbar ist.

13. Verbindungsmittel (100) nach Anspruch 12, **dadurch gekennzeichnet,**
a) **dass** das bewegliche Halteelement (142) durch Verschieben der Bauteile (102, 104) relativ zueinander in einer vorgegebenen Richtung (326) in eine Freigabestellung bewegbar ist und/oder
b) **dass** das Halteelement (142) sich im verbundenen Zustand der Bauteile (102, 104) bezüglich der Schwerkraftrichtung (g) auf dem weiteren Bauteil (102, 104) und/oder dem in dem weiteren Bauteil (102, 104) angeordneten Verbindungselement (130) abstützt.

14. Verbindungsmittel (100) nach Anspruch 13, **dadurch gekennzeichnet, dass** das Halteelement (142) als Rasthaken (320) ausgebildet ist und insbesondere mittels eines Federelements (264) federnd an dem Verbindungselement (130) angeordnet ist.

15. Verbindungsmittel nach Anspruch 14, **dadurch gekennzeichnet, dass** der Rasthaken (320) längs einer Verbindungsrichtung (170) aus einer Raststellung, in welcher der Rasthaken (320) über eine Anlagefläche (152) des Verbindungselements (130) hinausragt, in eine Freigabestellung bringbar ist, in welcher der Rasthaken (320) im Wesentlichen vollständig innerhalb eines Grundkörpers (134) des Verbindungselements (130) angeordnet ist.

16. Verbindungsmittel (100) nach einem der Ansprüche 14 oder 15, **dadurch gekennzeichnet, dass** der Rasthaken (320) und/oder eine Rastaufnahme (322) mit mindestens einer Schrägfläche (324) versehen ist,
wobei die Schrägfläche (324) vorzugsweise schräg zur Anlagefläche (152) und/oder zu Kontaktflächen (106, 108) der Bauteile (102, 104) ausgerichtet ist und/oder
wobei der Rasthaken (320) mittels der Schrägfläche (324) in den Grundkörper (134) einschiebbar ist, insbesondere durch Bewegung des Verbindungselements (130) in einer parallel zur Anlagefläche (152) und/oder parallel zur Kontaktfläche (106, 108) verlaufenden Querrichtung (326).

17. Verbindungsmittel (100) nach einem der Ansprüche 14 bis 16, **dadurch gekennzeichnet, dass** das Verbindungselement (130) so ausgebildet und/oder angeordnet oder anordenbar ist, dass eine Querrichtung (326) zum Entrasten des Rasthakens (320) einer Schwerkraftrichtung (g) entgegengerichtet ist, wobei der Rasthaken (320) bei einer Belastung des Bauteils (102) in einer parallel zur Schwerkraftrichtung (g) verlaufenden Querrichtung (326) vorzugsweise in einer Rastaufnahme (322) verbleibt.

18. Verbindungsmittel (100) nach einem der Ansprüche 1 bis 17, **dadurch gekennzeichnet, dass** das Verbindungsmittel (100) ein Tablarträger ist.
